(19) Europäisches Patentamt
European Patent Office
Office européen des brevets

(11) EP 1 627 004 B1

(12) # FASCICULE DE BREVET EUROPEEN

(45) Date de publication et mention de la délivrance du brevet:
**22.02.2012 Bulletin 2012/08**

(21) Numéro de dépôt: **04742745.5**

(22) Date de dépôt: **14.05.2004**

(51) Int Cl.:
***C08G 18/80*** *(2006.01)* ***C08G 18/70*** *(2006.01)*
***C09D 175/04*** *(2006.01)* ***B01F 17/00*** *(2006.01)*

(86) Numéro de dépôt international:
**PCT/FR2004/001197**

(87) Numéro de publication internationale:
**WO 2004/103543 (02.12.2004 Gazette 2004/49)**

(54) **COMPOSITIONS A BASE D'ISOCYANATE, LEUR PROCEDE D'UTILISATION, LEUR UTILISATION POUR REALISER DES REVETEMENTS A ADHERENCE DIRECTE ET REVETEMENTS AINSI OBTENUS**

AUF ISOCYANAT BASIERENDE ZUSAMMENSETZUNGEN, VERFAHREN ZU DEREN VERWENDUNG, DEREN VERWENDUNG BEI DER HERSTELLUNG VON DIREKTHAFTENDEN BESCHICHTUNGEN UND SO ERHALTENE BESCHICHTUNGEN

ISOCYANATE-BASED COMPOSITIONS, USE METHOD THEREOF, USE OF SAME IN THE PRODUCTION OF DIRECT-ADHESION COATINGS, AND COATINGS THUS OBTAINED

(84) Etats contractants désignés:
**AT BE BG CH CY CZ DE DK EE ES FI FR GB GR HU IE IT LI LU MC NL PL PT RO SE SI SK TR**

(30) Priorité: **21.05.2003 FR 0306094**
**11.05.2004 FR 0405084**

(43) Date de publication de la demande:
**22.02.2006 Bulletin 2006/08**

(73) Titulaire: **Perstorp France**
**69800 Saint-Priest (FR)**

(72) Inventeurs:
- **BERNARD, Jean-Marie,**
**69440 Saint-Laurent d'Agny (FR)**
- **BARBEAU, Philippe**
**69740 Genas (FR)**

(74) Mandataire: **Colombet, Alain André et al**
**Cabinet Lavoix**
**62, rue de Bonnel**
**69448 Lyon Cedex 03 (FR)**

(56) Documents cités:

| | |
|---|---|
| **WO-A1-01/05861** | **WO-A1-02/22703** |
| **WO-A2-01/74909** | **FR-A1- 2 745 577** |
| **US-A1- 2002 143 101** | **US-B1- 6 528 610** |

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 627 004 B1

## Description

La présente invention a pour objet des composés et des compositions à base d'isocyanates (qui peuvent être partiellement masqués, mais cela n'est pas la mise en oeuvre préférée). Elle vise également leur procédé d'utilisation, leur utilisation pour réaliser des revêtements et revêtements ainsi obtenus. Elle concerne plus particulièrement les compositions (auto)dispersables en phase aqueuse.

Pour mieux comprendre l'invention, il a paru opportun de faire les rappels suivants.

Ainsi, dans certaines de ses mises en oeuvre, la présente invention fait référence à la technique de réticulation double. Il est donc souhaitable d'en rappeler les principes.

La réticulation double est une technique dans laquelle on soumet une composition comportant des doubles liaisons (le plus souvent activées, par exemple groupements acrylates), des fonctions à hydrogène mobile et des fonctions isocyanates, éventuellement masquées, à deux modes de réticulations, à savoir une polymérisation des doubles liaisons et une condensation des isocyanates avec la fonction à hydrogène mobile (alcool, amine, thiol). On en donne ci-après un exemple.

Après préparation d'une composition dite 2K, on l'applique sur le support, puis le revêtement est réticulé grâce à une succession de deux réactions.

1°) Réticulation de la double liaison par exemple UV :

Isocyanate greffé acrylate + polyol greffé acrylate => polyacrylate avec fonctions libres isocyanates et hydroxylées.

Séchage sous lampe UV en présence d'un initiateur de réaction photochimique ; cette réaction est très rapide, et permet d'obtenir un revêtement sec au toucher, c'est-à-dire que les pièces sont manipulables à la sortie de la chaîne, d'où un gain de productivité certain.

2°) Réaction polyuréthane :

La deuxième étape est une réaction classique entre le polyol acrylate et les groupements isocyanates libres, qui donne donc lieu à la formation de liaisons uréthanes. Cette réaction se passe à température ambiante, ou peut être accélérée par étuvage comme dans le cas des polyuréthanes. Cette deuxième réticulation apporte les propriétés finales au revêtement.

Ce système double possède par ailleurs l'avantage d'assurer une réticulation minimale du revêtement, même dans les zones d'ombre qui ne pourraient pas être atteintes par le rayonnement UV, ce qui est le cas de certaines pièces non planes.

Le cas d'un bi-composant acrylate + isocyanate est proche de celui décrit ci-dessus, sauf que l'isocyanate ne comporte pas de groupements acrylate ; le revêtement sera réticulé sous UV grâce aux insaturations présentes sur le polymère polyol, puis l'isocyanate réagira avec les groupements hydroxyles du polyol pour former un polyuréthane ; ce cas n'est pas considéré au sens strict comme un système à réticulation double (parfois désigné par l'expression anglo-saxonne « dual-cure »). Mais il s'en approche !

Dans le cadre de la présente invention, ces systèmes pourront être utilisés en présence d'un émulsifiant décrit ci-après porteur d'un autre système réticulable, en général à base de double liaison.

Dans la présente description, les caractéristiques de granulométrie font souvent référence à des notations du type $d_n$ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n% (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme :

$$I = (d_{90}-d_{10})/d_{50}$$

Bien que ces définitions soient dans les dictionnaires, il peut être utile de rappeler quelques définitions relatives aux dispersions.

«Dispersion» : milieu liquide comportant au moins deux phases dans lequel des particules solides ou liquides (voire gazeuse) d'une phase qualifiée de «discontinue» sont dispersées dans une phase liquide dite «continue».

«Emulsion» correspond bien à son étymologie («emulgare = traire» de même racine I.-E. que «Milch» en allemand) et est une généralisation du concept de lait : milieu liquide constitué de particules (globules, ou gouttelettes)

de liquide dispersées dans une autre phase liquide.

«Suspension» : milieu liquide constitué de particules d'une phase solide dispersées dans une phase liquide.

Ainsi «émulsion» et «suspension» font partie des «dispersions» et en forment des sous-ensembles.

«Emulsifier» et «émulsionner» sont synonymes. Il en va de même avec leurs dérivés respectifs.

En outre, il convient de préciser le concept intuitif d'«auto-émulsionnable».

«Auto-émulsifiable» (= auto-émulsionnable) : se dit d'un produit ou d'une composition capable de former, en présence d'un milieu liquide dans laquelle ladite composition est immiscible, une émulsion par un mécanisme spontané. Dans le mécanisme d'émulsification spontanée, l'énergie nécessaire pour former une émulsion concerne uniquement l'énergie requise pour redistribuer la matière à émulsionner dans le mélange : ainsi il n'y a pas besoin d'énergie extérieure, essentiellement énergie d'agitation, pour créer l'émulsion. Pour plus de détails on peut se référer à l'article de Minou Nabavi et alii : «Dynamics of spontaneous emulsification for fabrication of oil in water emulsions» : [Langmuir, 2000, 16, 9703-9708]. En d'autres termes, l'énergie nécessaire à une agitation assurant une répartition macroscopiquement uniforme de la phase discontinue est amplement suffisante (par exemple agitation manuelle).

Dans leur grande majorité, les isocyanates étaient, jusqu'il y a peu, essentiellement dissous dans des solvants organiques. L'utilisation de solvants organiques est de plus en plus souvent critiquée par les autorités en charge de la sécurité du travail, car ces solvants, ou du moins certains d'être eux, sont réputés toxiques ou chronotoxiques. C'est la raison pour laquelle on essaye de développer de plus en plus des techniques qui ne contiennent que peu de solvant, voire qui soient sans solvant. En particulier, pour pallier les inconvénients afférents aux solvants, on cherche des compositions complexes, parfois désignées sous le terme de système, qui puissent se substituer aux mélanges en milieu solvant.

En particulier, pour diminuer l'utilisation de solvant organique, dont la présence est réputée toxique pour ceux qui le manipulent et néfaste pour l'environnement, l'on a proposé de mettre au point des compositions isocyanates à la fois facilement émulsionnables et facilement utilisables en émulsion dans l'eau. L'eau sert dans ce cas de «véhicule» aux composants de la formulation et permet de réduire, voire de supprimer les solvants organiques nécessaires notamment à l'ajustement de la viscosité.

Pour ce qui est des isocyanates, les plus largement utilisés sont les diisocyanates notamment les alcoylènes diisocyanates (par exemple ceux vendus sous la marque Tolonate®) surtout sous la forme de leurs dérivés oligomériques tels que ceux à motif biuret, ceux à motif urétidinedione, ceux à motif(s) découlant des diverses trimérisations ou susceptibles d'en découler. On peut rappeler les divers motifs ou cycles susceptibles de se former à l'occasion de la trimérisation :

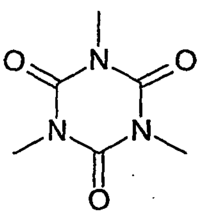

cycle isocyanurique

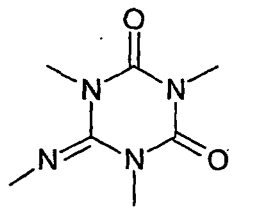

cycle 4,6-dioxo-2-imino-hexahydro-1,3,5-triazine

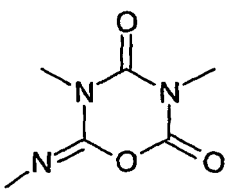

cycle iminooxadiazinedione

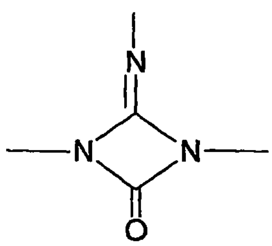

2-imino-4-oxo-1,3-diazétidine

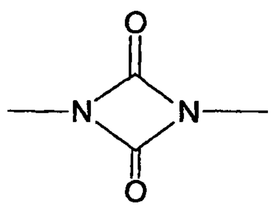

uretidine-dione

Quoique la présente invention puisse être utilisée dans d'autres domaines que celui du revêtement (notamment adhésifs, peintures et des vernis) dans la suite de la description, on utilisera son application dans les peintures et vernis pour mieux expliciter la problématique et servir le cas échéant d'exemple paradigmatique.

Pour mieux comprendre la portée de l'invention notamment dans l'activité des peintures et des vernis, il convient

de faire quelques rappels relatifs aux techniques et aux systèmes utilisés pour réduire ou pour supprimer l'emploi de solvant organique.

Ainsi pour réaliser des films de peintures ou de vernis polyuréthannes, on réalise un mélange comportant d'une part une dispersion, le plus souvent une émulsion, contenant l'isocyanate et d'autre part une dispersion ou une solution de co-réactif di- ou poly-fonctionnel (en fonction porteuse d'hydrogène réactif, voir infra), en général des polyols. Compte tenu de la réactivité de la fonction isocyanate libre, les isocyanates sont le plus souvent masqués. Lorsque cela n'est pas le cas, le plus souvent, l'on met en émulsion les isocyanates libres directement dans la dispersion de co-réactif.

De telles fonctions porteuse d'hydrogène réactif, aussi désignées par fonctions à hydrogène mobile, (notées ci-après $\Psi$-H) présentent un hydrogène qualifié de mobile et sont telles que la réaction de l'équation (1) suivante a lieu, éventuellement suivie de la réaction de l'équation (2) :

$$\text{-L-}\Psi\text{-H + OCN-} \dashrightarrow \text{-L-}\Psi\text{-C(O)-N(H)-} \qquad (1)$$

$$\text{-L-}\Psi\text{-C(O)-N(H)- + OCN-} \rightarrow \text{-L-}\Psi\text{-C(O)-N(C(O)-N(H)-)-} \qquad (2)$$

- où L représente le lien avec le reste de la molécule ;
- où $\Psi$ représente un chalcogène, (avantageusement oxygène ou soufre) ou un atome trivalent d'azote ou de phosphore, voire d'arsenic et même d'antimoine.

Dans le cas où l'hydrogène, en particulier de l'hydroxyle, est acide (pKa au plus égal à 6, le plus souvent à 5, une réaction ultérieure de décarboxylation peut avoir lieu. Ainsi les fonctions carboxyliques peuvent donner quant à elles des acylurées (en effet la séquence réactionnelle la plus courante est la suivante : l'addition de l'isocyanate conduit à l'anhydride d'acide dissymétrique de l'acide carboxylique et de l'acide carbamique correspondant à l'isocyanate ; cet anhydride se décarboxyle pour donner l'amide du dit acide carboxylique et de l'amine correspondant à l'isocyanate ;

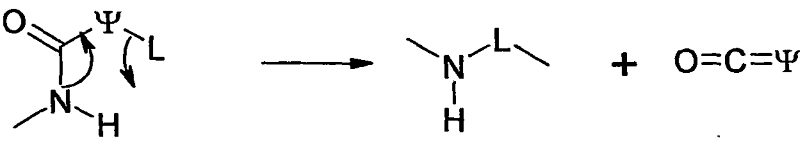

**(3)**

Une seconde fonction isocyanate peut alors réagir sur l'amide (équation 2) pour donner une acylurée lorsque L est carbonyle (-CO-). Cette réaction explique la formation d'urée lors de l'addition d'eau à de l'isocyanate, la réaction 2 donne alors du biuret ; est dans ce cas un chalcogène le plus fréquemment un oxygène et L étant tel que L-$\Psi$-H soit un acide (cf. ci-dessus), le plus souvent L étant carbonyle.

$\Psi$ peut également représenter un atome d'azote porteur d'un hydrogène ou d'un radical hydrocarboné (c'est-à-dire comportant de l'hydrogène et du carbone) d'au plus 15 atomes de carbone mais dans ce cas la réaction 3 n'a pas lieu.

L est avantageusement choisi parmi la liaison simple (-), les groupes carbonyle [-C(=O)-, y compris $NH_2$ -C (=O)], les groupes de type imino (>C=N- et -C(=N-)- [par exemple pour former des amidines, amidoximes (-C(=N-O-H)-$NH_2$) ou une forme conjuguée des amides]).

Ces fonctions sont bien connues de l'homme du métier et parmi ces dernières, on peut citer les fonctions à groupe amino (où $\Psi$ représente > N-), qui, outre les amine et anilines, comprennent les amides [où $\Psi$ est précédé par un groupe carbonyle pour donner -C(=O)-N< avec, comme cas particuliers, les lactames et les urées, les fonctions à groupe hydroxyle [où $\Psi$ représente -O-], qui outre les fonctions alcools, y inclus les phénols, comprennent les fonctions oximes [où $\Psi$ est précédé par un groupe imino pour donner =N-O-] acide oxygéné de pKa au moins égal à 1, avantageusement égal à 2, de préférence à 3, en particulier les fonctions acides carboxyliques [où $\Psi$ est précédé par un groupe carbonyle pour donner-C(=O)-O-] et les fonctions thiols.

Les pigments, les diverses charges et additifs sont le plus souvent présents ou introduits dans la phase aqueuse porteuse du co-réactif (en général polyol) avant l'introduction de l'isocyanate ; mais ils peuvent être introduits après la formation de la double dispersion.

L'isocyanate peut être libre ou masqué et dans ce dernier cas totalement ou partiellement. La présente invention vise surtout le cas où une partie, au moins, des fonctions isocyanates est non masquée.

Un but annexe de la présente invention est de faciliter la dispersion des éventuels pigments et charges, et notamment du bioxyde de titane (rutile ou anatase).

Une fois la dispersion finale complète, cette dernière est alors étalée sur un support sous forme d'un film à l'aide des techniques classiques de mise en oeuvre des revêtements industriels, notamment peintures et vernis.

Lorsque la préparation contient des isocyanates masqués, l'ensemble film + support est porté à une température

suffisante pour assurer la transformation du film [libération des fonctions isocyanates et/ou la condensation de celles-ci avec des composés présentant des fonctions à hydrogène réactif bien connues de l'homme du métier (fonctions amine, sulfhydryle, hydroxyle, autrement dit fonction alcool, voire carboxylique ...)], en général fonction hydroxyles, du co-réactif. Il convient toutefois de rappeler que les produits masqués ou bloqués présentent un prix de revient significativement plus élevé que celui des produits non masqués.

Ainsi une des solutions les plus souvent proposées, réside dans l'utilisation de dispersions, notamment d'émulsions, dans l'eau. En raison de la réactivité de l'eau avec les isocyanates, cette solution est surtout utilisée pour les isocyanates masqués.

Bien entendu, ces problèmes doivent être résolus en respectant les contraintes intrinsèques aux revêtements.

Par exemple, pour ne pas tomber de Charybde en Scylla, un écueil majeur est à éviter, à savoir détériorer une ou plusieurs des qualités essentielles des revêtements [maintenir le caractère lisse et éviter le défaut qualifié de "peau d'orange", la dureté, la résistance aux solvants, l'adhérence sur tout support, etc.].

En particulier, il faut craindre une mauvaise adhérence du revêtement sur son support. En effet beaucoup de tensioactifs sont réputés altérer la solidité du lien entre le revêtement et son support et sont connus et utilisés pour défavoriser l'accrochage entre un polymère et un support. De tels phénomènes sont décrits notamment dans DE-OS 3.108.537.

US 6528610 décrit par ailleurs une composition comprenant une composition d'isocyanates et un agent tensioactif, cependant les compositions décrites présentent des problèmes de volume de mousse généré lors de la mise en émulsion et d'adhérence des peintures et vernis réalisés.

Usuellement lorsque l'on utilise des isocyanates non ou incomplètement masqués, sous la forme d'émulsion aqueuse, la durée pendant laquelle ils sont utilisables reste inférieure à quelques heures, en général une ou deux heures. Il est important que l'emploi de nouveaux agents émulsifiants, ne se traduise par une durée de vie significativement moindre au contact d'une phase aqueuse.

Aussi est-il important de ne pas rencontrer de difficulté lors de la mise en dispersion, notamment en émulsion des isocyanates.

Pour répondre aux contraintes ci dessus, Il a été proposé de greffer sur un polyisocyanate une chaîne polyoxyde d'éthylène commencée par un alcool, et ce, en faisant réagir une fonction isocyanate sur une fonction alcoolique terminale de ladite chaîne. Les composés ainsi obtenus sont assez faciles à émulsionner mais la taille des chaînes polyoxyde d'éthylène à mettre en jeu et surtout le nombre de motifs oxyde d éthylène reste très élevé et ipso facto diminue considérablement la teneur en fonction isocyanate par unité de masse, d'une part par dilution et d'autre part par consommation des fonctions isocyanates par les fonctions alcooliques.

Les proportions d'oxyde d'éthylène nécessaires (souvent de l'ordre de 15 à 20% en masse) et utilisées altèrent très significativement les propriétés mécaniques et physiques tant de compositions initiales et intermédiaires que du revêtement final quand de telles compositions sont utilisées pour l'obtention d'un revêtement (notamment adhésifs, mais surtout peinture et vernis). Ils constituent certes, des agents d'émulsification efficaces. Bien qu'ils soient souvent présentés comme tels, ils ne sont pas, à proprement parler autoémulsifiants, car ils nécessitent une agitation assez vigoureuse.

C'est pourquoi, il est souhaitable que la présente invention fournisse des composés et des compositions présentant des propriétés au moins équivalentes aux composés ci-dessus et donc qui permettent par mélange dans l'eau, ou plus précisément dans une phase aqueuse, d'obtenir une émulsion stable ; il est en outre souhaitable que la dispersion se fasse sans qu'il soit pour cela nécessaire d'utiliser des techniques et/ou des installations spécifiques.

Une autre contrainte que doit respecter la présente invention est de fournir des composés et des compositions du type précédent qui ne perturbent pas les opérations de revêtement, ni n'en altèrent les qualités.

Un autre but de la présente invention est de fournir des compositions du type précédent dont la teneur en solvant soit aussi faible que possible et, pour le cas des dérivés d'hexaméthylène diisocyanate, inférieur à 1/5, avantageusement à 1/10, en masse de ladite composition. Bien sûr il est préférable qu'il y en ait le moins possible, et même pas du tout.

L'utilisation de certains composés anioniques à enchaînement polyoxyde d'éthylène, comme cela est préconisé dans la demande française publiée sous le N°2.745.577 en date du 29 février 1996 et dans la demande PCT publiée sous le N°WO 97/31960, a constitué un progrès important et a permis de respecter, au moins qualitativement, ces contraintes.

Toutefois il s'agit de molécules qui restent lourdes, notamment en raison de la taille importante du groupe lipophile. Il s'ensuit que les quantités nécessaires pour garantir une auto-émulsification restent relativement élevées.

C'est pourquoi, un des buts de la présente invention est de fournir une nouvelle catégorie d'émulsifiants qui, lorsqu'ils sont utilisés avec des isocyanates, notamment des porteurs de fonctions isocyanates libres, c'est-à-dire de formule -N=C=O, soient susceptibles de donner aisément une dispersion et notamment une émulsion aqueuse.

Plus précisément, un autre but de la présente invention est de fournir une nouvelle catégorie d'émulsifiant du type précédent qui soit susceptible de donner aisément une dispersion et notamment une émulsion aqueuse, à une

concentration massique au plus égale à 0,1 fois la masse de la composition isocyanate utilisée.

Un autre but de la présente invention est de fournir une nouvelle catégorie d'émulsifiant qui ne facilite pas l'attaque des fonctions isocyanates libres par l'eau lors de la mise en émulsion (la phase continue étant aqueuse) et après à celle-ci.

Un autre but de la présente invention est de trouver un émulsifiant qui procure un lien solide entre le revêtement et son support et favorise l'accrochage entre un liant et un support.

Un autre but de la présente invention est de fournir un agent d'émulsification qui permette d'obtenir des dispersions à teneur élevée en fonction isocyanate (masse de la fonction isocyanate = 42), notamment au moins égale à 5% de la masse totale de la dispersion.

Un autre but de la présente invention est de fournir une composition comportant à la fois un isocyanate et un agent d'émulsification qui par une simple opération d'homogénéisation forme une dispersion physiquement stable.

A ce stade de la description, il convient de revenir sur la problématique de l'adhérence.

La présente invention a également pour objet une technique d'amélioration de l'adhésion, puis de l'adhérence, sur un support en matière minérale. Elle a plus particulièrement pour objet une technique qui permet de simplifier et/ou notamment d'éviter certaines étapes et/ou certaines couches préparatoires à la couche finale de revêtement. Cette technique sera désignée ci-après par «revêtement à adhérence directe». Dans la littérature anglo-saxonne et germanique elle est désignée par le sigle «DTM», acronyme de «direct to metal».

Il convient dans un premier temps de revenir à la problématique de l'adhésion et de l'adhérence sur des supports, ou des substrats, de matière minérale.

Sous la désignation matière minérale, il convient de comprendre toute matière ne comportant pas comme élément structurel majeur une matière organique.

Plus particulièrement les problèmes, et la solution, qui sont exposés ci-après visent surtout les matières ayant subi un état fondu avant leur mise en forme. Parmi ces matières ayant passé par un état fondu avant une mise en forme, il convient de citer les matières de nature vitreuse et, notamment, le verre, et d'autre part les composé minéraux de nature cristalline, tel que, et notamment, les métaux à l'état métallique.

Dans un premier temps, les termes d'adhérence et d'adhésion nécessitent une définition.

L'adhésion (racine correspond au participe passé et donc à un fait ponctuel en général accompli) correspond au passage de l'état non adhérent à l'état adhérent, dans le cas exposé ici la composition fluide, précurseur du revêtement, entre en contact avec la surface du substrat, puis forme un réseau par liaison physique ou chimique (polycondensation) en se liant fortement à la surface du substrat ; l'adhérence (racine correspond au participe présent et donc à un phénomène qui perdure) et vise la propriété de la couche de revêtement sur le substrat et, notamment, sa non-capacité à être détachée du substrat.

L'adhérence d'un revêtement sur un support dépend, d'une part, du revêtement, en général organique, proprement dit et, d'autre part, de la surface du support et, plus particulièrement, de la préparation de celle-ci en vue de recevoir le revêtement.

Cette problématique de l'adhérence du revêtement sur le support est d'autant plus difficile à exposer qu'il n'y a pas toujours de frontière sémantique franche entre les diverses opérations qui conduisent au revêtement (préparation d'une surface, applications de précouches, de primaires, et des couches ultimes) et les couches qui y correspondent.

Le primaire est, dans certaines applications, désigné par «enduit» ou «apprêt».

Malgré son ancienneté, il convient de citer à titre d'ouvrage de référence au niveau des concepts, le manuel rédigé par Pierre Grandou et Paul Pastour (les deux tomes), à savoir : P. Grandou et P. Pastour : PEINTURES ET VERNIS :

- I. les constituants (1966 isbn2 7056 5520-4 et 5884x)
- II techniques et industries (1969 isbn2 7056 59359)

et publié aux éditions Hermann.

Parmi les problèmes difficiles à traiter, il convient de signaler dans un premier temps, un problème de compatibilité entre des surfaces minérales et des couches organiques. C'est pourquoi actuellement dans l'état de la technique, on utilise des couches de transition permettant progressivement de passer d'un système entièrement minéral à un système entièrement organique.

Un autre problème à résoudre, notamment dans le cas des métaux, vient du fait que les métaux développent des couches de corrosion le plus souvent d'oxydes qui ne sont pas toujours très adhérentes au métal dont elles sont issues. Dans ce cas, si le revêtement repose sur les couches oxydées revêtant elles-mêmes le métal, l'adhérence du revêtement au métal ne pourra être supérieure à celle de l'adhérence des oxydes au métal.

Bien entendu, l'adhérence d'un revêtement sur un métal dépend de la surface spécifique du métal recouvert ainsi que de la forme de la surface. Ainsi, des surfaces présentant de petits alvéoles peuvent faciliter l'adhérence de la couche au substrat dès lors que l'appareil (ou le liant) est capable de pénétrer lesdits alvéoles.

Un autre problème majeur de l'adhérence d'un revêtement sur un substrat métallique réside dans l'oxydation, une fois le revêtement appliqué, du substrat. En effet, la structure cristallographique du métal oxydé est en général est très différente de la structure du métal initial impliquant ainsi un changement de propriétés physiques, de volume et de densité, changement de propriétés physiques qui provoque des pertes d'adhérence très significatives au cours du vieillissement de l'ensemble substrat/couche de revêtement.

C'est la raison pour laquelle il convient d'éviter tout changement dans l'état d'oxydation du métal une fois la couche de revêtement appliquée. Pour ce faire, deux mesures sont couramment prises, d'une part, créer une couche imperméable isolant le métal des agents d'oxydation, qu'ils soient liquides, gazeux, voire solides. Une autre mesure est de traiter le métal de manière à en inhiber la corrosion.

Enfin, il convient de signaler que le revêtement du verre est réputé particulièrement difficile en raison du caractère particulièrement plan et lisse des surfaces de verre usuelles et des surfaces qui lui ressemblent, comme les céramiques grésées.

Pour mieux cerner le problème, il convient maintenant de décrire, dans l'ordre dans lequel elles doivent être mises en oeuvre, les principales étapes du traitement de surface et du revêtement, sachant que dans de nombreux cas elles ne sont pas toutes obligatoires.

La première étape du traitement de surface consiste à éliminer les couches de faible cohésion qui pourraient gêner l'adhésion puis l'adhérence de la couche de revêtement (à titre de paradigmes, l'on peut se référer à l'ouvrage P. Grandou et P. Pastour, PEINTURES ET VERNIS II, techniques et industries pour le fer, page 46 et suivantes, sous le sous-titre préparation des surfaces, pour l'aluminium. Il convient de se reporter pages 64 à 67). Ces couches de faible cohésion sont, d'une part, les graisses et, d'autre part, certains des oxydes qui se forment à la surface du substrat à revêtir. Les graisses sont aisément éliminées par des techniques dites de dégraissage bien connues de l'homme du métier comme, par exemple, l'usage de solvants des graisses.

Les oxydes, et même les graisses, peuvent également être éliminés par décapage mécanique ou chimique. Ces techniques de décapage sont bien connues de l'homme du métier qui peut faire appel à des techniques du type abrasion mais aussi à des techniques d'attaque des oxydes de surface au moyen d'un agent chimique susceptible de dissoudre les oxydes et les concrétions apparues à la surface du métal. Cette attaque chimique peut être choisie avec des agents qui facilitent la restauration d'une couche oxydée de métal de bonne qualité. Elle peut également dans certains cas augmenter la surface spécifique du substrat. A ce stade il est possible de recouvrir le métal d'une couche protectrice d'un autre métal, le plus souvent de zinc, (voir par exemple P. Grandou et P. Pastour, techniques et industries, page 34, dernier paragraphe à page 35, antépénultième paragraphe).

Dans un deuxième temps, les produits d'oxydation de la surface sont soumis à une opération de conversion (pour l'aluminium voir P. Grandou et P. Pastour, techniques et industries, pages 67 à 69). Cette opération de conversion qui peut avoir lieu soit sur les oxydes obtenus après décapage, soit directement sur les oxydes qui se sont développés naturellement en surface du substrat vise à former une couche séparant le métal du milieu extérieur réalisé à base de dérivés des oxydes issus du métal. Cette couche est, d'une part, aussi adhérente que possible au métal et, d'autre part, être aussi imperméable que possible et évite le développement de la corrosion sur la surface métallique. Les meilleurs agents de conversion sont les dérivés du chrome et, notamment, les chromates. Toutefois, cette solution est très fortement critiquée en raison, d'une part, des problèmes environnementaux liés à l'émission de dérivés du chrome sur la nature et, d'autre part, en raison de son coût.

D'autres systèmes donnent également de bons résultats et, notamment, les phosphates et les dérivés de l'acide orthophosphorique, voire les dérivés d'acide phosphorique supérieur (par exemple, l'acide pyrophosphorique).

Pour remplacer des dérivés du chrome, on a proposé les terres rares qui donnent des résultats relativement satisfaisants. On a également proposé d'utiliser des dérivés de la silice et, notamment, les silanes et siloxanes ; il convient aussi de citer l'anodisation.

En ce qui concerne l'utilisation de terres, on peut par exemple citer l'article de J. O. Stoffer et al. présenté au "International Waterbome, High-Solids, and Powder Coatings Symposium" du 10 au 12 février 1999. En ce qui concerne la protection contre la corrosion des véhicules automobiles, on peut faire appel à l'article de Horst Gehmecker intitulé "Automotive Corrosion Protection Practices in Europ" publié en 1997 par la société "Society of Automotive Engineers, Inc.", pages 1241 à 1248. En ce qui concerne la conversion utilisant des silanes, on peut se référer, d'une part, à l'article "Pretractamamiento Basado en Silanos" par Terrie Child y Chris Miller publié dans la revue "Pinturas y Acabados", pages 18 à 20, et l'article "Application of Silane Technology to Prevent Corrosion of Metals and Improve Paint Adhesion". Sur les techniques de conversion l'on peut s'adresser, notamment en ce qui concerne le phosphate sur supports métalliques, à la revue technique établie par Yu. I. Kuznetsof dans "Protection of Metals", Vol. 37, No. 2, 2001, pages 101-107. Egalement, on peut se référer aux deux articles précédents. La couche ainsi formée s'appelle couche de conversion.

Sur cette couche de conversion l'on applique différentes couches de revêtement. Le premier des films appliqués est désigné par un film primaire, ou elliptiquement «primaire», qui contient en général, outre le liant, des composés anticorrosion pour le cas où il y aurait une rupture mécanique de la couche ou du film de revêtement.

Parmi ces éléments anti-corrosion on peut citer le phosphate de zinc, l'oxyde ferreux et différents types de

pigments dispersés dans le liant. On peut notamment citer, bien qu'il soit peu utilisé en raison de sa toxicité, le minium mais aussi l'oxyde de baryum et des déshydratants. L'efficacité des pigments dépend de leur facteur de forme ainsi les pigments phylliteux (c'est-à-dire en forme de feuille comme les micas) donnent de bons résultats.

Dans certains cas les primaires, et notamment ceux désignés par l'expression anglo-saxonne de «wash primer» peuvent contenir comme charge des composés qui, utilisés seuls sont connus pour assurer la conversion (par exemple chromate double de zinc et de potassium, chromate de plomb).

Le primaire assure la progressivité de la couche minérale vers la couche organique. En d'autres termes, il assure une sorte de gradient de matières organiques depuis la couche substrat toute minérale jusqu'aux revêtements en grande majorité purement organiques. Les liants traditionnels sont à base, par exemple :

- polyuréthannes ;
- de résines époxy ;
- de résines polyester ;
- de résines acryliques ;
- de dérivés alcoxyamine.

Il existe plusieurs manières d'appliquer les couches de primaires. L'une des plus courantes est la technique dite de cataphorèse. A la suite du primaire on ajoute en général la ou les couche(s) de finition. Une couche de base qui emporte la couleur et qui comporte les pigments et les liants, lesquels sont parfois réticulés au moyen d'isocyanates.

Au-dessus de la couche de base on ajoute une couche de vernis (couche transparente qui a pour but de protéger la couche de base. Les couches de base et de vernis peuvent ne constituer qu'une seule couche ; cette couche est appelée couche de finition et est parfois désignée par l'expression anglo-saxonne de "topcoat".

Les compositions isocyanates selon la présente invention peuvent se retrouver soit dans la couche de primaire, soit dans la couche de base, soit dans le vernis, soit dans une ou plusieurs des couches précitées.

On peut également envisager l'utilisation de compositions telles que définies ultérieurement, et la fourniture d'une composition isocyanate qui permette une meilleure adhérence sur des substrats non traités et, en particulier, sur des substrats incomplètement traités.

Un but de la présente invention autre que ceux qui ont été détaillés plus haut est de fournir une composition isocyanate qui puisse être utilisée dans une couche de base sans qu'il y ait de primaire.

Un autre but de la présente invention est de fournir une composition isocyanate qui puisse être utilisée dans une couche de base ou dans une couche de finition (topcoat) sans qu'il y ait ni primaire ni couche de conversion.

Un autre but de la présente invention est de fournir une composition isocyanate qui soit utilisable dans un primaire mais sans qu'il y ait de couche de conversion.

Un autre but de la présente invention est de fournir une composition isocyanate du ou des types précédents qui soit utilisable sous la forme d'émulsion dans une phase aqueuse.

Un autre but de la présente invention est de fournir une composition isocyanate du ou des types précédents, qui présente une bonne tenue au test de résistance en milieu humide.

Ces buts, et d'autres qui apparaîtront par la suite, sont atteints au moyen de l'utilisation d'un agent émulsifiant comportant au moins un composé parmi ceux présentant un (dans le sens d'au moins un) groupement fonctionnel anionique (parfois désigné ultérieurement par «fonction anionique») et une, et avantageusement une seule, chaîne polyoxygénée dont le nombre de carbone est au plus égal à 25, avantageusement à 23, de préférence à 20. Un tel composé, ou mélange de composés s'il y en a plusieurs à répondre à la définition, sera parfois désigné ultérieurement par le sigle « CGFA ».

Bien évidemment ledit agent émulsufiant est utilisé conjointement (le plus souvent dissous dans la phase isocyanate, surtout lorsqu'elle est liquide, lorsqu'elle n'est pas en présence d'eau, notamment pour le stockage) avec une phase isocyananate, souvent designée dans la suite de la description par l'expression « sous-composition vecteur de fonctions isocyanate », ou « sous-composition isocyanate ». Les fonctions isocyanates de cette phase isocyante peuvent être libre (c'est-à-dire de formule -NCO) ou masquée. Toutefois elle sont avantageusement au moins partiellement libre (avantageusement au moins 1/3 d'entre elles, de préférence au moins 50%, plus préférentiellement au moins 2/3 sont libres) ou totalement libre (au moins 95% et même 99 et plus d'entre elles sont libres).

Le nombre minimal de carbone caténaire (c'est-à-dire, bien sûr, appartenant à ladite chaîne polyoxygénée) est de 4, avantageusement de 6, de préférence de 8.

La neutralité électrique dudit composé est assurée par des protons et/ou des co-cations minéraux ou de préférence organiques.

Bien que celui des co-cations ne soit certes pas négligeable, le rôle essentiel est tenu par la partie anionique du composé. Cela apparaît implicitement dans le dessin de la formule (II) où le co-cation n'est pas figuré. Pour pallier le problème lié à l'énorme variabilité des masses cationiques et ainsi pour mieux rendre compte de l'invention, dans la suite de la description, on ne tiendra compte pour les valeurs massiques (telles que pourcentages et rapports) que de

la masse de l'anion protoné dudit composé. Ainsi pour les calculs on ramènera toutes les valeurs massiques à la forme acide dudit composé (la plus acide en cas de multiples charges anioniques).

Ledit composé ne comporte avantageusement pas plus de trois groupements fonctionnels anioniques, de préférence au plus deux, et, pour des raisons de facilité de synthèse, le plus couramment un.

Le groupement fonctionnel anionique est avantageusement choisi parmi les groupements fonctionnels anioniques oxygénés. Par groupement fonctionnel anionique oxygéné l'on entend un groupement comportant au moins un oxygène, lequel (au moins dans une forme mésomère) est avantageusement porteur d'une charge négative.

Le groupement fonctionnel anionique comporte avantageusement un des atomes des colonnes VB (colonne du phosphore) et VIB (colonne du soufre) d'une période au moins égale à la troisième et au plus égale à la cinquième. Cet atome peut être aussi un carbone mais ce n'est pas une mise en oeuvre de l'invention préférée.

A titre d'enseignement par l'exemple, on peut citer comme groupement fonctionnel anionique ceux à fonctionnalité phosphate [c'est-à-dire dans la formule (I) ci-après : E = P ; X et éventuellement X' étant oxygène et m=1 et p+q =2], phosphonate [c'est-à-dire le cas où X ou éventuellement X' étant une liaison simple ; m = 1 et p + q = 2], phosphite (m = 0 ; X et X' étant oxygène) ; phosphinate (c'est-à-dire le cas où q est 1, X et X' étant une liaison simple et m = 1 et p + q =2).

Ainsi que cela a été prévu ci-dessus un groupement fonctionnel anionique peut être relié à d'autres. Ainsi dans la formule (I) ci-après, X' peut être oxygène et R11 fournir un lien avec un autre groupement fonctionnel anionique. Lorsque m est égal à 1, que la somme p + q est égale à 2 et que les deux groupements fonctionnels anioniques sont à fonctionnalité phosphate l'on obtient un dérivé pyrophosphate. Comme cela est exposé plus loin, de tels composés peuvent se former in situ à partir d'esterphosphate en en présence d'un déshydratant tel que les fonctions isocyanates.

Si X' est une simple liaison et si R11 est un maillon carboné divalent, on peut obtenir un diphosphonate si ledit maillon est relié directement à un phosphore V.

La classification périodique des éléments utilisée dans la présente demande est celle du supplément au Bulletin de la Société Chimique de France, janvier 1966, n° 1. L'acide associé (la première acidité lorsque le groupement fonctionnel anionique est deux fois anionique [c'est-à-dire que p est égal 2]) du groupement fonctionnel anionique présente avantageusement une acidité de pKa au plus égal à 5 de préférence à 3.

Lorsque ladite chaîne est reliée audit groupement fonctionnel anionique par l'intermédiaire d'un atome des colonnes VB (colonne de l'azote) et VIB (colonne de l'oxygène) d'une période au moins égale à la seconde et au plus égale à la cinquième, et notamment d'un oxygène ou d'un azote, cet atome sera réputé appartenir audit groupement fonctionnel anionique et non à ladite chaîne. Dans les autres cas et notamment dans le cas du carbone, l'atome sera réputé appartenir à ladite chaîne.

Les groupements fonctionnels anioniques répondent avantageusement à la formule (I) suivante :

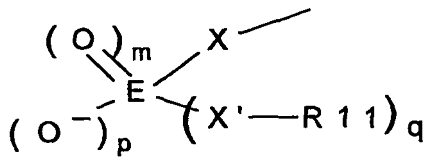

- où E est un des atomes des colonnes VB (colonne du phosphore) et VIB (colonne du soufre) d'une période au moins égale à la troisième et au plus égale à la cinquième, voir un atome de carbone ;
- où X représente une liaison simple, un oxygène, voire un azote, avantageusement substitué ; lequel substituant est avantageusement un radical hydrocarboné, de préférence aryle ou alcoyle, voire acyle ; et porte la liaison ouverte pour rattacher ledit groupe anionique au reste de la molécule ;
- où X' est choisi parmi une liaison simple ou un métalloïde, et notamment et avantageusement un oxygène ; voire un azote, avantageusement substitué ; lequel substituant est avantageusement un radical hydrocarboné, de préférence aryle ou alcoyle, voire acyle ;
- où R11 représente un hydrogène ; une autre chaîne polyoxygénée identique ou différente de celle qui sera attaché à X ; un groupe hydrocarboné (avantageusement d'au plus 5, de préférence d'au plus 3 atomes de carbone), éventuellement porteur d'au plus un autre groupement fonctionnel anionique identique ou différent ou une liaison simple assurant une liaison avec un autre groupement fonctionnel anionique identique ou différent ;
- où q représente zéro ou 1 ;
- où p représente un entier entre 1 et 2 (intervalles fermés c'est-à-dire comprenant les bornes) ;
- où m représente zéro ou un entier entre 1 et 2 (intervalles fermés c'est-à-dire comprenant les bornes) ;

avec la condition que :

- p + q + 2m + 1 estégaleà6ou4

et que :

- lorsque E est un chalcogène (colonne VIB), q est égal à zéro et la somme lorsque E est un élément de la colonne VB (colonne du phosphore), la somme p + q est égale à deux et la somme p + q + 2m + 1 est égale à 5 ou 3, avantageusement à 5.

Il est à mentionner que, dans la présente demande, le cas où «q» est égal un, où «p» est égal à un, où X' est un oxygène et où R11 est égal à H, est considéré comme le même que celui où «p» est égal à 2 et «q» est égal à zéro. La seule différence réside dans l'état de neutralisation et elle n'est que possible puisque le co-cation n'est pas précisé. Pour les calculs exposés plus loin dans la description, on considérera dans le cas où R11 est H, que «q» est zéro et que «p» est égal à deux.

Avantageusement, selon la présente invention, ledit composé présentant un groupement fonctionnel anionique présente la formule (II) suivante :

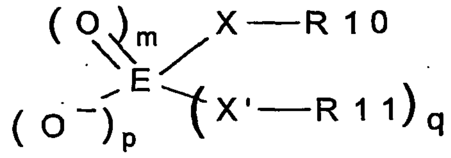

- où R10 représente ladite chaîne polyoxygénée (ce dernier terme signifie que ladite chaîne comporte au moins deux, avantageusement trois atomes d'oxygène).

Avantageusement, le nombre de carbones de ladite chaîne est relié au nombre d'oxygènes et éventuellement au nombre d'azotes (s'il y en a, mais le plus souvent il n'y a pas d'azote dans ladite chaîne polyoxygénée) par la relation suivante :

$$nb_C \leq a.(nb_O+nb_N)+4,$$

- avec $nb_C$ représentant le nombre d'atomes de carbone de ladite chaîne ;
- avec $nb_N$ représentant le nombre d'atomes d'azote de ladite chaîne ;
- avec $nb_O$ représentant le nombre d'atomes d'oxygène de ladite chaîne.

Le facteur «a» est au plus égal à 3, avantageusement inférieur à 3, de préférence à 2,5.

En ce qui concerne la limite inférieure du nombre de carbones de la chaîne polyoxygénée, il est souhaitable que :

$$nb_C \geq b(nb_O+nb_N)+1,$$

- avec le facteur «b» au moins égal à 1, avantageusement à 1,5, de préférence à 1,7.

Les atomes d'oxygène dénombrés par $nb_O$, sont les atomes caténaires (c'est-à-dire appartenant à ladite chaîne) appartenant à des fonctions carbonyle(s), éther(s) et ester(s) (lorsque le groupe fonctionnel ester comporte des fonctions carbonyles celles-ci sont comptées avec les fonctions carbonyles spécifiées auparavant), voire, lorsque E est différent de carbone, hydroxyle, notamment d'un acide de pKa supérieur à 3 (un chiffre significatif), avantageusement carboxylique.

Les atomes d'azote sont les atomes caténaires appartenant à des fonctions amines (avantageusement tertiaire), et/ou amide (avantageusement peralcoylé).

Les atomes de carbone sont les atomes caténaires de tout type.

Ladite chaîne comporte avantageusement au moins un fragment d'au moins un motif oxyde(s) d'alcène (ou alcényloxyles), avantageusement d'au moins deux, de préférence d'au moins trois.

Le ou les fragments d'(oligo-)oxyde(s) d'alcène de ladite chaîne comportent au total, au moins 2, avantageusement au moins 3, de préférence au moins 4 motifs alcényloxyles (

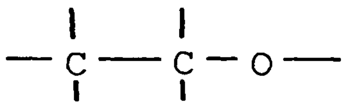

).

Les fragments d'(oligo-)oxyde(s) d'alcène de ladite chaîne comportent avantageusement au plus 8, de préférence au plus 7 motifs alcényloxyles (

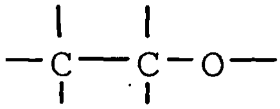

)

Ces motifs alcényloxyles sont avantageusement choisis parmi les propylènoxyles [$-CH_2-CH(CH_3)-O-$] (on peut noter que dans le cas où les alcényles des alcényloxyles ne sont pas palindromes, les enchaînements sont indifféremment tête-à-tête, ou tête-à-queue ou queue-à-queue) et les éthylènyloxyles [$-CH_2-CH_2-O-$] ; il est préférable que ces derniers soient en majorité.

Ainsi que cela sera détaillé par la suite et comme cela est fréquent, lorsque l'agent émulsifiant comporte plusieurs composé de formule (II), les valeurs des «nb», des «a» et «b», des «p», des «q», voire des «m» et comme on le verra ultérieurement des «n» peuvent être fractionnaires. Cela peut notamment refléter le fait que ladite chaîne contienne un enchaînement statistique d'oxyde(s) d'alcène(s). Dans ce cas la formule moyenne est en nombre (nombre total de chaque type d'atomes, ou de motif, divisé par le nombre de chaînes). Les pondérations de chaque molécule peuvent être mesurées par chromatographie liquide haute performance, complété le cas échéant par de la RMN du proton et lorsque cela est possible de l'atome E, notamment du phosphore. On peut également faire appel à la technique dite MALDITOF (acronyme de l'anglo-saxon «Matrix Assisted Laser Desorbtion Ionisation Time Of Flight»).

Il convient toutefois de noter que lorsque les molécules de formule (II) contiennent dans leur très grande majorité (au moins 90% en masse) le même nombre de groupement anionique, l'acidimétrie donne des résultats approchés très acceptables, et ce, surtout quand E est un atome de la colonne VB, notamment phosphore.

Ainsi que cela a été mentionné précédemment, un but de la présente invention est de procurer un agent émulsifiant comportant au moins un composé présentant un groupement fonctionnel anionique qui soit capable de donner avec les isocyanates une composition auto-émulsifiable, et ce même avec de faibles teneurs en composé(s) émulsifiant(s) selon l'invention.

Ainsi est-il souhaitable que le seuil à partir duquel la propriété apparaît soit aussi bas que possible. Il est souhaitable que ce seuil corresponde à une teneur massique en composé(s) selon l'invention (comme cela a déjà été mentionné, sans tenir compte du co-cation correspondant à la base utilisée pour la neutralisation) par rapport à la composition obtenue (y compris le co-cation) au plus égale à 10%, avantageusement à 6%, et même à 5%.

Lorsqu'elle s'applique aux revêtements à adhérence directe, l'invention est particulièrement utile pour recouvrir les surfaces de verre, y compris grésées, et les surfaces issues des métaux et alliages qui seront détaillés ci-après.

Lorsqu'elle s'applique aux revêtements à adhérence directe, la composition selon la présente invention peut être utilise dans les peinture non aqueuse (en général à l'état dissous dans un solvant) comme dans les peinture aqueuse.

Toutefois c'est dans l'utilisation sous forme d'émulsion que l'invention est la plus intéressante.

Comme substrat, Il convient tout d'abord de citer les alliages ferreux, y compris le fer, les différentes nuances d'acier et les alliages entre le fer d'une part, et un ou plusieurs métaux ou métalloïdes choisis parmi le nickel, le cobalt, le chrome, le manganèse, le molybdène, le vanadium et le tungstène, le carbone, voire l'azote (nitruration).

Ces alliages ferreux peuvent être recouverts d'une couche de cément (fer carburé) ou de zinc selon toutes les techniques connues de l'homme du métier.

La présente invention peut également être utilisée sur des substrats à base d'aluminium ou d'alliages d'aluminium, c'est-à-dire des alliages comportant au moins 30% d'aluminium, de préférence au moins 50% d'aluminium. Ces alliages, notamment, peuvent être formés avec un ou plusieurs des métaux ci-après : le cuivre, l'étain, le zinc et, le cas échéant, de petites proportions d'arsenic ou d'antimoine.

On peut également utiliser l'invention sur des alliages non ferreux à base (c'est-à-dire comportant au moins 30%, avantageusement au moins 50%) de cuivre ou de plomb. Elle peut également être utilisée sur ces métaux purs.

La présente invention peut être utilisé directement, avec ou sans primaire, avec ou sans couche de conversion sur les substrats définis ci-dessus, mais il est préférable d'éliminer préalablement les couches de faible cohésion.

Selon une mise en oeuvre particulièrement intéressante de la présente invention, la composition de liant obtenue à partir des compositions selon la présente invention comporte au moins 1/4, avantageusement 1/3 de la masse

du liant, de matière minérale de forme aciculaire et/ou phylliteuse et dont les facteurs forme sont élevé. Il apparaît en effet que les compositions selon à présente invention sont particulièrement bien adaptée à de telles formes.

Un autre but de la présente invention est de procurer un composé, ou un mélange de composés, selon l'invention qui, mononeutralisé, soi(en)t amphiphile(s), c'est-à-dire qui présente(nt) une double solubilité : d'une part en phase aqueuse et d'autre part en phase organique, ici isocyanate.

Un autre but de la présente invention est de procurer un composé, ou un mélange de composés amphiphile (s) dont la solubilité en phase organique soit au moins égale à 5% massique (comme déjà précisé compte non tenu du co-cation).

Un autre but de la présente invention est de procurer un composé, ou un mélange de composés amphiphile (s) dont la solubilité en phase aqueuse soit avantageusement au moins égale à 5% massique (comme déjà précisé compte non tenu du co-cation).

Ces buts, et d'autres qui apparaîtront par la suite, sont atteints au moyen de l'utilisation de composé(s) émulsifiant présentant un groupement fonctionnel anionique et une chaîne polyoxygénée dont le nombre de carbone est au plus égal à 25, avantageusement à 20, répondant à la formule (II) ci-après :

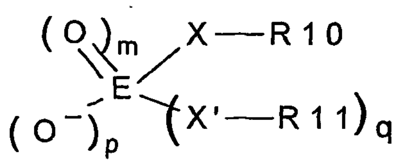

formule II

- où E, X, X', R11, p, q, m ont les mêmes valeurs que précédemment.
- où R10 représente une chaîne polyoxygénée comportant au moins deux motifs alcényloxyles et au plus huit motifs alcényloxyles, les dits motifs alcényloxyles étant choisis parmi les motifs propylènoxyles [$-CH_2-CH(CH_3)-O-$] et les motifs éthylènyloxyles [$-CH_2-CH_2-O-$], ces derniers motifs étant avantageusement en nombre au moins égal à celui des propylènoxyles :
- et avec la condition que le nombre de carbone de ladite chaîne R10 soit relié au nombre d'oxygène et éventuellement au nombre d'azote (s'il y en a, mais le plus souvent il n'y a pas d'azote dans ladite chaîne polyoxygénée) par la relation suivante :

$$nb_C \leq a.(nb_O+nb_N)+4 \;;$$

  - ■ avec $nb_C$ représentant le nombre d'atomes de carbone de ladite chaîne ;
  - ■ avec $nb_N$ représentant le nombre d'atomes d'azote de ladite chaîne ;
  - ■ avec $nb_O$ représentant le nombre d'atomes d'oxygène de ladite chaîne ;
  - ■ le facteur «a» étant inférieur à 3, avantageusement au plus égal à 2,5 et de préférence à 2,3.

En ce qui concerne la limite inférieure il est souhaitable que :

$$nb_C \geq b(nb_O+nb_N)+1,$$

avec le facteur «b» au moins égal à 1, avantageusement à 1,5 et de préférence à 1,7.

Il est souhaitable pour qu'il y ait une bonne auto-émulsification que, d'une part, E soit un atome de la colonne VB (avantageusement phosphore) et que, d'autre part, dans la chaîne polyoxygénée R10, avantageusement dans l'ensemble dudit composé de formule (II), le rapport entre le nombre de motifs éthylènyloxyles et le nombre de motifs alcényloxyles, bien sûr y compris éthylènyloxyles, soit au moins de 2/3, avantageusement de 3/4, de préférence de 100%.

Il est également souhaitable que cette contrainte soit appliquée à l'ensemble dudit composé selon la présente invention (c'est-à-dire présentant un groupement fonctionnel anionique et une chaîne polyoxygénée). Lorsque l'agent émulsifiant contient plusieurs composés selon la présente invention, notamment de formule (II), il est également opportun que cette condition s'applique de manière statistique sur l'ensemble des composés selon la présente invention, présents dans l'agent émulsifiant.

Quand le radical R11 représente une chaîne polyoxygénée, il est souhaitable que R11, identique à ou différent de R10, soit choisi parmi la même famille de chaîne polyoxygénée et même remplisse les mêmes conditions préférentielles. Il est toutefois préférable que R11 soit H ou que q soit égal à zéro.

Pour mieux cerner les choix préférés spécifiés ci-dessus à propos des chaînes polyoxygénées, et quitte à être redondant, on peut définir les chaînes polyoxygénées préférées selon la présente invention comme étant des chaînes hydrocarbonées présentant les caractéristiques suivantes :

- un nombre de carbone au plus égal à 25, avantageusement à 20, de préférence à 18 (lorsque la chaîne porte, directement ou indirectement, plusieurs groupements fonctionnels anioniques ces valeurs doivent être ramenées à la fonction anionique) .
- au moins 2 atomes d'oxygène, avantageusement au moins 3 ;
- certaines des caractéristiques préférentielles mais optionnelles :
  - une ou plusieurs fonctions éthers sont avantageusement intercalées dans des enchaînements carbonés, chaque fonction éther étant séparée de celle qui lui est la plus proche par avantageusement au moins 2 carbones ;
  - une ou plusieurs fonctions carbonylées sont présentes dans ladite chaîne polyoxygénée, avantageusement choisies parmi les fonctions amide, éventuellement peralcoylées, et de préférence esters ;
  - les fonctions éther de ladite chaîne polyoxygénée sont avantageusement au moins partiellement formées par des motifs alcényloxyles, ces derniers étant de préférence choisis parmi les éthylènyloxyles et les propylènoxyles ;
  - le groupe terminal de ladite chaîne lorsqu'elle est linéaire, sinon de l'enchaînement le plus long, est avantageusement un groupe de nature lipophile mais de petite taille, cette taille étant limitée par les relations entre $nb_C$, $nb_O$ et $nb_N$. Ce groupe terminal a pour limite d'un coté, et évidemment, l'extrémité de la chaîne polyoxygénée et de l'autre coté celui des groupe(s) carbonyle(s), du, ou des, atome(s) d'oxygène de fonction éther ou ester, ou du, ou des, atome(s) d'azote, qui est le plus proche de l'extrémité de la chaîne. Quoique l'on ne puisse exclure qu'il soit hydrogène, il est souhaitable que ce groupe terminal soit un groupe hydrocarboné comportant au moins un avantageusement deux carbones et lorsque la limite du groupe terminal est un oxygène engagé dans une fonction éther ledit groupe terminal comporte au plus huit carbones, de préférence au plus six carbones. Ces dernières limites sont aussi avantageuses dans les autres cas ;
  - ledit groupe terminal est avantageusement limité par un groupe carbonyle (le carbone de la fonction carbonyle n'entre pas dans le calcul du nombre de carbone dudit groupe terminal), de préférence le carbonyle d'un ester ; selon une mise en oeuvre avantageuse de la présente invention, ledit groupe terminal peut former avec le carbonyle un groupe acyle ; comme cela est exposé ci-après le groupe acyle peut porter une insaturation ou un système d'insaturation (par exemple un aryle, éventuellement porteur d'une double liaison) conjugué avec le carbonyle.

Selon un mode bien adapté au revêtement et notamment aux peintures et vernis le composé présentant un groupement fonctionnel anionique comporte en outre une fonctionnalité susceptible de donner une réticulation distincte de celle obtenue par la condensation de la fonction isocyanate avec une fonction à hydrogène réactif. Une telle autre fonction peut être une double liaison ou de plusieurs doubles liaisons (carbone=carbone) avantageusement activée(s) :

■ soit par un atome donneur [azote ou oxygène comme dans le cas des N-vinyl (exemple de la N-vinylpyrrolidone) ou des éthers ou ester vinylique] ;
■ soit par un groupe-électroattracteur notamment carbonyle, phosphonique ou nitrile ;
■ soit par une double liaison ou un aryle ;
■ soit bien sûr, par une combinaison de moyens précédents (par exemple radical cinnamyle).

Un tel système permet de réaliser un système de double réticulation qui dans le cas de la présente invention améliore l'adhérence à certain substrat et réduit ou évite les phénomènes de remontées de matière à la surface du revêtement que l'on constate parfois au contact de phases aqueuses ou d'atmosphère humide.

Cette réticulation peut être obtenue par la polymérisation :

■ soit de doubles liaisons portées uniquement par l'émulsifiant,
■ soit de doubles liaisons portées par l'émulsifiant et par un isocyanate (préalablement) fonctionnalisé de manière à porter une double liaison réactive,
■ soit de doubles liaisons portées par l'émulsifiant et par un co-réactif (*exempli gratia* polyol porteur de fonction acrylique),
■ soit de doubles liaisons portées par l'émulsifiant, par un co-réactif et par un isocyanate (préalablement) fonctionnalisé de manière à porter une double liaison réactive.

Cette réticulation se fait dans des conditions connues par l'homme du métier, par initiation actinique (bombardement électronique, rayons X, UV) et/ou thermique, et/ou chimique éventuellement en présence d'agent activateur ou catalyseur idoine.

Dans le cadre de cette mise en oeuvre, la double liaison peut se trouver dans la chaîne polyoxygénée et notamment dans le groupe terminal. Mais elle peut également se trouver dans le groupement fonctionnel anionique et notamment dans R11 [par exemple dans le cas de vinyl mono- (un groupement fonctionnel anionique) ou di-phosphonate (deux groupements fonctionnels anioniques) porteur d'une chaîne polyoxygénée telle que visée par la présente invention].

Selon un des modes préférés selon la présente invention, les chaînes polyoxygénées (qui peuvent donc correspondre à R10 et à R11 quand ce dernier est défini comme étant une chaîne polyoxygénée) selon la présente invention répondent à la formule (III) suivante :

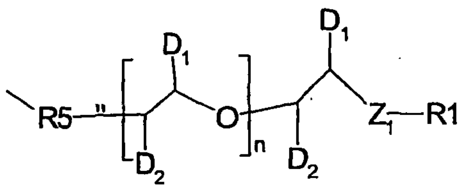

- où le radical polyvalent R5 fait partie de la chaîne polyoxygénée et assure la liaison entre la chaîne et 1 (il est alors divalent), 2 (il est alors trivalent), voire 3 (il est alors tétravalent) groupements fonctionnels anioniques ; il représente ainsi un bras comportant au moins 1, avantageusement au moins 2 chaînons carbonés et au plus 4, éventuellement porteur d'un autre groupement fonctionnel anionique ;
- où n est un entier choisi entre 0 et 7, avantageusement entre 2 et 6, de préférence entre 3 et 5 (intervalles fermés c'est à dire comprenant les bornes) ;
- où les valeurs de $D_1$ et $D_2$ peuvent être différentes selon les chaînons et sont choisies parmi les méthyles et les hydrogènes et ne peuvent être simultanément méthyle ; La somme des atomes de carbone des différents $D_1$ et $D_2$ étant au plus égale à n/2, avantageusement à n/4. Avantageusement tous les $D_1$ et $D_2$ sont Hydrogène ;
- où $Z_1$ est un radical divalent hydrophile choisi parmi :

    ♦ les atomes d'oxygène (formant fonction éther) ou d'azote (azote avantageusement non porteur d'hydrogène), les fonctions divalentes carbonyloxyles [-O-CO- ou -CO-O- comme dans les esters], amides [-N -CO- ou -CO-N-] y compris uréthane et urée,

    ♦ les groupes carbonés divalents, d'au plus 6 carbones, porteurs à chaque extrémité de fonctions choisies parmi les fonctions éther, amine avantageusement non porteuse d'hydrogène, carbonyloxyles (O-CO-) ou oxylcarbonyles (-CO-O-) (telle qu'ester) amide avantageusement non porteur d'hydrogène, voire cétone ou aldéhyde, les dits groupes carbonés divalents pouvant porter une double liaison avantageusement conjuguée avec au moins une des fonctions formant extrémité du dit groupe ;

    - où R1 représente ledit groupe terminal avantageusement lipophile et est choisi parmi l'hydrogène et les radicaux hydrocarbonés, avantageusement choisi parmi les alcoyles éventuellement substitués, voire les aryles. Ainsi, quoique l'on ne puisse exclure qu'il soit hydrogène, il est souhaitable que ce groupe terminal soit un groupe hydrocarboné comportant au moins un avantageusement deux carbones et lorsque la limite du groupe terminal est un oxygène engagé dans une fonction éther ledit groupe terminal comporte au plus huit carbones, de préférence au plus six carbones. Cette limite est aussi avantageuse dans les autres cas. Ainsi que cela apparaîtra dans la suite de la description il est avantageux que $R_1$ porte une double liaison ;

R5 est le plus souvent relié au reste de la chaîne oxygénée par l'intermédiaire d'un oxygène qui fait partie dudit R5.

Pour de raison de cohérence, il convient de mentionner que si R5 représente un motif propylényloxyle-1,2 [-$CH_2$-CH($CH_3$)-O-] ou un motif éthylènyloxyle [-$CH_2$-$CH_2$-O-] il sera réputé faire partie de l'enchaînement polyéthylèneoxyle et il sera décompté comme un motif entrant dans le nombre n et donc alors $R_5$- ne définira qu'une liaison simple.

Comme cela a été déjà mentionné précédemment, la molécule de formule I peut comporter une, voire plusieurs, double(s) liaison(s). De telles doubles liaisons peuvent alors se trouver aussi bien dans la partie X'- R11 [par exemple lorsque X' représente une liaison simple et que R11 est un vinyle éventuellement substitué], que dans la chaîne polyoxygénée visée par l'invention.

Dans ce dernier cas, si l'on désire quelle puisse donner lieu à seconde réticulation il est préférable que la double liaison soit dans partie $Z_1$-$R^1$ de la formule (III).

Ainsi par exemple : $Z_1$ est choisi parmi

- oxycarbonyle
- Amide
- O-CO-CH=CH-CO-O
- O-CO-C($CH_3$)=CH-CO-O
- O-CO-C(=$CH_2$)-$CH_2$-CO-O
- -O-
- oxycarbonyloxyle
- -O-$CH_2$-CH(OCO-CH=$CH_2$)-$CH_2$-O-CO-

Et R1, avantageusement d'au plus 8 atomes de carbone, est choisi parmi :

- les vinyles, éventuellement substitués notamment méthylvinyle et phénylvinyle ;
- les alcoyles légers d'au plus 8 atomes de carbone, notamment méthyle, éthyle, propyles ou butyles ;
- le vinylphényle (-Φ-CH=$CH_2$) ;
- voire l'hydrogène.

De préférence l'un des, voire les deux, groupements $Z_1$ et R1 présente au moins une double liaison.
On peut ainsi avoir les enchaînements suivants :

| $Z_1$ | R1 | Exemples, observations ou nom courant |
|---|---|---|
| Oxycarbonyle (-O-CO-) | Vinyles, y compris alcoylvinyle et arylvinyle | Ester(méth)acryliques Ester cinnamique et équivalents |
| Amide | vinyles y compris alcoylvinyle et arylvinyle | (Méth)acrylamides cinnamide |
| O-CO-CH=CH-CO-O | Méthyle, Ethyle, propyles, butyles, voire hydrogène | Maléate ou fumarate suivant la géométrie |
| O-CO-C($CH_3$)=CH-CO-O | Méthyle, Ethyle, propyles, butyles, voire hydrogène | Citraconate de Méthyle, Ethyle, propyles, butyles, voire hydrogène |
| O-CO-C(=$CH_2$)-$CH_2$-CO-O | Méthyle, Ethyle, propyles, butyles, voire hydrogène | itaconate |
| -O- | Vinylphényle | Ether de Vinylphényle |
| -O- | Vinyles, y compris alcoylvinyle et arylvinyle | Ether de Vinyle |
| carbonyloxyle | Vinyles, y compris alcoylvinyle et arylvinyle | Ester de vinyle |
| O-$CH_2$-CH(OCO-CH=CH2)-$CH_2$-O-CO | Vinyles, y compris alcoylvinyle et arylvinyle | Bis acrylate d'éther de glycérol |

Des exemples de synthèse de tels composés sont à trouver dans les demandes publiées WO0174909 et WO0027890.
La valeur préférée pour E est le phosphore.
Notamment lorsque E est le phosphore les molécules les plus efficaces sont celles qui ne comportent qu'une seule chaîne polyoxygénée par groupement fonctionnel anionique (c'est-à-dire quand R11 n'est pas une chaîne polyoxygénée ou que «q» est égal à zéro) et il est même préférable que R11 soit au moins partiellement sous forme H, ou que «p» soit égal à deux mais que la seconde acidité soit au moins partiellement sous forme protonée. Les molécules à deux chaînes polyoxygénées sont moins efficaces.
Compte tenu de la difficulté à les faire purs, les composés selon la formule (II) sont le plus souvent utilisés sous la forme de mélange de molécules de formules voisines dont on donne une formule statistique, ou formule moyenne, ce qui explique que la valeur notamment de «n» puisse être fractionnaire. En particuliers, les esters phosphoriques répondant à la présente invention sont souvent synthétisés à partir de chaînes présentant des séquences statistiques de polyoxyde(s) d'alcène dont le nombre de motifs est statistique et correspond à un «n» fractionnaire.
Cela vaut aussi pour les autres valeurs numériques de la formule (II) et pour le rapport entre les différents

maillons alcényloxyles.

Cela est particulièrement vrai quand E est un phosphore et surtout quand les groupements anioniques sont de nature phosphate (c'est-à-dire lorsque le phosphore est pentavalent et n'est raccordé directement qu'à des oxygènes).

Dans le cas de mélanges complexes, il est préférable de se référer à une formule statistique où dans la formule (II) m, p et q sont fractionnaires et sont choisis dans les intervalles respectifs suivants :

- où q est choisi dans l'intervalle allant de zéro à 1;
- où p est choisi entre 1 et 2 (intervalles fermés, c'est-à-dire comprenant les bornes) ;
- où m est choisi entre zéro et 2 (intervalles fermés, c'est-à-dire comprenant les bornes), avantageusement m est un entier (aux impuretés près) ;

En général, dans ces mélanges, E représente une valeur unique et ne correspond qu'à un seul élément. Dans ces conditions les contraintes liées aux éléments se retrouvent pour les mélanges monoélémentaires, sous les formes ci-après :

- lorsque E est un chalcogène (colonne VIB), m est compris entre un et 2, avantageusement égal à 1 ou 2, de préférence à 2 ; q est égal à zéro et la somme p + q + 2m + 1 ;
- lorsque E est un élément de la colonne VB (colonne du phosphore), m est compris entre zéro et 1, avantageusement égal à zéro ou 1, de préférence à 1 ; la somme p + q est égal à 2 ; et la somme p + q + 2m + 1 est comprise dans l'intervalle fermé (c'est-à-dire contenant les bornes) allant de 3 à 5, avantageusement égale à 3 ou à 5, préférentiellement à 6.

Il est souhaitable que la valeur statistique de «p» et celle de «q» soient telles que q/(p+q) soit au plus égal à 1/4, avantageusement 1/6 ; de préférence à 1/8.

On préfère donc utiliser des mélanges de molécules de formules (II) qui, éventuellement ramenés à un groupement fonctionnel anionique, présentent moins de deux chaînes polyoxygénées.

Statistiquement, il est donc souhaitable que par groupement fonctionnel anionique il y ait au plus 3/2, avantageusement au plus 4/3, de préférence 5/4 chaîne polyoxygénée. Le système le plus efficace est lorsqu'il y a de 0,8 à 1,2 ; avantageusement de 0,9 à 1,2 chaîne polyoxygénée par groupement fonctionnel anionique.

Ainsi lorsque X' = oxygène et R11 est une chaîne polyoxygénée, on considérera que la condition ci-dessus peut s'écrire : la valeur statistique de «p» et celle de «q» doivent être telles que q/(p+q) soit au plus égal à 1/4, avantageusement 1/6 ; de préférence à 1/8.

La majeure partie (c'est-à-dire au moins la moitié en masse, avantageusement au moins les 2/3, de préférence au moins les 3/4 plus préférentiellement les 9/10, et même la totalité) dudit agent émulsifiant est avantageusement constitué d'une ou plusieurs molécules selon la formule (II).

Il est également souhaitable qu'au moins 40%, avantageusement au moins 50%, de préférence au moins 75% en masse dudit agent émulsifiant répondent à une formule (II) où R11 soit différent d'une chaîne polyoxygénée et de préférence répondent à une formule (II) où «q» soit égal à zéro.

Un autre but de la présente invention est de procurer une composition comportant des fonctions isocyanate libre et ce à une teneur au moins égale à 3% en masse (la masse d'une fonction isocyanate étant de 42), avantageusement au moins 5%, de préférence 10%, qui soit facilement émulsionnable dans l'eau..

Un autre but de la présente invention est de procurer une composition du type précédent qui soit autoémulsionnable.

Un autre but de la présente invention est de procurer une composition du type précédent dont on puisse réguler la taille des émulsions ($d_{50}$) par la quantité d'agent émulsifiant.

Ces buts et d'autres qui apparaîtront par la suite sont atteints au moyen d'une composition à base d'isocyanate (s), avantageusement non complètement masqué(s) (voir quantité de d'isocyanate libre ci dessus), caractérisé par le fait qu'elle comporte au moins un composé présentant un (dans le sens d'au moins un) groupement fonctionnel anionique (parfois désigné ultérieurement par « fonction anionique ») et une, et avantageusement une seule, chaîne polyoxygénée dont le nombre de carbone est au plus égal à 25, avantageusement à 20.

Ledit composé ne comporte avantageusement pas plus de 3 groupements fonctionnels anioniques, de préférence au plus 2, et, pour des raisons de facilité de synthèse, le plus couramment 1.

Le groupement fonctionnel anionique est avantageusement choisi parmi les groupements fonctionnels anioniques oxygénés comportant des atomes des colonnes VB (colonne du phosphore) et VIB (colonne du soufre) d'une période au moins égale à la 3$^{éme}$ et au plus égale à la 5$^{ème}$. La classification périodique des éléments utilisée dans la présente demande est celle du supplément au Bulletin de la Société Chimique de France, janvier 1966, n° 1. L'acide associé (la première acidité lorsque le groupement fonctionnel anionique est deux fois anionique [c'est-à-dire que dans le cas de la formule (I) p est égal 2]) du groupement fonctionnel anionique présente avantageusement une acidité de

pKa au plus égal à 5 de préférence à 3 (1 chiffre significatif).

Ainsi la présente invention vise pour addition successive ou simultanée, une composition comportant notamment :

a) une sous-composition vecteur de fonctions isocyanate dont les caractéristiques préférées sont précisées ultérieurement ;
b) un agent émulsifiant contenant au moins un composé présentant un groupement fonctionnel anionique et une chaîne polyoxygénée dont le nombre de carbone est au plus égal à 25, avantageusement à 20 ; et
c) optionnellement une phase aqueuse.

Selon la présente invention, ledit composé, ou mélange de composés présentant un groupement fonctionnel anionique et une chaîne polyoxygénée, peut-être utilisé seul, ou en mélange avec un ou plusieurs agents tensioactifs.

Ces éventuels agents tensioactifs peuvent être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl--phosphonates, - phosphinates, sulfonates, sel d'acide gras et/ou zwitterionique] et parmi les composés non-ioniques ceux bloqués en bout de chaîne ou non.

Toutefois les composés non ioniques présentant des fonctions alcooliques sur au moins l'une des chaînes semblent avoir un effet légèrement défavorable sur l'(auto)émulsion même s'ils ont un effet favorable sur d'autres aspects de la composition pour peinture ; compte tenu de cela il est préférable que la teneur en ce type de composé représente au plus un tiers, avantageusement au plus un cinquième, de préférence au plus un dixième en masse desdits composés anioniques selon l'invention).

Si l'on revient aux composés selon la présente invention, avantageusement le(s)dit(s) composé(s) comporte (nt) ainsi une partie hydrophile formée de ladite fonction anionique, dudit (éventuel) fragment de chaîne polyéthylène glycol et d'une partie lipophile à base d'un radical hydrocarboné.

Ladite partie lipophile est en général choisie parmi les groupes alcoyles [dans la présente description **ALCO-*yle*** est pris dans son sens étymologique de reste hydrocarboné d'un **ALCO-*ol*** après ignorance de la fonction alcool (ou ol)] ;et aryles.

Les préférences structurelles pour les composés selon la présente invention, ont déjà été exposées mais il peut être intéressant de revenir sur certains points, voire de les compléter

Ainsi lorsque E représente un atome de carbone (avantageusement dans ce cas m = 1 et p = 1), les prototypes de ces composés issus de ce choix correspondent par exemple :

- à un acide alcool polyéthoxylé [Par exemple acide lactique ou glycolique polyéthoxylé, avec par exemple q=0; X une simple liaison; R10 répondant à la formule (III) où R5 est le reste de l'acide alcool après ignorance de la fonction carboxylique les autres valeurs étant inchangées] ; ou
- à un acide aminé polyéthoxylé [Par exemple acide aminé naturel à moins de 8 atomes de carbone tel que (glycine, alanine) ; avec par exemple q = 0 ; X une simple liaison ; R10 répondant à la formule (III) où R5 est le reste de l'acide aminé après ignorance de la fonction carboxylique les autres valeurs étant inchangées] polyéthoxylé).

Ainsi que cela a été déjà mentionné, ces composés où E est un carbone ne sont pas préférés, mais ils peuvent servir de précurseurs à des composés hydroxy-diphosphonés par action de composé du phosphore III sur des fonctions carboxyliques. Voir notamment EP 104 974 pour la technique de transformation de la fonction carboxylique et EP 38 764 pour la technique d'estérification.

E peut être choisi parmi les atomes donnant les pnictures de rang supérieur à l'azote (éléments de la colonne VB) (avantageusement dans ce cas m = 1 ou 0 ; et p = 1 ou 2) et les atomes de chalcogène de rang supérieur à l'oxygène (avantageusement dans ce cas m = 1 ou 2 et p = 1 et q = 0). Les éléments de la colonne VB sont préférés et plus particulièrement le phosphore.

Ainsi dans le cas où E est chalcogène, la formule I se simplifie avantageusement en :

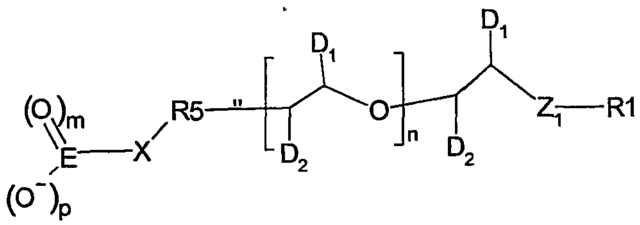

Formule V

avec p égal à 1 et m étant égal à 1, avantageusement à 2.

Avantageusement E représente le carbone et surtout le phosphore ou le soufre, de préférence le phosphore.

Dans le cas du phosphore, la formule (III) devient :

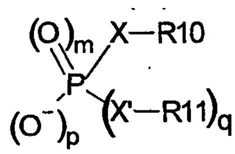

avec lorsque q est zéro la formule (III) devient la formule :

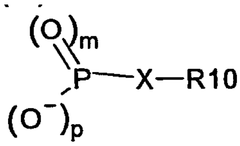

- où p représente 2 ;
- où m représente 0 ou 1 ;
- où la somme p + m est au plus égale à 3 ;
- où la somme 1 + p + 2m est égale à 3 ou à 5 ; cette dernière valeur étant préférée ;

avec les valeurs avantageuses m = 1 et p = 2.

Avantageusement la formule préférée (V) comporte un phosphore et devient :

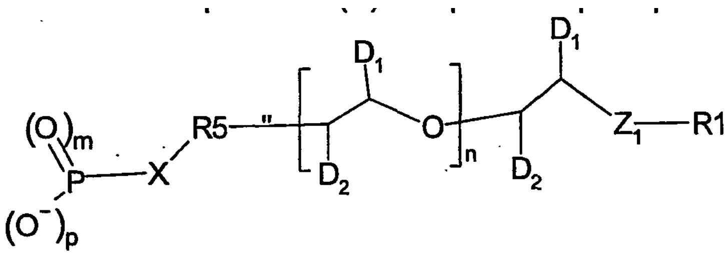

- où n, X, R5, $D_1$, $D_2$, $Z_1$, R1 sont définis comme précédemment.

Comme cela a été mentionné précédemment lorsque R5 est éthylényloxyle ou propylényloxyle il est réputé entrer dans l'enchaînement polyalcényloxyle et dans le décompte de «n». La formule V devient alors la formule (VI) :

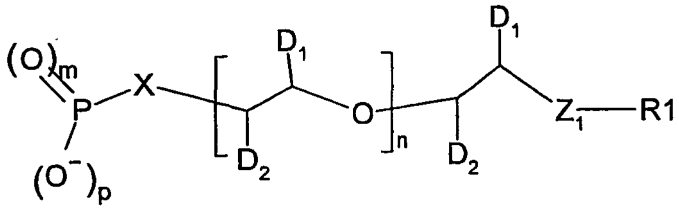

- où la partie entre crochet :

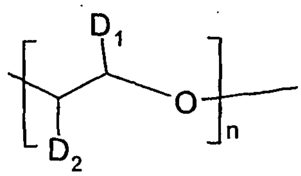

représente un enchaînement fait de l'homo polycondensation d'oxyde d'éthylène ou de l'hétéro-polycondensation des oxydes d'éthylène et de propylène ;

- «n» est avantageusement choisi de manière que le nombre total d'alcényloxyles de l'ensemble X- R10, d'une part, et, le cas échéant, de l'ensemble X'-R11, d'autre part, aille de 1 à 8, avantageusement aille de 2 à 7. Il est en outre souhaitable que «n» présente une valeur au plus égal à 6 et au moins égale à 2, de préférence entre 3 et 5 (intervalles fermés c'est-à-dire comprenant les bornes) ;

Il convient de signaler que, si l'on se place en dehors des conventions de la présente description qui considère que X ou X' ne font pas partie de la chaîne polyoxygénée, l'on peut considérer que le fragment

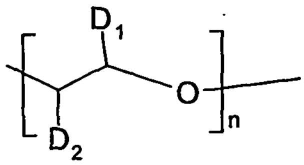

peut être juxtaposé à un motif de manière que qu'il y ait dans la molécule un enchaînement de polyalcényloxyle qui comporte un motif de plus que «n» et cela lorsque l'une des conditions ci-après est remplie :

■ soit lorsque X est un oxygène : l'association de X et de la chaîne polyoxygénée (soit X-R1 0) pouvant alors s'écrire :

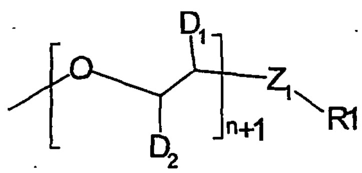

■ soit lorsque Z1 est un oxygène ou porteur d'un oxygène présentant deux fonctions simples de manière à former un motif alcényloxyle avec le groupement éthylényle, éventuellement substitué, (non entre crochet et à la droite du crochet de droite), et figuré par la séquence (-$CHD_1$-$CHD_2$-). Si l'on écrit alors $Z_1$ sous la forme O-Z'1 la séquence X-R10 peut s'écrire par la formule :

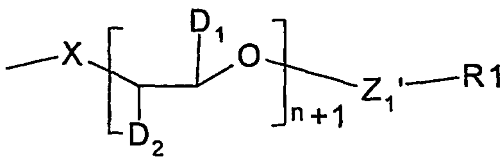

Cette remarque explique pourquoi les contraintes sur le nombre de motifs alcényloxyles de la branche X-R10 peut impliquer une valeur différente de «n» selon les cas.

La classification périodique des éléments utilisée dans la présente demande est celle du supplément au Bulletin de la Société Chimique de France, janvier 1966, n° 1.

La fonctionnalisation éventuelle des alcoylènes (ce qui peut notamment être le cas de R5, et de $Z_1$) est faite par des fonctions hydrophiles (amines tertiaires et, lorsque cela est prévu dans description ci-dessus, par d'autres groupements fonctionnels).

Le contre-cation (ou les contre-cations) assurant la neutralité électrique des composés selon l'invention est avantageusement monovalent et est choisi parmi les cations minéraux et les cations organiques avantageusement non nucléophile et par voie de conséquence de nature quaternaire ou tertiaire [notamment «oniums» de colonne V tel que phosphonium, ammoniums (y compris amines protonées), voire de colonne VI tel que sulfonium, ...] et leurs mélanges, le plus souvent ammoniums, en général issus d'une amine, avantageusement tertiaire. Avantageusement, on évite que le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes.

Le pKa dans l'eau des cations issus de la protonation des bases neutres (organique [ammonium.....] ou minéraux) est avantageusement au moins égal à 7, de préférence à 8 et au plus à égal à 14, de préférence à 12 plus préférentiellement à 10.

Les cations et notamment les ammoniums correspondant aux amines (amines protonées dans ce cas) ne présentent avantageusement pas de propriété tensioactive, mais il est souhaitable qu'ils présentent une bonne solubilité, en tout cas suffisante pour assurer celle desdits composés présentant groupement fonctionnel et une chaîne polyoxygénée, en phase aqueuse et ce à la concentration d'emploi.

Les amines tertiaires, les ammoniums ou phosphoniums quaternaires présentant au plus 16, avantageusement 12 atomes, avantageusement au plus 10 atomes, de préférence au plus 8 atomes de carbone par fonction "onium" (rappelons qu'il est préféré qu'il n'y en ait qu'une par molécule) sont préférés.

Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagisse pas avec les fonctions isocyanates et n'altère significativement pas la solubilité en phase aqueuse.

Il est très souhaitable que les composés anioniques selon la présente invention soient sous une forme neutralisée telle que le pH qu'elle induit lors d'une dissolution ou d'une mise en contact dans l'eau soit au moins égal à 3, avantageusement à 4, de préférence à 5 et au plus égal à 12, avantageusement à 11, de préférence à 10.

Ainsi il est préférable que seules les fonctions acides fortes ou moyennes (c'est-à-dire dont le pKa est au plus égal à 4) soit neutralisée quand il y en a plus d'une. Les acidités faibles, c'est-à-dire dont le pKa est au moins égal à 5, peuvent être partiellement neutralisées.

Comme cela a été mentionné précédemment d'une manière plus générale, il est préférable que le(s) composé(s) où «q» est égal zéro soi(en)t largement majoritaire(s). Ainsi lorsque E est un phosphore V (c'est-à-dire 2m + p + q = 5) et que le mélange de composés est ester, il est souhaitable d'utiliser des mélanges de monoester(s) et de diester(s) dans un rapport molaire monoester/diester supérieur à 2, avantageusement à 3, de préférence à 4, plus préférentiellement à 5, voire même à 10.

Les agents émulsifiants selon l'invention, notamment les mélanges ci-dessus, peuvent en outre comporter de 1 % jusqu'à environ 20% (il est toutefois préférable que cela ne dépasse pas environ 10%) en masse d'acide phosphorique et/ou acide phosphoreux (qui seront avantageusement salifiés au moins en partie de manière à être dans les zones de pH préconisées) et de 0 à 5% d'esters hors invention de l'acide pyrophosphorique. Si techniquement la présence d'acide phosphoreux est possible, il peut arriver que certains de ses dérivés soient réputés toxiques, dans ces cas là il est bien sûr à éviter.

Le rapport massique entre les agents émulsifiants (y compris groupement fonctionnel anionique et une chaîne polyoxygénée) et les isocyanates est très préférablement compris entre 1/20 et environ 1/10. Les zones préconisées seront explicitées ultérieurement.

La composition peut comporter en outre un catalyseur avantageusement latent (libérable par action des agents extérieurs, par exemple rayonnement visible ou U.V., oxygène).

Lorsqu'elle présente des doubles liaisons, la composition peut comporter en outre un promoteur de polymérisation de double liaison, avantageusement latent (activable par action des agents extérieurs, par exemple rayonnement visible ou U.V., oxygène).

Selon la présente invention, il est possible de réaliser aisément une émulsion et notamment une émulsion huile dans eau stable.

Il est certes possible d'obtenir une émulsion «eau dans huile» mais une telle émulsion est chimiquement peu

stable. Les émulsions «eau dans huile» favorisent une décomposition dangereuse et parfois brutale des fonctions isocyanates. Pour éviter ce problème il est avisé de faire une addition de la composition isocyanate selon l'invention dans la phase aqueuse et non l'inverse.

Lorsque la concentration en agent émulsifiant est basse, il peut arriver qu'il y ait une démixtion en deux émulsions une huile dans eau surmontée d'une eau dans l'huile. Cette situation peut être palliée par une agitation plus vigoureuse ou par l'augmentation de la teneur en agent émulsifiant.

Il est souhaitable que la composition d'isocyanate selon l'invention présente après mise en dispersion ou émulsion dans une phase aqueuse, une teneur en eau d'au plus 95% avantageusement d'au plus 90%, de préférence d'au plus 85% et d'au moins 20%, avantageusement d'au moins 25%. Il est ainsi possible d'obtenir des émulsions riches en matière solide.

En particulier le taux de matière solide peut atteindre des valeurs au moins égales à 50%, et même à 60%, mais il est, en général, inférieur à 80%.

La facilité à mettre en émulsion dépend de la viscosité de la composition isocyanate avant addition (c'est-à-dire sans) d'agent émulsifiant. pour obtenir des taille de particule fines, ou pour obtenir des taux de solide élevé il est préférable d'utiliser des composition isocyanate d'une viscosité (dans les conditions normales de température et de pression) au plus égale à environ 9 000 centipoises (ou milliPascal.seconde), avantageusement à environ 5 000 centipoises (ou millipascal.seconde), de préférence à 3 000, plus préférentiellement à 1 500 centipoises (ou millipascal.seconde), voire même 1000 mPa.s. En fait, plus faible est la viscosité, meilleure est la propension à former des émulsions.

Pour revenir au problème de mise en émulsion, au cours de l'étude qui a mené à la présente invention, Il a été montré qu'il y avait un risque d'emballement de diverses réactions lorsque certaines proportions d'eau étaient atteintes. Cela est particulièrement vrai dans le cas des isocyanates aliphatiques, c'est-à-dire reliés au squelette hydrocarboné (c'est-à-dire contenant à la fois de l'hydrogène et du carbone) par l'intermédiaire d'un carbone saturé d'hybridation $sp^3$. Aussi est-il avisé d'éviter des compositions où le rapport massique entre, d'une part, la quantité d'eau dans la phase aqueuse et, d'autre part, la somme de l'isocyanate et de l'émulsifiant selon l'invention, est compris entre $10^{-2}$ et un demi. Si l'on désire plus de sûreté, on évitera les rapports compris entre $10^{-3}$ et 1.

Les émulsions obtenues présentent pour la partie isocyanate des $d_{50}$ au moins égal à 0,05 micromètre, plus souvent à 0,5 micromètre et elles présentent un $d_{50}$, préférentiellement un $d_{80}$, avantageusement ≤ (au plus égal à) 10 micromètres, de préférence à 5 micromètres. L'émulsion peut être réalisée avec diverses phases aqueuses et notamment on peut utiliser la phase aqueuse des émulsions, des suspensions ou des latex qui sert en général de vecteur des co-réactifs polycondensables avec les fonctions isocyanates. L'émulsion d'isocyanate peut aussi être réalisée séparément et être mélangée avec les émulsions, suspensions ou latex des co-réactifs.

Ainsi la présente invention vise aussi les compositions isocyanates en émulsion dont la phase aqueuse comporte en outre des composés présentant des fonctions à hydrogène réactif bien connues de l'homme du métier (fonctions alcool, amine, sulfhydryle, ...), en général un ou plusieurs polyols. Sauf dans le cas des latex, ces composés sont des polymères ou des polycondensats présentant avantageusement au moins 2, de préférence au moins 4, plus préférentiellement au moins 5 et au plus 30, de préférence au plus 15 s, plus préférentiellement 10 fonctions à hydrogène réactif. Ce qui est expliqué ci-après pour les polyols s'applique, en général, mutatis mutandis à toutes les fonctionnalités de ce type. Les polyols utilisables sont, souvent, des polymères (ou des polycondensats) qui contiennent au moins 2 groupements hydroxyles (phénol ou alcool) ayant avantageusement un taux d'hydroxyle entre 0,5 et 5, avantageusement entre 1 et 3% (en masse rappelons que l'hydroxyle présente une masse de 17).

Rappelons que la réticulation est la formation d'un réseau tridimensionnel ce qui implique que l'un, au moins, des co-réactifs comporte une fonctionnalité supérieure à 2. Dans le cas des réseaux polyuréthannes, le co-réactif isocyanate porte souvent une fonctionnalité élevée (en utilisant la masse en nombre $M_n$ : de 3 à 8, avantageusement de 3,2 à 5,5).

Ainsi, sauf dans le cas des latex qui sera rappelé ci-après, les polyols comportent avantageusement au plus 12, de préférence au plus 10 s, pour certaines applications de 2 à 4 sont préférées (revêtement souples) fonction alcools primaires. Mais ils peuvent comporter, en outre, des fonctions alcooliques secondaires ou tertiaires (en général, au plus environ 10, avantageusement au plus 5, plus souvent au plus 2) qui, en général, ne réagissent pas ou ne réagissent qu'après les primaires, et ce, dans l'ordre primaire, secondaire et tertiaire.

Les polyoses ou polyosides [amidon, cellulose, gommes (guar, caroube, xanthane, ...) diverses ...] surtout sous forme solide sont à éviter. Sous la forme d'agent texturant, et dans la mesure où cela ne gêne pas la mise en émulsion et la stabilité de cette dernière, ils peuvent toutefois être utilisés pour donner des propriétés particulières (par exemple thixotropie ...). Le squelette du polymère peut être de nature chimique diverse notamment acrylique, polyester, alkyde, polyuréthanne, voire amide, y compris urée.

Le polyol peut comporter des groupements anioniques, notamment carboxyliques ou sulfoniques ou ne pas comporter de groupement ionique.

A l'occasion de la présente invention, il a été montré que la présence de fonction carboxylate anionique ($-CO_2^-$) augmentait significativement la cinétique de séchage ce qui est particulièrement intéressant pour obtenir un "hors

poussière" rapide, notamment lorsque l'on opère à l'extérieur. Un effet significatif peut être noté pour un rapport d'au moins d'une fonction carboxylique pour environ 20 fonctions à hydrogène réactif [fonction alcool ou phénol], avantageusement pour un rapport d'un pour environ 10, de préférence pour un rapport d'un pour environ 5 ; il est toutefois souhaitable que ce rapport soit au plus égal à une fonction pour une fonction, de préférence d'une fonction carboxylique pour deux fonctions "ol". Les contre-cations des carboxylates répondent avantageusement aux mêmes préférences que celles exprimées pour les contre-cations du ou des composés selon la présente invention.

Le polyol peut déjà être en milieu aqueux ou hydrosoluble ou hydrodispersable.

Il peut s'agir d'une solution aqueuse (qui peut notamment être obtenue après neutralisation des groupements ioniques) ou d'une émulsion du polymère dans l'eau ou d'une dispersion de type latex.

Il semble possible de disperser un polyisocyanate standard dans un polyol hydrosoluble dans certaines conditions de formulation (notamment avec un rapport pigment sur liant de la peinture adapté). Mais l'utilisation de polyisocyanates standards avec des polyols hydrodispersés (types émulsion de résine ou latex), pose souvent des problèmes d'incompatibilité (floculation, apparition de plusieurs phases ...). Un des nombreux avantages de la préparation selon l'invention est qu'elle offre une grande liberté de choix pour la formulation (forme physique du polyol, rapport pigment sur liant, facilité d'incorporation dans les milieux aqueux).

D'autre part, il a été constaté au travers des valeurs d'usages des revêtements (notamment résistance chimique et dureté) que la réticulation des films était beaucoup plus importante quand le polyol utilisé était carboxylé.

En particulier on peut utiliser avantageusement les latex, notamment les nanolatex (c'est-à-dire latex dont la taille particulaire est nanométrique [plus précisément dont le $d_{50}$ est au plus égal à environ 100 nanomètres])

Ainsi, selon une des mises en oeuvre particulièrement avantageuses de la présente invention, le polyol est avantageusement un latex de taille nanométrique présentant les caractéristiques suivantes :

- $d_{50}$ compris entre 15 et 60 nm, avantageusement entre 20 et 40 nm ;.
- fonction carboxylate de 0,5 à 5% en masse;
- fonction "ol" : entre 1 et 4%, avantageusement entre 2 et 3% ;
- taux de solide : entre 25 et 40% ;
- un $d_{50}$ inférieur à 1 micromètre.

En outre les latex, surtout quand leur point de transition vitreuse est inférieur à 0°C, avantageusement à -10°C, de préférence à -20°C, permettent l'obtention avec des isocyanates même aromatiques, une résistance aux intempéries et notamment aux variations de température.

Le rapport molaire entre les fonctions isocyanates libres et les fonctions hydroxyle est compris entre 0,5 et 2,5, avantageusement entre 0,8 et 1,6, avantageusement entre 1 et 1,4.

Les latex (non fonctionnalisés en isocyanate éventuellement masqués) décrits dans la demande de brevet d'invention français déposé le 28 avril 1995 N° 95/05123 et dans la demande réflexe de brevet européen N°EP 0.739.961 donnent de forts bons résultats.

Ainsi avantageusement les particules de latex présentent une teneur en fonction acide (avantageusement carboxylique), comprise entre 0,2 et 1,2 milliéquivalent/gramme de matière solide et qu'elles présentent une teneur en fonction alcoolique accessible comprise entre 0,3 et 1,5 milliéquivalent/gramme.

La mesure de la fonctionnalité acide ou alcool se fait de manière en elle-même connue par dosage acido-basique pour les fonctions acides tandis que pour les fonction alcool, elle se fait comme pour les autres polyols utilisés dans ce domaine technique sur la phase organique séchée et par action de l'anhydride acétique et mesure de la quantité de l'acide acétique utilisé pour estérifier le fonction alcool (se référer par exemple à la norme ASTM E222).

Ainsi, comme indiqué dans ce document, sont préférés les latex constitués de particules porteuses de fonction (s) selon l'invention, qui sont hydrophobes et possèdent avantageusement une taille ($d_{90}$) généralement comprise entre 0,01 micromètre et 10 micromètres et de préférence au plus égale à 5 micromètres, voire à 2 micromètres. Les particules sont calibrées, monodispers(é)es et présentes dans le latex à raison d'une quantité variant entre 0,2 à 65% en masse, de la masse totale du latex.

La masse moléculaire moyenne en poids ($M_w$ déterminée de préférence par chromatographie de perméation de gel, connue sous l'acronyme anglosaxon de "GPC") des polymères constitutifs des particules de la population A (latex à fonction "ol" jouant le rôle de polyol) est avantageusement comprise entre $5.10^4$ et $5.10^6$, de préférence $0,8\ 10^5$ et $2.10^6$.

Les fonctions alcooliques ou les fonctions acides, de préférence carboxyliques peuvent être également obtenues par hydrolyse de fonctions alcoologènes (ester, éther, halogénure ...) ou de fonctions acidogènes (ester, anhydride, chlorure d'acide, amide, nitrile ...).

La répartition entre les différents types de motifs répond avantageusement aux règles suivantes :

La teneur en motif issu du monomère constitué par ledit alcool libre présentant une fonction éthylénique activée, et

rapportée à la totalité des motifs de toutes sortes, est avantageusement comprise entre 3 et 15%, de préférence entre 4 et 10% (mole, ou équivalent).

Selon un mode avantageux de la présente invention, le motif est issu d'un ester, d'un acide alpha éthylénique, avec un diol dont une des fonctions alcool reste non estérifiée. Ledit diol est avantageusement un diol oméga/oméga prime, avantageusement choisi parmi le butanediol-1,4, le propane diol-1,3 et le glycol.

Il est souhaitable que ledit acide alpha éthylénique soit un acide acrylique éventuellement substitué.

Selon un mode préféré de la présente invention, la teneur en motif issu d'un acide carboxylique libre (ou sous forme d'un de ses sels), et rapportée à la totalité des motifs de toutes sortes, est comprise entre 2 et 10% (mole).

Pour des raisons économiques, il est souvent avantageux que ledit acide libre soit un acide acrylique éventuellement monosubstitué ou un de ses sels.

Les particules issues de la présente invention peuvent être constituées de deux polymères distincts, le premier constituant le coeur et le second constituant la périphérie. Ce type de particule peut être obtenu par épipolymérisation [où une semence de latex est recouverte par polymérisation superficielle (épipolymérisation, parfois désignée par surpolymérisation)] d'un polymère distinct. Le coeur est parfois appelé germe par analogie au phénomène de cristallisation. Dans ce cas là, seul le deuxième polymère, c'est-à-dire le polymère superficiel, répond aux contraintes de concentration aux différentes fonctions selon la présente invention.

Le rapport massique ([CGFA]/ [isocyanate]) entre les isocyanates à mettre en suspension (c'est-à-dire la sous composition vecteur des fonctions isocyanates au dénominateur) et ledit composé, ou lesdits composés, comportant un groupement fonctionnel anionique et une chaîne polyoxygénée (numérateur) est le plus souvent au plus égal à 1/3 avantageusement au plus égal à environ 20%, de préférence à environ 10 %.

Dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement.

Le rapport massique ([CGFA]/ [isocyanate]) entre les isocyanates à mettre en suspension et groupement fonctionnel anionique et une chaîne polyoxygénée est avantageusement supérieur à 1 %, de préférence à 2%.

Il est également souhaitable que la quantité dudit ou desdits composés comportant un groupement fonctionnel anionique et une chaîne polyoxygénée corresponde à une valeur comprise entre $10^{-2}$ et 1, avantageusement entre $5.10^{-2}$ et 0,5 atome de E par litre de composition a) + b).

Ainsi le rapport massique ([CGFA]/ [isocyanate]) entre les isocyanates à mettre en suspension et groupement fonctionnel anionique et une chaîne polyoxygénée est avantageusement au moins égal à 2%, de préférence à 4%, et au plus égal à environ 20%, de préférence à environ 10%, ainsi ce rapport massique est avantageusement compris entre et environ 20%, de préférence entre 4 et environ 10%.

Selon une mise en oeuvre particulièrement avantageuse de la présente invention, après mise en dispersion ou émulsion, la somme des constituants du liant (c'est-à-dire des teneurs en masse du, ou des, isocyanates, des émulsifiants et des polyols), dans l'eau varie de 30 à 70% par rapport à la totalité de la composition.

Les isocyanates visés par l'invention comporte notamment les composés détaillés ci-après.

Ces composés peuvent avantageusement contenir les structures courantes dans ce domaine par exemple les prépolymères issus de la condensation de monomère(s) avec des alcools polyfonctionnels (par exemple triméthylol propane) en général triol (avantageusement primaire). Mais le plus souvent ils comportent des structures de type isocyanurate, encore appelée trimère, des structures urétidinedione, encore appelée dimère, des structures biuref ou allophanate ou une combinaison de ce type de structures sur une seule molécule ou en mélange.

Si l'on désire abaisser fortement la teneur en solvant de la composition, notamment lorsqu'elle est sous forme d'émulsion, il est préférable d'utiliser des mélanges de ce type qui soient naturellement (c'est-à-dire sans adjonction de solvant) peu visqueux.

Les composés présentant cette propriété sont surtout les dérivés (type isocyanurate, encore appelée trimère, des structures urétidine dione, encore appelée dimère, des structures biuret ou allophanate ou une combinaison de ce type de structures sur une seule molécule ou en mélange) en partie et/ou en totalité des isocyanates aliphatiques dont les fonctions isocyanate sont reliées au squelette par l'intermédiaire de fragments éthylène (par exemple des polyméthylènediisocyanates, notamment l'hexaméthylènediisocyanate et ceux des arylènedialcoylènediisocyanates dont la fonction isocyanate est distante des noyaux aromatique d'au moins deux carbones tels que $(OCN-[CH_2]_t-\Phi-[CH_2]_u-NCO)$ avec t et u supérieur à 1).

Il est souhaitable que ces composés, ou mélanges de composés, présentent une viscosité relativement faible. A titre indicatif, on peut préconiser que dans les conditions normales, elle soit au plus égale à environ 9 000 centipoises (ou milliPascal.seconde), avantageusement à environ 5 000 centipoises (ou millipascal.seconde), de préférence à 3 000, plus préférentiellement à 1 500 centipoises (ou millipascal.seconde). En fait, plus faible est la viscosité, meilleure est la propension à former des émulsions.

Lorsque ces valeurs de viscosité ne sont pas atteintes, Il est alors souvent utile d'amener la sous-composition

dans l'une des limites ci-dessus par l'adjonction d'une quantité minimale de solvant(s) approprié(s).

Toutefois, lorsque l'on n'utilise pas des solvants réactifs (voir infra), il est préférable que la teneur en solvant dans la sous-composition isocyanate ne dépasse pas 20% (un chiffre significatif) en masse de la composition isocyanate, avantageusement 10%.

Lorsque cela est compatible avec l'application, les solvants les plus appropriés sont ce qu'il convient d'appeler des «solvants réactifs» (car ils ont ces deux caractéristiques).

On peut citer comme solvants réactifs les monomères aliphatiques di- et tri-isocyanates de masse moléculaire au moins égale à 200 (2 chiffres significatifs), avantageusement à 250, de viscosité au plus égale à 500 mPa.s.

Parmi ce type de solvant on peut mentionner les dérivés de la lysine et notamment le LDI (Lysine Di-Isocyanate, issu d'ester de la lysine), LTI (lysine tri-isocyanate, issu de l'ester de la lysine avec l'éthanolamine), le NTI (NonylTri-Isocyanate $OCN-(CH_2)_4-CH(CH_2-NCO)-(CH_2)_3-NCO$), l'UTI (Undécyle Tri-Isocyanate $OCN-(CH_2)_5-CH(-NCO)-(CH_2)_5-NCO$).

On peut également citer les dimères de polyméthylène di-isocyanate éventuellement substitué sur un méthylène par un éthyle ou un méthyle (à cycle urétidinedione), les bis-dimères (trimère à deux cycles urétidinedione), et leurs mélanges entre eux et le cas échéant avec les trisdimères (tétramère à 3 cycles urétidinedione). De tels mélanges peuvent être faits par chauffage des monomères (voir demande de brevet international publiée sous le N° WO99/07765)

On peut également citer les monoallophanates (dicondensats avec un monoalcool) issus de polyméthylènedi-isocyanate éventuellement substitué sur un méthylène par un éthyle ou un méthyle, les deux sortes de bis-allophanates (tétracondensats avec un diol, ou de préférence tricondensat avec deux mono alcools à deux fonctions allophanates), et les mélanges de 2 des 3 espèces spécifiées. Pour la synthèse de ce type de produit l'on peut se référer à la demande de brevet internationale publiée sous le N° WO 99/55756.

On peut bien évidemment utiliser des mélanges des divers types de solvant réactifs ci dessus.

En d'autre termes on peut ajuster la viscosité de la composition isocyanate avant mélange avec l'agent d'émulsification à une valeur au plus égale à environ 9 000 centipoises (ou milliPascal.seconde), avantageusement à environ 5 000 centipoises (ou millipascal.seconde), de préférence à 3 000, plus préférentiellement à 1 500 centipoises (ou millipascal.seconde) et même 1000 mPa.s en ajoutant au moins un des composés ci-dessus. A savoir en réalisant un coupage avec une composition isocyanate de viscosité au plus égale à 1 200 mPa.s et inférieure d'au moins 30% à viscosité désirée (c'est-à-dire respectivement 9 000 ; 5 000 ; 3 000 ; 1 500 et 1 000 mPa.s), avantageusement choisie parmi :

- ■ celles comportant au moins 10%, avantageusement 20%, de préférence 40% en masse d'au moins un monomère aliphatique di- et polyisocyanate de masse moléculaire supérieure à 200, avantageusement à 250, de viscosité au plus égale à 500 mPa.s ;
- ■ celles comportant au moins 10%, avantageusement 20%, de préférence 40% en masse d'au moins un dérivé à cycle urétidinedione choisi parmi les dimères et les bis-dimères de polyméthylène di-isocyanate éventuellement substitué sur un méthylène par un éthyle ou un méthyle ;
- ■ celles comportant au moins 10%, avantageusement 20%, de préférence 40% en masse d'au moins un allophanate choisi parmi les monoallophanates de polyméthylènedi-isocyanate éventuellement substitués sur un méthylène par un éthyle ou un méthyle ;
- ■ celles formée par le mélange de trois types de compositions ci dessus.

Ainsi que déjà mentionné ci-dessus, les isocyanates concernés peuvent être des di-, des poly-, voire des mono-isocyanates. Dans leur majorité, les composants de la sous-composition isocyanate sont le plus souvent des dérivés issus d'oligocondensation de molécule(s) unitaire(s) di-, tri, voire tétra isocyanate. Une telle molécule est qualifiée de monomères et est susceptible d'être obtenue par phosgénation d'une diamine primaire, éventuellement porteuse d'une, voire de deux autres fonctions amine primaire. Ainsi une telle molécule contient un motif di-amino qui se retrouve dans la quasi-totalité des oligocondensations et l'immense majorité des transformations des fonctions isocyanates. Cette constatation permet de faire référence au nombre de motifs di-amino pour indiquer notamment l'état de condensation des et des oligocondensats (y compris oligomères), voire des polycondensats même en cas d'hétérocondensats.

Ainsi, Avantageusement, les composants de la sous-composition isocyanate tiennent des structures choisies parmi la structure isocyanurate, encore appelée trimère (impliquant trois motifs di-amino), la structures urétidinedione, encore appelée dimère, les structures biuret (impliquant 3 motifs di-amino) ou allophanate (impliquant 2 motifs di-amino). Ainsi ces composants présentent le plus souvent une de ces structures ou une combinaison de deux ou plusieurs de ces structures sur une seule molécule ou en mélange.

Les isocyanates monomères peuvent être :

⇒ aliphatiques, y compris cycloaliphatiques et arylaliphatiques, tels que :

- comme aliphatique simples, les polyméthylènediisocyanates monomères qui présentent des enchaînements polyméthylènes $(CH_2)_{\pi\,\pi}$ où π π représente un entier de 2 à 10, avantageusement de 4 à 8, et notamment l'hexaméthylène diisocyanate l'un des méthylène pouvant être substitué par un radical méthyle ou éthyle comme c'est le cas du MPDI (méthyl pentaméthylène diisocyanate) ;
- comme aliphatique partiellement "néopentylique" partiellement cyclique (cycloaliphatique) l'isophorone diisocyanate (IPDI) ;
- comme aliphatique cyclique (cycloaliphatique) diisocyanate ceux dérivés du norbornane ou les formes hydrogénées (hydrogénation du noyau conduisant à un cycle diaminé ensuite soumis à une isocyanatation par exemple par phosgénation) des isocyanates aromatiques ;
- les arylènedialcoylènediisocyanates (tel que $OCN-CH_2-\Phi-CH_2-NCO$ dont une partie ne présente pas de différence essentielle d'avec les aliphatiques, à savoir ceux dont la fonction isocyanate est distante des noyaux aromatiques d'au moins 2 carbones tels que $(OCN-[CH_2]_t-\Phi-[CH_2]_u-NCO)$ avec t et u supérieur à 1 ;

⇒ ou encore aromatiques tels que le toluylène diisocyanate (toutefois les isocyanates aromatiques se prêtent mal à une mise en émulsion aqueuse). En revanche leur forme hydrogénée est intéressante tel les 1,3 et 1,4 BIC (BisIsocyanatoCyclohexane).

Les polyisocyanates préférés visés par la technique de l'invention sont ceux dans lesquels au moins une, avantageusement deux, de préférence trois des conditions ci après sont remplies :

- Au moins une, avantageusement au moins 2, plus préférentiellement la totalité, des fonctions NCO sont reliées à un squelette hydrocarboné, par l'intermédiaire d'un carbone saturé ($sp^3$), de préférence avec au moins une, plus préférentiellement au moins deux des sous conditions ci- après :

  - au moins 1, avantageusement 2, desdits carbones saturés ($sp^3$) est porteur d'au moins 1, avantageusement 2 hydrogène(s), (en d'autres termes il a été trouvé que l'on obtenait de meilleurs résultats lorsque le carbone porteur de la fonction isocyanate était porteur d'un hydrogène, de préférence de 2 hydrogènes) ;
  - au moins 1, avantageusement 2, desdits carbones saturés ($sp^3$) sont eux-mêmes portés par un carbone, avantageusement aliphatique (c'est-à-dire d'hybridation $sp^3$), lui-même porteur d'au moins 1, avantageusement 2 hydrogène(s) ; en d'autres termes, il a été trouvé que l'on obtenait de meilleurs résultats lorsque le carbone porteur de la fonction isocyanate n'était en position dite "néopentylique".

- Tous les carbones par l'intermédiaire desquels les fonctions isocyanates sont reliées au squelette hydrocarboné, sont des carbones saturés ($sp^3$), lesquels sont avantageusement en partie, de préférence en totalité, porteurs d'un hydrogène, de préférence de 2 hydrogènes ; en outre, il est avantageux que lesdits carbones saturés ($sp^3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins 1, avantageusement 2 hydrogène(s) ; en d'autres termes, il a été trouvé que l'on obtenait de meilleurs résultats lorsque le carbone porteur de la fonction isocyanate n'était pas en position dite "néopentylique".
- Sont en particulier bien adaptés ceux qui présentent au moins en partie un squelette isocyanurique ou biuret (que ce squelette soit issu d'un seul ou de plusieurs monomères, voir ci-dessous) et plus précisément des structures de type isocyanurate, encore appelée trimère, des structures urétidinedione, encore appelée dimère, des structures biuret ou allophanate ou une combinaison de ce type de structures sur une seule molécule ou en mélange.

Lorsque les polyisocyanates sont relativement lourds c'est à dire qu'ils comportent au moins 4 fonctions isocyanates, les deux premières conditions deviennent :

- au moins 1/3, avantageusement 2/3, des fonctions NCO sont reliées à un squelette hydrocarboné, par l'intermédiaire d'un carbone saturé ($sp^3$) ;
- au moins 1/3, avantageusement 2/3, desdits carbones saturés ($sp^3$) est porteur d'au moins 1, avantageusement 2 hydrogène(s), en d'autres termes, il a été trouvé que l'on obtenait de meilleurs résultats lorsque le carbone porteur de la fonction isocyanate était porteur d'un hydrogène, de préférence de 2 hydrogènes ; en outre, il est avantageux que lesdits carbones saturés ($sp^3$) soient au moins en partie (avantageusement 1/3, de préférence 2/3), préférablement en totalité, eux-mêmes portés par un carbone, avantageusement aliphatique (c'est-à-dire d'hybridation $sp^3$), lui-même porteur d'au moins 1, avantageusement 2 hydrogène(s) ; en d'autres termes, il a été trouvé que l'on obtenait de meilleurs résultats lorsque le carbone porteur de la fonction isocyanate n'était pas en position dite "néopentylique".

Les isocyanates notamment aliphatiques peuvent réagir avec certains des composés anioniques visés par l'invention pour former des anhydrides; ces anhydrides sont susceptibles de redonner les composés de formule (II) et dans certains cas réagissent comme des isocyanates masqués :

- soit par élimination d'une molécule d'eau entre deux groupements fonctionnels anioniques et former ainsi une fonction de type E-O-E (c'est-à-dire une séquence pyrophosphorique dans le cas des phosphates) ;
- soit par addition de l'hydroxyle des fonctions acides non ou mal neutralisées, sur la fonction NCO pour former une fonction de séquence -NH-CO-O-E. Ces composés (anhydrides mixtes entre un acide carbamique et le groupement fonctionnel anionique) sont également visés par la présente invention. Ils rentrent souvent dans la définition des émulsifiants selon la présente invention.

Le premier cas correspond au cas ou la première acidité a été imparfaitement neutralisée. Les produits obtenus ont de bonnes propriétés tensioactives.

Il donne notamment des pyrophosphates ou des pyrophosphatoïdes de formule suivante (ce produit entre dans la formule générale des composés de l'invention) :

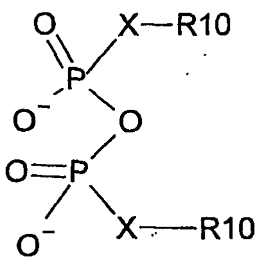

ou de formule :

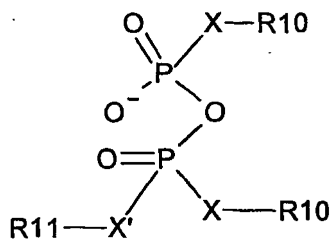

voire même de formule :

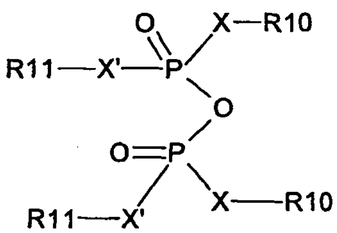

Le produit ci-dessus ne rentre pas directement dans la liste des composés visés par la présente invention mais en constituent un précurseur de ces composés par leur hydrolyse au contact de la phase aqueuse.

Le second cas conduit à partir de composés de formule (II) où E est phosphore où R11 est hydrogène et ou X' est un oxygène à des composés de formule :

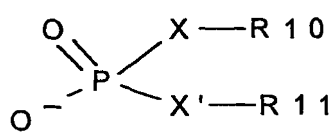

- où R11 est devenu -CO-NH-Iso ;
- où Iso est le reste d'un (poly)isocyanate (après élimination d'une fonction isocyanate).

En général, Iso est tel que Iso - NCO soit un oligomère d'isocyanate (voir description plus haut) et comporte au moins 2 fonctions isocyanates avantageusement 3 (en d'autres termes Iso comporte au moins une fonction isocyanate, avantageusement 2 en sus de celle qui a réagi).

Ainsi selon une variante avantageuse de la présente invention, les compositions selon la présente invention présente des composés issus de la réaction exposée ci-dessus dans une proportion globale, par rapport à un volume d'un litre d'isocyanate, de 0,01 à 1, avantageusement de 0,05 à 0,5, de préférence de 0,05 à 0,3 équivalent de groupement fonctionnel anionique, avantageusement phosphoré, de préférence phosphorique de formule (I) et même quand R11 représente

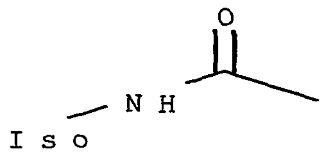

Il est avantageux que le radical Iso procure majoritairement ou en totalité un lien aliphatique avec les mêmes préférences que celles exposées ci dessus à propos des isocyanates.

Ainsi «Iso» représente le plus souvent le reste d'un oligoisocyanate, avantageusement d'un produit de réaction d'un monomère diisocyanate pour former des composé à fonctionnalité(s) biuret, urétidinedione, allophanate et/ou isocyanurate (trimère). Iso peut être un produit de réaction d'un monomère diisocyanate avec un di- ou poly-ol avantageusement un triol ou un tétra-ol. Toutefois dans derniers cas, les uréthannes produits sont de haute viscosité et se prêtent moins bien à une mise en émulsion.

Avantageusement Iso porte, outre la fonction figurée sur la formule au moins 1, de préférence au moins 2 fonctions isocyanates, dont, de préférence, au moins 1 n'est pas masquée, et dont, plus préférentiellement, au moins 2 ne sont pas masquées.

Un autre but de la présente invention est de fournir un procédé du type précédent qui permette de réaliser la mise en émulsion de la composition isocyanate visée ci dessus.

Un autre but de la présente invention est de fournir un procédé du type précédent qui permette de réaliser la mise en émulsion de la composition isocyanate en réduisant la formation de mousse.

Ce but, et d'autres qui apparaîtront par la suite, sont atteints au moyen d'un procédé de mise en émulsion qui comporte au moins l'étape suivante :

- ajout, avantageusement sous agitation très modérée (par exemple manuelle), des ou de l'isocyanate dans une phase aqueuse, telle que le mélange polyol + eau.

L'agent émulsifiant peut être soit dans la phase aqueuse, soit de préférence dans la phase isocyanate. Dans le premier cas les réactions entre isocyanate et groupement fonctionnel anionique sont en grande partie inhibée, mais on préfère le second cas.

Cette agitation est de préférence manuelle ou mécanique. Une agitation modérées suffit. Cette agitation modérée défavorise la formation de mousse. Mais, en sus de cet effet, au cours de l'étude qui a mené à la présente invention, il a été montré que toutes choses égales par ailleurs, la mise en émulsion conduit à une production de mousse bien moindre que ce qui est formé avec les émulsifiants usuels. Qui plus est, celle qui se forme n'est pas stable. Ceci rend l'émulsion utilisable plus rapidement.

Cette mise en émulsion est avantageusement menée à une température au plus égale à 50°C, de préférence à l'ambiante.

Il est souhaitable de réaliser, si nécessaire, un ajustement du pH (pour atteindre une valeur avantageusement au moins égale à 3, de préférence à 4 et avantageusement au plus égal à 11, de préférence à 10 et donc avantageusement comprise entre 3 et 11, de préférence entre 4 et 10, lors de la mise en émulsion. Cet ajustement permet d'atteindre une zone avantageuse où la première (ou unique) acidité de chaque agent émulsifiant selon la présente invention est neutralisée.

Selon une variante avantageuse de la présente invention, les pigments (et notamment le bioxyde de titane) sont dispersés dans le ou les polyols avant l'addition de l'isocyanate.

Les compositions selon la présente invention se prêtent bien à un masquage en dispersion auquel cas la phase aqueuse comporte un, ou plusieurs, agent(s) masquant(s), soit sous forme dissoute, soit sous forme de dispersion, soit

sous un mélange des deux formés. Cette technique a déjà été décrite dans des titres déposés au nom de la Demanderesse mais il est possible d'en rappeler les grandes lignes.

Le groupe masquant est la résultante de la réaction d'un composé ayant au moins un atome d'hydrogène réactif avec la fonction isocyanate des polyisocyanates tels que définis ci-dessus.

L'agent masquant, qui peut être un mélange d'agents masquants, est tel que la réaction de masquage puisse s'écrire :

Iso-N=C=O + AM-H --------> Is-NH-CO(AM)

- où AM-H représente l'agent masquant ;
- où AM- représente le groupe masquant ;
- où Iso est le reste porteur de la fonction isocyanate considérée.

Ledit agent masquant présente au moins une fonction portant un hydrogène mobile, ou plus exactement réactif, fonction pour laquelle on peut définir un pKa lequel correspond, soit à l'ionisation d'un acide, y compris l'hydrogène des fonctions, notamment oxime, phénols et alcools, soit à l'acide associé d'une base, en général azotée. Le pKa de la fonction présentant des hydrogènes est au moins égal à 4, avantageusement à 5, de préférence à 6 et est au plus égal à 14, avantageusement à 13, de préférence à 12, et de manière plus préférée à 10, une exception devant être faite pour les lactames dont le pKa est supérieur à ces valeurs et qui constituent des agents masquants néanmoins acceptables bien que non préférés pour l'invention.

Avantageusement, l'agent masquant ne comporte qu'un seul hydrogène mobile.

A titre d'exemples non limitatifs, des agents de masquage selon l'invention, on peut citer les dérivés de l'hydroxylamine tels que l'hydroxysuccinimide et les oximes telles tel que la méthyléthylcétoxime, les dérivés des phénols ou assimilés, les dérivés des amides tels les imides et les lactames, ainsi que les malonates ou cétoesters et les hydroxamates.

On peut également citer les groupes hétérocycliques azotés comprenant 2 à 9 atomes de carbone et, outre l'atome d'azote, de 1 à 3 autres hétéroatomes choisis parmi l'azote, l'oxygène et le soufre. On préfère en particulier les hétérocycles comportant de 2 à 4 atomes de carbone et de 1 à 3 atomes d'azote, tels les groupes pyrazolyle, imidazolyle et triazolyle, ces groupes étant éventuellement substitués par 1 à 3 substituants choisis parmi $NH_2$,NH(alkyle en $C_1$-$C_6$), N-(dialkyle en $C_1$-$C_6$), OH, SH, $CF_3$, alkyle en $C_1$-$C_6$, cycloalkyle en $C_3$-$C_6$, aryle en $C_5$-$C_{12}$, notamment phényle, aralkyle en $C_6$-$C_{18}$ ayant de 5 à 12 atomes de carbone dans le groupe aryle, notamment benzyle ou alkaryle en $C_6$-$C_{18}$ ayant de 5 à 12 atomes de carbone dans le groupe aryle.

Particulièrement préférés sont les groupes 1,2,3-triazolyle ou 1,2,4-triazolyle, ou 3,5-diméthyl-pyrazolyle.

Pour la détermination des pKa, on pourra se reporter à "Thé determination of ionisation constants, a laboratory manual, A. Albert of E.P. Serjeant ; Chapman and Hall Ltd, London".

Pour la liste des agents masquants, on pourra se reporter à Z. Wicks (Prog. Org. Chem., 1975, 3, 73 et Prog. Org. Chem., 1989, 9,7) et Petersen (Justus Liebigs, Annalen der Chemie 562, 205, (1949).

Les agents masquants sont avantageusement tel que la temperature le libération telle que mesurée par le test à l'ocatanol soit (bien sûr sans catalyseur) au moins égal à 100°C, de préférence à 120°C et au plus égal à 200°C, avantageusement à 180°C, plus préférentiellement 170°C .

Le, ou les, agent(s) de masquage utile(s) à la réaction de protection de la fonction isocyanate peuvent être hydrosolubles ou non. Même si elle n'est que partielle, cette hydrosolubilité rend aisé le procédé selon la présente invention.

S'ils sont suffisamment liquides pour se disperser facilement dans la phase aqueuse, il n'y a, là non plus, pas de difficulté; sinon il suffit d'ajouter un solvant pour le rendre suffisamment liquide. Ainsi pour les agents de masquage liquides, on pourra avoir un mélange homogène ou biphasique en fonction de l'hydrosolubilité de l'agent de masquage.

En ce qui concerne les produits solides et entièrement hydrosolubles à la température de réaction du mélange réactionnel, ils peuvent être utilisés tels quels.

Pour ce qui est des produits solides, qui ne sont que partiellement hydrosolubles à la température de réaction, on peut en général, les utiliser tels quels le cas échéant pour rendre le milieu réactionnel plus aisément agitable en ajoutant soit une petite quantité de solvant pour solubiliser l'agent protecteur (ce qui ramène à la question ci-avant des agents de masquage liquides), soit un tiers solvant (sensiblement inerte dans les conditions opérationnelles).

L'agent de masquage peut être introduit entièrement dans le pied du réacteur avec l'eau et le tensioactif. Il peut être également introduit de manière continue dans le milieu réactionnel en co-injection avec le polyisocyanate. Dans ce dernier cas, on travaillera de préférence avec une quantité d'agents de blocage (ou de masquage) dans le milieu réactionnel toujours suffisante pour pouvoir masquer la fonction isocyanate, éventuellement au fur et à mesure de son introduction lorsque cette dernière est progressive.

Dans tous les cas, on cherchera à avoir un rapport molaire (ou plus exactement un rapport en équivalent)

agent de masquage AM/fonction(s) isocyanate(s) qui, compte tenu des éventuels réactifs (compte non tenu de l'eau), a une valeur au moins égale à une valeur proche de la stoechiométrie, généralement il est compris entre 0,8 et 2, avantageusement entre 0,9 et 1,2 Q.S. (c'est-à-dire Quantité Stoechiométrique).

Mais dans le cas où l'agent de masquage peut être utilisé comme (co)solvant et qu'il est compatible avec l'émulsion, le rapport limite supérieur est largement supérieur à 2 et l'excès qui n'a pas réagi avec les fonctions isocyanates peut constituer jusqu'à 1/4 en masse de l'émulsion finale.

Pour favoriser la sélectivité de la réaction, on pourra ainsi introduire dans le milieu réactionnel des amines tertiaires ou tout catalyseur qui favorise la réaction de masquage de la fonction isocyanate par l'agent de masquage plus que la réaction des hydroxyles de l'eau avec les fonctions isocyanates.

Un autre but de la présente invention est de fournir un procédé d'application de la composition à base d'isocyanate pour former un revêtement.

Ce but, et d'autres qui apparaîtront par la suite, sont atteints au moyen d'un procédé comportant l'application d'une couche de préparation (c'est-à-dire de composition selon l'invention comportant la phase aqueuse et les constituants de la couche) dont l'épaisseur avant séchage est comprise entre 10 et 400 micromètres avantageusement entre 50 et 200 correspondant après séchage à une épaisseur comprise entre 5 et 150 micromètres, avantageusement entre 20 et 80 micromètres.

Selon une mise en oeuvre avantageuse, ce procédé comporte un séchage de 20°C à 60°C pendant une durée pouvant aller de 1/4 à 24 heures.

Avantageusement ce séchage a lieu en présence d'un solvant pour aider à l'élimination de l'eau..

Selon une mise en oeuvre particulièrement avantageuse de la présente invention, l'application est menée par pulvérisation.

Pour améliorer la réticulation les couches de revêtements (surtout peintures et vernis) sont soumises à une cuisson à une température allant de 80°C à 200°C pendant une durée d'au plus 3 heures, avantageusement de 1 minute à 1 heure.

Le bas de la fourchette de température correspond surtout à l'application à base de composition isocyanate non masquée ; cependant que le haut de la fourchette correspond à des isocyanates masqué par des agents masqués se libérant à haute température. A titre indicatif une cuisson à d'une demi-heure à une heure à 140°C correspond au démasquage d'agent masquant usuel en l'absence de catalyseurs. L'homme du métier sait adapter le temps de cuisson à la température choisie.

La préparation des surfaces est bien connue de l'homme de métier (par exemple phosphatations pour les composés ferreux acier ou chromatation pour les surfaces à base d'alumine). (On peut par exemple se référer aux ouvrages suivants : "organic coating technology" volume II de H.F. Payne et "Paint Handbook" édité par G.E.Weismantel).

Selon la présente invention, il est ainsi possible d'obtenir des revêtements (notamment peintures ou vernis) présentant les caractéristiques techniques (ces valeurs dépendent surtout des polyols utilisés) ci-après.

| mise en oeuvre et caractéristiques du revêtement Epaisseur sèche Iso2178 : 45 $\mu$m support et traitement de celui-ci : acier traité par phosphatation : plaques R461 du fournisseur Q Pannel | | |
|---|---|---|
| test DIN 67530 (ces valeurs n'ont d'intérêt que lorsque l'on désire une peinture brillante mais non lorsque l'on veut de la peinture mat ou satinée) | Propriétés obtenues<br>minimales | usuelle |
| Brillance 20°<br>60° | 0,5 | 80 |
| dureté König iso 1522 | 0,5 | 90 |
| Adhérence test DIN 53151 | 10s | 150s |
| Résistance aux chocs test N°iso 6272<br>direct | GT-1 | GT-5 |
| Inverse | 10 cm | >100 cm |
| Résistance à la méthyl-éthylcétone (butanone) (Double passage) | 5 cm | >100 cm |
| Tenue en extérieur QUV<br>DIN 53384 | 20 | >200 |

(suite)

| mise en oeuvre et caractéristiques du revêtement Epaisseur sèche Iso2178 : 45 μm support et traitement de celui-ci : acier traité par phosphatation : plaques R461 du fournisseur Q Pannel | | |
|---|---|---|
| test DIN 67530 (ces valeurs n'ont d'intérêt que lorsque l'on désire une peinture brillante mais non lorsque l'on veut de la peinture mat ou satinée) | Propriétés obtenues | |
| | minimales | usuelle |
| | 50 h | 800 h |

**TEST A L'OCTANOL - définitions**

| | |
|---|---|
| température de "libération" : (ou de "déblocage") | c'est la température la plus faible à laquelle l'agent de masquage de l'isocyanate masqué est déplacé à hauteur de 9/10 (arrondi mathématique) par un monoalcool primaire (l'alcool primaire est en général l'octanol). |
| durée de vie au stockage : | Pour s'assurer, une bonne durée de vie au stockage, il est préférable de choisir des fonctions isocyanates masquées dont le test à l'octanol montre une "libération" à 80°C, avantageusement à 90°C, au plus égale à 90%. |
| Avancement de la réaction : | On considère que la réaction est complète si elle est réalisée à plus de 90%. |

**MODE OPERATOIRE**

Dans un tube, type SCHOTT, avec agitation magnétique, on charge environ 5 mmol en équivalent NCO masqué protégé à évaluer.

On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge.

A Partir de ces données, on évalue le pourcentage de fonction isocyanate masquée condensée avec l'octanol-1.

Les exemples non limitatifs suivants illustrent l'invention.

**Exemple 1 : Description des émulsifiants utilisés**

Les émulsifiants utilisés comme exemples de la présente invention sont des esters phosphates de polyoxydes d'alkylène méthacrylate référencés TA1 et TA2 : TA1 est un ester phosphate de pentaéthylène glycol méthacrylate. TA2 est quant à lui un ester phosphate de pentapropylène glycol méthacrylate Le procédé d'obtention de TA1 et TA2 est décrit dans WO0174909, exemples 1 et 2 respectivement.

Dans la suite des exemples, les propriétés obtenues à partir des compositions à base de TA1 et TA2 seront comparées avec celles de compositions contenant des émulsifiants ester phosphates de polyoxydes d'éthylène à chaînes grasses alkyles (en C13) référencés TA3 et TA4. TA3 et TA4 diffèrent par le ratio monoester/diester. Les caractéristiques des émulsifiants sont données tableau I.

***Tableau I***

*Caractéristiques des émulsifiants utilisés dans les exemples de la présente invention*

| | **Nature** | **Nombre d'unités d'oxyde d'alkylène** | **Taux de diester** |
|---|---|---|---|
| TA1 | ester phosphate de pentaéthylène glycol monométhacrylate | **5** | **6%** |
| TA2 | ester phosphate de pentapropylène glycol monométhacrylate | **5** | **6%** |
| TA3 | ester phosphate de polyéthylène à chaîne grasse | **9** | **30%** |

(suite)

*Caractéristiques des émulsifiants utilisés dans les exemples de la présente invention*

| | Nature | Nombre d'unités d'oxyde d'alkylène | Taux de diester |
|---|---|---|---|
| TA4 | ester phosphate de polyéthylène à chaîne grasse | **9** | **10%** |

Il s'ensuit que si l'on se réfère aux formules de la description $nb_N$ et toujours zéro on obtient pour les divers paramètres et radicaux, les valeurs rassemblées dans le tableau ci-après (les TA sont réputés être sous forme acide) :

| | Groupe anionique | | | | | | Nombre d'alcoylènoxyle pour X-R10 | R10 | | | | | | | R10 : $(nb_c-4)/(nb_o+nb_N)$ | R11 |
|---|---|---|---|---|---|---|---|---|---|---|---|---|---|---|---|---|
| | E | m | p | q | x | X ' | | $nb_C$ | $nb_O$ | n | D1+D2 | R5 | Z1 | R1 | | |
| TA1 (Mn ≅395) | p | 1 | 1,94 | 0,06 | O | O | 5 | 14 | 6 | 4 | $H_2$ | Liaison simple | -O-CO- | Méthyl vinyle | 1,67 | R10 |
| TA2 (Mn≅469) | p | 1 | 1,94 | 0,06 | O | O | 5 | 19 | 6 | 4 | Un H et un $CH_3$ | Liaison simple | -O-CO- | Méthyl vinyle | 2,5 | = R10 |
| TA3 (Mn≅687) comparatif | P | 1 | 1,7 | 0,3 | O | O | 9 | 31 | 9 | 8 | $H_2$ | Liaison simple | -O- | tridécyle | 3 | R10 |
| TA4 (Mn≅596) comparatif | P | 1 | 1,9 | 0,1 | O | O | 9 | 31 | 9 | 8 | $H_2$ | Liaison simple | -O- | tridécyle | 3 | = R10 |
| Comp B[1)] (Mn≅501) | P | 1 | 1,85 | 0,15 | O | O | 6,5 | 20,2 | 7,1 | 5,5 | $H_2$ | Liaison simple | $O-(CO)_{0,63}$ | Nbde C : 6,7 | 2,28 | |
| Comp.C Min≅530 | P | 1 | 1,83 | 0,17 | O | O | 6,9 | 21,9 | 7,4 | 5,9 | $H_2$ | Liaison simple | $O-(CO)_{0,54}$ | Nb de C : 7,6 | 2,42 | |
| Comp E Mn≅429 | P | 1 | 1,94 | 0,06 | O | O | 5 | 16,3 | 6 | 4 | $H_{1,54}(CH_3)_{0,46}$ | Liaison simple | -O-CO -O-CO | Méthyl vinyle | 2,75 | = R10 |
| Comp F Mn≅557 | P | 1 | 1,84 | 0,16 | O | O | 6,6 | 23,9 | 7,2 | 5,6 | $H_{1,41}(CH_3)_{0,59}$ | Liaison simple | $O-(CO)_{0,59}$ | Nb de C : 7,1 | 3 | |

Les compositions B, C, E et F font partie de l'invention à deux titres : d'une part la formule moyenne rentre dans la formule de l'invention et d'autre par elles comportent au moins 40% d'un TA selon l'invention.

**Exemple 2 : Neutralisation des émulsifiants**

Les émulsifiants décrits Tableau I sont partiellement neutralisés par la diméthylcycloexylamine (DMCHA) avant d'être incorporés dans la composition de polyisocyanates (voir exemples suivants). Préalablement, la courbe de neutralisation des différentes acidités des composés ester phosphate par la soude est établie. La courbe de neutralisation permet de déterminer également le taux de diester contenu dans chacun des émulsifiants présentés Tableau I.

Les mesures consistent à prédiluer dans l'eau distillée les esters phosphates à 50%. Une prise d'essai (< 1 g) est ensuite ajoutée à 40 ml d'eau. Les acides sont ensuite neutralisés par une solution de soude 1 N au moyen d'un titrimètre. Les points d'inflexion des courbes en «S» donnent le volume de neutralisation des acidités successives correspondant aux acidités de l'acide phosphorique. La différence de pKa entre l'acide phosphorique et ses différents esters est faible, en général au plus de l'ordre d'une demi-unité de pKa, en sorte que les vagues de neutralisation peuvent, en première approximation, être considérées comme confondues. On peut toutefois mentionner que des techniques plus affinées permettent de distinguer de telles différences. Toutefois l'intérêt d'une telle mesure est faible.

Ainsi V1 est le volume de soude nécessaire à la première neutralisation (correspondant à la première acidité de l'acide phosphorique, acidité dont le pKa est au voisinage de 2-3) et correspond donc à la somme (en équivalent) des monoesters, des diesters et de l'acide phosphorique résiduel.

$$V1 = M + D + P$$

Ainsi V2 est le volume de soude nécessaire à la seconde neutralisation (correspondant à la seconde acidité de l'acide phosphorique pKa 7-8) et correspond donc à la somme (en équivalent) des monoesters, et de l'acide phosphorique résiduel.

$$V2 = M + P$$

$$V1 - V2 = D$$

Enfin V3 correspond au volume de soude nécessaire à la troisième neutralisation (troisième acidité de l'acide phosphorique pKa 12-13) et correspond donc (en équivalent) à l'acide phosphorique résiduel.

P=V3.
M=V2-V3

$$\text{Diester en pour cent (équivalent \%)} = \frac{(V_1 - V_2)}{V_1} \times 100$$

Le taux de DMCHA nécessaire pour neutraliser au moins la première acidité des différents ester phosphates peut ainsi être calculé. Le résultat est présenté Tableau I.I

***Tableau II***

*Taux de DMCHA utilisés pour la neutralisation de la première acidité des esters phoshates*

| | Taux de DMCHA (g/g d'émulsifiant) |
|---|---|
| TA1 | 0,31 |
| TA2 | 0,31 |
| TA3 | 0,22 |
| TA4 | 0,22 |

Le mélange émulsifiant + amine est réalisé à l'aide d'un agitateur type rouleau pendant 2 heures, puis est laissé à reposer pendant une nuit (12 h) à 23°C en flacons fermés.

## Exemple 3 : Préparation des polyisocyanates auto-émulsifiables

Les polyisocyanates dits «hydrophiles» (auto-émulsifiables) ont été préparés en ajoutant au polyisocyanate Tolonate®HDT (trimère d'HDI) les compositions d'émulsifiants partiellement neutralisés selon l'exemple 2 à différentes concentrations. Le Tableau III récapitule les compositions d'émulsifiants réalisées.

**Tableau III**

Compositions d'émulsifiants réalisés

| | Comp. A | Comp. B | Comp. C | Comp. D | Comp. E . | Comp. F | Comp. G (référence) |
|---|---|---|---|---|---|---|---|
| TA1 | 76,63 | 39,7 | 32* | 0 | 38,3 | | |
| TA2 | 0 | 0 | 0 | 76,63 | 38,3 | 39,7 | |
| TA3 | 0 | 39,7 | 48,1 | 0 | 0 | 39,7 | 40,38 |
| TA4 | 0 | 0 | 0 | 0 | | | 40,38 |
| DMCHA | 23,37 | 20,6 | 19,9 | 23,37 | 23,4 | 20,6 | 19,24 |
| *total* | *100* | *100* | *100* | *100* | *100* | *100* | *100* |

*Soit 40% en masse de TA1I(TA1+TA3)

La dissolution de l'émulsifiant dans les cas du composé TA2 se passe beaucoup plus difficilement que dans le cas du TA1 (présence d'agglomérats difficiles à disperser). Ce résultat confirme que les oxydes d'alkylène préférés dans le cadre de la présente invention sont les oxydes d'éthylène.

## Exemple 4 : Caractérisation des émulsions aqueuses de polyisocyanates

Les dispersions obtenues à partir des polyisocyanates auto-émulsifiables ont été caractérisées par mesure en granulométrie laser (granulomètre Malvern).

Le protocole d'essai utilisé consiste à prélever 5 g de chaque formule et de l'ajouter dans 45 g d'eau sous une agitation à 500 tr/mn avec une turbine à pales inclinées durant 3 mn.

L'analyse est ensuite faite dans les 10 min qui suivent de façon à minimiser les réactions entre les fonctions isocyanates et l'eau.

## Exemple 5 : Résultats des analyses granulométriques des émulsions de polyisocyanates utilisant TA1 comme agent d'émulsification

Le Tableau IV présente les résultats d'analyses granulométriques telles que décrites dans l'exemple 4 obtenus avec les compositions de polyisocyanates autoémulsifiables utilisant TA1 comme émulsifiant (voir description des émulsifiants Tableau III). Les résultats montrent que pour des taux supérieurs ou égaux à 8% en poids d'émulsifiants partiellement neutralisés (émulsifiants + amine) les émulsions obtenues sont stables, monopopulées et présentent des tailles faibles et une polydispersité étroite. A même taux massique, les résultats obtenus avec les compositions à base de TA1 sont donc meilleurs ou équivalents à ceux obtenus avec des compositions d'esters phosphates de polyoxydes d'alkylène à chaînes grasses possédant des masses moléculaires élevées (comp. G).

## Exemple 6 : Résultats des analyses granulométriques des émulsions de polyisocyanates utilisant TA2 comme agent d'émulsification

Le Tableau V présente les résultats d'analyses granulométriques telles que décrites dans l'exemple 4 obtenus avec les compositions de polyisocyanates auto-émulsifiables utilisant TA1 et TA2 comme émulsifiant (voir description des émulsifiants Tableau III).

Pour TA1 Les résultats montrent que pour des taux égaux ou supérieurs à 8% en poids d'émulsifiants partiellement neutralisés (émulsifiant TA1 +autres émulsifiants + amine) les émulsions obtenues sont stables, monopopulées et présentent des une polydispersité étroite.

Pour TA2 Les résultats montrent que pour des taux supérieurs ou égaux à 14% en poids d'émulsifiants partiellement neutralisés (émulsifiants + amine) les émulsions obtenues sont stables, monopopulées et présentent des une polydispersité étroite. Ce taux peut être significativement réduit dès lors que la composition d'émulsifiants utilisée contient en partie soit un ester phosphate de polyoxyde d'éthylène méthacrylate TA1, soit un ester phosphate de polyoxyde d'alkylène à chaîne grasse telle que TA3. Dans ce cas, les résultats obtenus en terme de taille et de distribution de taille

des particules sont équivalents à ceux obtenus avec des compositions à base d'esters phosphate de polyoxyde d'alkylène à chaînes grasses possédant des masses moléculaires élevées (comp. G).

Ainsi du point de vue de la simple autoémulsification, le TA1 présente des avantages très marqués par rapport au produit testé en comparaison. Le TA2, quant à lui, montrent de ce point de vue des qualités similaires et quoique beaucoup moins bonnes que le TA1. Il ne présente ainsi pas de perte de propriété d'autoémulsification par rapport au produit testé en comparaison.

**Tableau IV**

Caractéristiques des émulsions de polyisocyanates formulés à partir de TA1

| | Composition d'émulsifiants (%) | | | | | Nature de l'émulsion | Taille de particules (± 10 %) | | |
|---|---|---|---|---|---|---|---|---|---|
| Réf | Tolonate HDT ® | Comp.A | Comp. B | Comp. C | Comp. G (référence) | | $D_{10}$ (nm) | $D_{50}$ (nm) | $D_{90}$ (nm) |
| Exemple 5a | 95 | 5 | | | | Pas d'émulsion | | | |
| Exemple 5b | 92 | 8 | | | | monopopulée | 76 | 134 | 259 |
| Exemple 5c | 89 | 11 | | | | monopopulée | 68 | 114 | 195 |
| Exemple 5d | 86 | 14 | | | | monopopulée | 71 | 107 | 170 |
| Exemple 5e | 95 | | 5 | | | Pas d'émulsion | | | |
| Exemple 5f | 92 | | 8 | | | monopopulée | 71 | 119 | 200 |
| Exemple 5g | 89 | | 11 | | | monopopulée | 68 | 97 | 144 |
| Exemple 5h | 86 | | 14 | | | monopopulée | 68 | 96 | 142 |
| Exemple 5i | 95 | | | 5 | | bipopulée | 480 | 13100 | 55000 |
| Exemple 5j | 92 | | | 8 | | monopopulée | 72 | 122 | 207 |
| Exemple 5k | 89 | | | 11 | | monopopulée | 69 | z98 | 146 |
| Exemple 5l | 86 | | | 14 | | monopopulée | 71 | 112 | 182 |
| Exemple 5m | 89 | | | | 11 | monopopulée | 77 | 116 | 181 |

**Tableau V**

Caractéristiques des émulsions de polyisocyanates formulés à partir de TA2

| | Composition d'émulsifiants (%) | | | | | Nature de l'émulsion | Taille de particules (±10%) | | |
|---|---|---|---|---|---|---|---|---|---|
| Réf | Tolonate HDT | Comp. D | Comp. E | Comp. F | Comp. G (référence) | | $D_{10}$ (nm) | $D_{50}$ (nm) | $D_{90}$ (nm) |
| Exemple 6c | 89 | 11 | | | | bipopulée | 104 | 1850 | 7900 |
| Exemple 6d | 86 | 14 | | | | monopopulée | 4400 | 6700 | 10170 |
| Exemple 6f | 92 | | 8 | | | bipopulée | 2600 | 5250 | 11800 |

(suite)

Caractéristiques des émulsions de polyisocyanates formulés à partir de TA2

| | Composition d'émulsifiants (%) | | | | | Nature de l'émulsion | Taille de particules ($\pm$10%) | | |
|---|---|---|---|---|---|---|---|---|---|
| Réf | Tolonate HDT | Comp. D | Comp. E | Comp. F | Comp. G (référence) | | $D_{10}$ (nm) | $D_{50}$ (nm) | $D_{90}$ (nm) |
| Exemple 6g | 89 | | 11 | | | monopopulée | 67 | 95 | 140 |
| Exemple 6h | 86 | | 14 | | | monopopulée | 68 | 96 | 143 |
| Exemple 6j | 92 | | | 8 | | bipopulée | 80 | 130 | 2000 |
| Exemple 6k | 89 | | | 11 | | monopopulée | 76 | 114 | 172 |
| Exemple 6l | 86 | | | 14 | | monopopulée | 68 | 96 | 143 |
| Exemple 6m | 89 | | | | 11 | monopopulée | 77 | 116 | 181 |

**Exemple 7**

Cet exemple démontre que les émulsifiants décrits dans la présente invention, engendrent moins de mousse que les émulsifiants anioniques conventionnels (esters phosphates de polyoxyde d'alkylène à chaînes grasses) lors de mise en émulsion, ce qui présente un intérêt majeur lors des applications de vernis et peintures.

De façon à quantifier cet effet, l'expérience suivante a été réalisée : les compositions de polyisocyanates auto-émulsifiables référencées Exemple 5d et Exemple 5m de l'exemple 5 ont été mises en émulsion à hauteur de 20% massique dans l'eau sous agitation forte (agitateur mécanique à pales inclinées, vitesse de 300 trs/min pendant 5 min). 50 ml de l'émulsion sont ensuite transférés dans une éprouvette graduée. La hauteur de mousse est alors mesurée en fonction du temps. Les résultats sont présentés Tableau VI.

**Tableau VI**

Volume de mousse au repos générée lors de la mise en émulsion des compositions de polyisocyanate

| Composition de polyisocyanate | Volume de mousse au repos (ml) | | |
|---|---|---|---|
| | T0. | 10mn | 20mn |
| Exemple 5d | 90 | 65 | 55 |
| Exemple 5m | 90 | 80 | 75 |

Après quelques minutes de repos, le volume de mousse générée avec la composition de polyisocyanate à base de TA1 a significativement diminué comparé à la composition de polyisocyanate à base du mélange TA3/TA4. Ces résultats démontrent bien l'effet décrit ci-dessus.

**Exemple 8 : Evaluation du comportement en applications**

De façon à illustrer le comportement des compositions de polyisocyanates de la présente invention en vernis bicomposant, les formulations suivantes ont été réalisées.

Le polyol utilisé pour la réalisation des vernis est un polyol de type acrylique, Macrynal VSM 6299w/42wa de SOLUTIA (caractéristiques : Extrait sec= 42%, %OH = 4.02%).

La formulation pour la partie « A » (hydroxylée) est la suivante :

| | |
|---|---|
| Macrynal VSM 6299/42wa : | 91.8 g |
| Solvant aromatique: | 1.7 g |
| Eau déminéralisée : | 6.5 g |

% OH (masse de fonction = 17 g) calculée de la partie A totale : 1,58%

Les formulations des vernis sont présentées Tableau VII. Les compositions de polyisocyanates auto-émulsifiables utilisées sont les compositions de l'exemple 5 référencées Exemple 5d et Exemple 5m.

***Tableau VII***

*Composition des vernis bicomposants*

| Composition | | Formulation 8a | Formulation 8b |
|---|---|---|---|
| Partie A (hydroxyle) | | 69,4 | 70,3 |
| Partie B (isocyanate) | Exemple 5d | 22,7 | |
| | Acétate de méthoxypropyle | 7,9 | |
| | Exemple 5m | | 22 |
| | Acétate de méthoxypropyle | | 7,7 |
| | *total* | *100* | *100* |

Les formulations ont été réalisées en respectant un ratio NCO/OH de 1,5. La viscosité est réduite en ajoutant aux formulations 8a et 8b une quantité d'eau distillée de 14 g/100 g de formulation.

L'application est faite sur plaques de verre au tire-film manuel de 200 µm (épaisseur humide). Les vernis ont ensuite été réticulés à 60°C pendant 30 min, puis laissés en salle climatisée (23°C, 50% de HR).

Les films présentent des aspects très comparables (brillant). L'évolution de la dureté Persoz des deux types de film à 1 h et 24 h après la sortie de l'étuve est donnée Tableau VIII. Les données indiquent une reprise de dureté comparable entre les deux systèmes (les valeurs sont données à +/- 5%).

***Tableau VIII***

*Propriétés des films obtenus à partir des formulations 8a et 8b*

| Formulations de vernis | Dureté Persoz à 1 h après sortie d'étuve | Dureté Persoz à 24 h après sortie d'étuve |
|---|---|---|
| Formulation 8a | 214 | 322 |
| Formulation 8b | 191 | 319 |

**<u>Evaluation du comportement en adhérence directe</u>**

L'émulsifiant utilisé est le produit identifié sous la référence comp.A.

Le mélange isocyanate testé (exemple 5c) :

Tolonate HDT : 89%
Comp. A : 11%

**<u>Préparation des vernis et peintures :</u>**

Les polyisocyanates hydrophiles ont été testés dans des formules de vernis et peintures (primaires) bi-composants phase aqueuse.

Pour les vernis, la partie «A» (hydroxylée) a pour composition la formule suivante :

| | |
|---|---|
| Macrynal VSM 6299/42wa | : 91.8 |
| Solvesso 100 | : 1.7 g |
| Eau déminéralisée | : 6.5 g |

(% OH calculée de la partie A totale: 1,58%)

Le polyol Macrynal VSM 6299/42wa est une émulsion d'un polyol acrylique (extrait sec 42%) fourni par UCB. Le Solvesso 100 est un mélange de solvants aromatiques fourni par Exxon.

Les formulations utilisées pour les durcisseurs sont récapitulées ci-après.

Formulations de durcisseurs utilisés pour la réalisation de film

| | B1 | B2 |
|---|---|---|
| HDT + comp.G | 74 | |
| Ex 5c | | 74 |
| Acétate de méthoxypropyle (AMP) | 26 | 26 |
| Total | 100 | 100 |
| % NCO calculé | 13,6 | 14,2 |

Les vernis sont formulés en respectant un rapport fonctionnel NCO/OH de 1,5. La viscosité de la formulation est ajustée par un rajout d'eau distillée. Le ci-après donne les compositions des vernis ainsi obtenus.

**Tableau: compositions des formulations de vernis**

| Type durcisseur | B1 Comparatif | B2 invention |
|---|---|---|
| **masse partie A** | 69.4g | 70.3 g |
| **masse durcisseur** | 30.6 g | 29.7 g |
| **Ajout d'eau** | 14 g | 14 g |

Les applications sont menées dans les conditions suivantes :

- épaisseur : 200 µm humide. (tire-film manuel)
- évaporation 15 min à Tamb et réticulation thermique 30 min à 60°C

Les plaques sont ensuite laissées en salle climatisée (23°C, 50% de HR) avant caractérisation.
Sur les plaques de verre, l'adhérence est évaluée par la méthode du quadrillage (norme ISO 2409)

***Résultats***

Les résultats des mesures d'adhérence sur verre des plaques de vernis sont récapitulés ci-après. Les résultats parlent d'eux mêmes

Résultats des mesures d'adhérence (test du quadrillage des vernis 2K PU phase aqueuse sur verre

| Référence de l'essai | Evaluation quadrillage |
|---|---|
| comparatif B1 | 5 |
| Invention B2 | 1 |
| 0 : bonne adhérence ; 5 : mauvaise adhérence | |

**Exemple 9 : Adhérence sur métaux du primaire sans traitement préalable**

Pour les peintures (primaires), polyol a pour composition :

| Ingrédients | Composition % |
|---|---|
| Polyol acrylique Taux massique d'OH (M.M. 17) : 2,26% Fonctionalité de ~7 | 22,3 |
| Pâte pigmentaire | 62,42 |

(suite)

| Ingrédients | Composition % |
|---|---|
| Additifs | 1.1 |
| Total | 89,82 |

La composition de la partie *durcisseur* est donnéee ci-après :

**Tableau 5**

| Composition des durcisseurs utilisés pour la formulation des primaires | | |
|---|---|---|
| | **B3 comparatif** | **B4 invention** |
| HDT + comp.G | 80 | |
| Ex 5c | | 80 |
| AMP | 20 | 20 |
| Total | 100 | 100 |

Le rapport fonctionnel NCO/OH est fixé à 1,4. La viscosité de la peinture est ajustée à 30s environ à la coupe DIN4 par ajout d'eau distillée.
Les peintures sont ensuite appliquées au pistolet basse pression (épaisseur sèche 70 μm) sur des plaques acier R46 et aluminium AL46 préalablement nettoyées avec un chiffon imbibé de MEK puis rincées à l'acétate d'éthyle.
Les peintures testées sont réticulées 30 min à 60°C après 15 min de flash off à température ambiante, puis laissées 7 jours à 23°C et à 50% d'humidité relative avant d'être testées.
Les mesures menées sur les différents systèmes sont :

- Sur les plaques d'acier et d'aluminium, la mesure de l'adhérence par la méthode d'arrachement de plot (norme ISO 4624) avant et après immersion dans l'eau DI à 25°C en bac Ford pendant 24 h. Pour cela, les plaques sont préparées de la manière suivante :

  1) Application sur la surface peinte d'un carré de 50 x 50 $mm^2$ de support téflonisé adhésif percé en son centre d'un trou de 14 mm de diamètre (support téflonisé sur une face, collant sur l'autre face, et d'épaisseur de 170 μm
  2) Collage de plots cylindriques en acier de 17 mm de diamètre à l'aide d'une colle structurale référence Scotch-weld 9323 B/A de la société 3M)
  3) Réticulation de l'adhésif structural pendant 24 h à 23°C, 50% d'humidité relative

L'adhérence est ensuite évaluée par mesure de la force d'arrachement des plots à l'aide d'un dynamomètre de type Inströn 1185.

| Substrat | charge à la rupture en newton Avant et après immersion | | | |
|---|---|---|---|---|
| | B3 comparatif | | B4 invention | |
| | Avant | après | Avant | après |
| Aluminium | ~190 | ~70 | ~200 | ~130 |
| Acier | ~400 | ~60 | ~400 | ~110 |

L'immersion pendant 24 h dans l'eau fait chuter les propriétés d'adhérence des films de peinture, du fait du gonflement du matériau par l'eau et la destruction de l'interphase métal/revêtement. Toutefois, il est clairement observé une amélioration des propriétés d'adhérence des peintures réalisées avec le durcisseur Selon la présente invention en comparaison au matériau obtenu avec le produit commercial comparatif, avant et après immersion et ce que ce soit sur acier ou aluminium (facteur 2 sur la force maximale à la rupture). Ces résultats confirment les conclusions obtenues précédemment sur l'amélioration des propriétés d'adhésion/adhérence avec la présente invention.

**Revendications**

**1.** Composition à base d'isocyanate(s), avantageusement non complètement masqué(s), **caractérisée par le fait qu'**elle comporte au moins un composé émulsifiant présentant un groupement fonctionnel anionique et une chaîne polyoxygénée dont le nombre de carbone est au plus égal à 25, avantageusement à 20, répondant à la formule (II) ci-après :

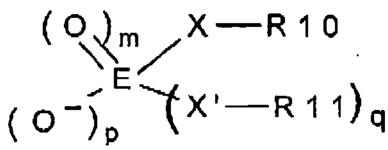

formule II

- où E est un des atomes des colonnes VB (colonne du phosphore) et VIB (colonne du soufre) d'une période au moins égale à la troisième et au plus égale à la cinquième, voir un atome de carbone ;
- où X représente une liaisons simple, un oxygène, voire un azote avantageusement substitué ; lequel substituant est avantageusement un radical hydrocarboné, de préférence aryle ou alcoyle, voire acyle ; et porte la liaison ouverte pour rattacher ledit groupe anionique au reste de la molécule ;
- où X' est choisi parmi une liaison simple ou un métalloïde, et notamment et avantageusement un chalcogène (avantageusement oxygène) ; voire un azote, avantageusement substitué ; lequel substituant est avantageusement un radical hydrocarboné, de préférence aryle ou alcoyle, voire acyle ;
- où R10 représente une chaîne polyoxygénée comportant au moins deux motifs alcénylaxyles et au plus huit motifs alcényloxyles, les dits motifs alcényloxyles étant choisis parmi les motifs propylènoxyles [$-CH_2-CH(CH_3)-O-$] et les motifs éthylènyloxyles [$-CH_2-CH_2-O-$], ces derniers motifs étant avantageusement en nombre au moins égal à celui des propylénoxyles ;
- où R11 représente un hydrogène; une autre chaîne polyoxygénée identique à ou différent de R10 ; un groupe hydrocarboné (avantageusement d'au plus 5, de préférence d'au plus 3 atomes de carbone), ou une liaison simple assurant une liaison avec un autre groupement fonctionnel anionique identique ou différent ;
- où q est choisi dans l'intervalle allant de zéro à 1;
- où p est choisi entre 1 et 2 (intervalles fermés, c'est-à-dire comprenant les bornes) ;
- où m est choisi entre zéro et 2 (intervalles fermés, c'est-à-dire comprenant les bornes)

et avec les conditions que

- le nombre de carbone de ladite chaîne R10 soit relié au nombre d'oxygène et éventuellement au nombre d'azote par la relation suivante :

$$nb_C \leq a.(nb_O+nb_N)+4\ ;$$

avec $nb_C$ représentant le nombre d'atomes de carbone de ladite chaîne ;
avec $nb_N$ représentant le nombre d'atomes d'azote de ladite chaîne ;
avec $nb_O$ représentant le nombre d'atomes d'oxygène de ladite chaîne ;
le facteur «a» étant inférieur à 3, avantageusement au plus égal à 2,5 et de préférence à 2,3;
- et la ou les chaine (s) polyoxygénée (s) de R10 et éventuellement R 11 répond (ent) à la formule (III) suivante :

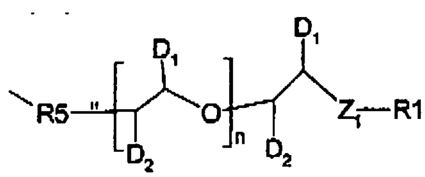

où le radical polyvalent R5 fait partie de la chaîne polyoxygénée et assure la liaison entre la chaîne et un, deux, voire trois groupements fonctionnels anioniques ;

où n est un entier choisi entre 0 et 7 avantageusement entre 2 et 6, de préférence entre 3 et 5 (intervalles fermés c'est à dire comprenant les bornes) ;

où les valeurs de $D_1$ et $D_2$ peuvent être différentes selon les chaînons et sont choisies parmi les méthyles et les hydrogènes et ne peuvent être simultanément méthyle; la somme des atomes de carbone des différents $D_1$ et $D_2$ étant au plus égale à n/2, avantageusement à n/4, tous les $D_1$ et $D_2$ étant avantageusement l'hydrogène;

où $Z_1$ est un groupe divalent choisi parmi les atomes d'oxygène (formant fonction éther) ou d'azote (azote avantageusement non porteur d'hydrogène), les fonctions divalentes carbonyloxyles [-O-CO- ou -CO-O- comme dans les esters], amides [-N -CO- ou -CO-N-] y compris uréthane ou urée, et parmi les groupes carbonés divalents d'au plus 6 carbones porteurs à chaque extrémité de fonctions choisies parmi les fonctions éther, amine avantageusement non porteuse d'hydrogène, carbonyloxyles (O-CO-) ou oxylcarbonyles (-CO-O-) (telle qu'ester), amide avantageusement non porteur d'hydrogène, voire cétone ou aldéhyde

où $R_1$ représente ledit groupe terminal avantageusement lipophile et est choisi parmi l'hydrogène et les radicaux hydrocarbonés, avantageusement choisi parmi les alcoyles éventuellement substitués, voire les aryles.

la partie Z1-R1 comportant une double liaison.

2. Composition selon la revendication 1, **caractérisée par le fait que** ledit composé comporte au plus trois groupements fonctionnels anioniques, avantageusement au plus deux, et de préférence un.

3. Composition selon la revendication 1 ou 2, **caractérisée par le fait que** le composé présentant un groupement fonctionnel anionique répond à la formule (II) précitée dans laquelle $Z_1$ est choisi parmi un radical

- oxycarbonyle
- amide
- O-CO-CH=CH-CO-O
- O-CO-$C(CH_3)$=CH-CO-O
- O-CO-C(=$CH_2$)-$CH_2$-CO-O
- O-
- oxycarbonyloxyle
- -O-$CH_2$-CH(OCO-CH=$CH_2$)-$CH_2$-O- CO-

et R1, avantageusement d'au plus 8 atomes de carbone, est choisi parmi :

- les vinyles, éventuellement substitués notamment méthylvinyle et phénylvinyle ;
- les alcoyles légers d'au plus 8 atomes de carbone, notamment méthyle, éthyle, propyles ou butyles ;
- le vinylphényle (-Φ-CH=$CH_2$) ;
- l'hydrogène.

4. Composition selon l'une des revendications 1 à 3, **caractérisée par le fait que** l'acide associé du groupement fonctionnel anionique présente avantageusement une acidité de pKa au plus égal à 5 de préférence à 3.

5. Composition selon l'une des revendications 1 à 4, **caractérisée par le fait que** le composé présentant un groupement fonctionnel anionique répond à la formule (II) précitée dans laquelle E est le phosphore.

6. Composition selon les revendications 1 à 5, **caractérisée par le fait que** le contre cation du ou des groupements fonctionnels anioniques est choisi parmi les amines, avantageusement tertiaires.

7. Composition selon les revendications 1 à 6, **caractérisée par le fait qu'**elle comporte en outre un catalyseur, avantageusement latent.

8. Composition selon les revendications 1 à 7, **caractérisée par le fait que** le rapport massique entre l'émulsifiant et les isocyanates est au moins égal à 2% et au plus égal à 20%, et avantageusement compris entre 4 et 10%.

9. Composition selon les revendications 1 à 8, **caractérisée par le fait qu'**elle comporte en outre un polyol.

**10.** Composition selon les revendications 1 à 9, **caractérisée par le fait qu'**elle comporte en outre un polyol en dispersion ou solution dans la phase aqueuse c).

**11.** Composition selon la revendication 10, **caractérisée par le fait que** ledit polyol est un nanolatex.

**12.** Composition selon la revendication 11, **caractérisée par le fait que** ledit polyol est un nanolatex présentant les caractéristiques suivantes :

- $d_{50}$ compris entre 15 et 60 nm ;
- fonction carboxylate de 0, 5 à 5% en masse ;
- fonction ol : entre 1 et 3% ;
- taux de solide : entre 25 et 40% ;
- un $d_{80}$ inférieur à 1 micromètre.

**13.** Composition selon les revendications 1 à 12, **caractérisée par le fait que** ladite composition est une émulsion d'isocyanate dans l'eau qui présente un $d_{50}$. préférentiellement un $d_{80}$ inférieur ou égal (au plus égal à) à 3, de préférence à 1 µm.

**14.** Composition selon les revendications 1 à 13, **caractérisée par le fait qu'**elle constitue une émulsion de type huile dans eau de teneur en eau de 10 à 70%.

**15.** Composition selon les revendications 1 à 14, **caractérisée par le fait que** la teneur en isocyanate + émulsifiant + alcool, est comprise dans l'intervalle fermé allant de 30 à 70%.

**16.** Procédé de préparation d'un revêtement, **caractérisé par le fait qu'**il comporte l'étape suivante :

α) mise en émulsion d'une composition selon les revendications 1 à 8 par ajout de la composition isocyanate a) et du composé émulsifiant b) dans la phase aqueuse c).

**17.** Procédé selon la revendication 16, **caractérisé par le fait que** l'adjonction se fait sous agitation manuelle ou mécanique.

**18.** Procédé selon les revendications 16 ou 17, **caractérisé par le fait qu'**il est réalisé à température au plus égale à 50°C avantageusement à l'ambiante.

**19.** Procédé selon les revendications 16 à 18, **caractérisé par le fait que** l'on ajuste le pH de la phase aqueuse à une valeur au moins égale à 3 avantageusement valeur au moins égale à 4.

**20.** Procédé selon les revendications 16 à 19, **caractérisé par le fait que** la phase aqueuse contient un ou plusieurs alcools notamment au moins un polyol.

**21.** Procédé selon les revendications 16 à 20, **caractérisé par le fait que** les pigments sont dispersés dans le ou les polyols avant l'addition de l'isocyanate.

**22.** Procédé selon les revendications 16 à 21, **caractérisé par le fait que** la phase aqueuse contient un ou plusieurs agents masquants.

**23.** Procédé selon les revendications 16 à 22, **caractérisé par le fait qu'**il comporte en outre l'étape suivante :

β) l'application de la composition issue de α) sous la forme d'une couche d'une épaisseur avant séchage comprise dans l'intervalle fermé (c'est-à-dire contenant les bornes) allant de 10 à 400 micromètres, avantageusement entre 50 et 200 correspondant après séchage à une épaisseur comprise entre 5 et 150 micromètres, avantageusement entre 20 et 80 micromètres.

**24.** Procédé selon les revendications 16 à 23, **caractérisé par le fait que** la couche est appliquée par pulvérisation, ou au moyen d'applicateur à tige filetée.

**25.** Procédé selon les revendications 16 à 24, **caractérisé par le fait qu'**il comporte l'étape suivante :

γ) un séchage de 20°C à 50°C pendant 1/4 et 3 heures.

**26.** Procédé selon les revendications 16 à 25, **caractérisé par le fait qu'**il comporte l'étape suivante :

δ) une cuisson à une température allant de 80°C à 200°C pendant une durée d'au plus 3 heures, avantageusement de 1 minute à 1 heure.

**27.** Utilisation pour réaliser un revêtement d'une composition à base d'isocyanate(s) selon l'une des revendications 1 à 15.

**28.** Utilisation selon la revendication 27 **caractérisée en ce que** le revêtement est un revêtement à adhérence directe.

**29.** Utilisation selon la revendication 27 ou 28, **caractérisée par le fait que** ledit agent émulsifiant comporte une chaîne polyoxygénée dont le nombre de carbone est d'au moins 4.

**30.** Utilisation selon la revendication 27 à 29, **caractérisée par le fait que** le ledit revêtement est un revêtement primaire, de base, ou de finition sans qu'il n'y ait de couche de conversion.

**31.** Utilisation selon la revendication 27 à 29, **caractérisée par le fait que** le ledit revêtement est un revêtement dit « de finition » sans qu'il n'y ait de primaire.

**32.** Utilisation selon la revendication 27 à 29, **caractérisée par le fait que** le ledit revêtement est un revêtement dit de base sans qu'il n'y ait de primaire.

**33.** Utilisation selon la revendication 27 à 29, **caractérisée par le fait que** le ledit revêtement est un revêtement dit de base sans qu'il n'y ait de primaire ni de couche de conversion.

**34.** Utilisation selon les revendications 27, 28, 29, 30 ou 33 **caractérisée par le fait que** le ledit revêtement continent des composés qui, utilisés seuls, sont connus pour assurer la conversion (par exemple chromate double de zinc et de potassium, chromate de plomb).

**35.** Utilisation selon les revendications 27 à 34, **caractérisée par le fait que** ledit revêtement contient des composés aciculaires et/ou phylliteux.

**36.** Utilisation selon les revendications 27 à 35, **caractérisée par le fait que** le ledit revêtement est réalisé sur un substrat choisi parmi les verres et les métaux.

**37.** Utilisation selon les revendications 27 à 36, **caractérisée par le fait que** ledit groupement fonctionnel anionique est avantageusement choisi parmi les groupements fonctionnels anioniques oxygénés.

**38.** Utilisation selon les revendications 27 à 37, **caractérisée par le fait que** le nombre de carbones de la chaîne polyoxygénée est tel qu'il répond à la relation :

$$nb_C \geq b(nb_O + nb_N) + 1$$

- avec le facteur «b» au moins égal à 1, avantageusement à 1,5, de préférence à 1,7.

**39.** Utilisation selon les revendications 27 à 38, **caractérisée par le fait que** ladite chaîne polyoxygénée comportent au total, au moins 3, de préférence
au moins 4 motifs alcényloxyles (

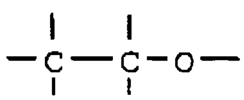

).

**40.** Utilisation selon les revendications 27 à 39, **caractérisée par le fait que** Les fragments d'(oligo-)oxyde(s) d'alcène de ladite chaîne comportent avantageusement au plus 7 motifs alcényloxyles (

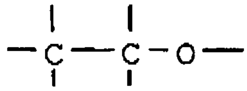

).

**41.** Utilisation selon les revendications 27 à 40, **caractérisée par le fait que** le(s) dit(s) composé(s) présente(nt) une double solubilité ; d'une part en phase aqueuse et d'autre part en phase isocyanate, la solubilité en phase organique et en phase aqueuse étant avantageusement au moins égale à 5 % massique.

**42.** Utilisation selon les revendications 27 à 41, **caractérisée par le fait que** dans la formule (I) E est un atome de la colonne VB.

**43.** Utilisation selon les revendications 27 à 42, **caractérisée par le fait que** dans la chaîne polyoxygénée R10, avantageusement dans ledit composé de formule (II), le rapport entre le nombre de motifs éthylènyloxyles et le nombre de motifs alcényloxyles, est au moins de 2/3, avantageusement de 3/4, de préférence de 100%.

**44.** Utilisation selon les revendications 27 à 43, **caractérisée par le fait que** le(s)dit(s) composé(s) présentant un groupement fonctionnel anionique comporte(nt) au moins une double liaison (carbone=carbone) activée :

- ■ soit par un atome donneur [azote ou oxygène comme dans le cas des N-vinyle ou des éthers ou ester vinylique] ;
- ■ soit par un groupe électroattracteur notamment carbonyle, phosphonique ou nitrile ;
- ■ soit par une double liaison ou un aryle.

**45.** Utilisation selon les revendications 27 à 44, **caractérisée par le fait que** le groupe terminal R1, est un groupe hydrocarboné comportant au moins un avantageusement deux carbones avec la condition préférentielle que lorsque la limite du groupe terminal est un oxygène engagé dans une fonction éther, ledit groupe terminal comporte au plus huit carbones, de préférence au plus six carbones.

**46.** Utilisation selon les revendications 27 à 45, **caractérisée par le fait que** ledit groupe terminal comporte au plus huit carbones, de préférence au plus six carbones.

**47.** Utilisation selon les revendications 27 à 46, **caractérisée par le fait que** les dits groupes carbonés divalents portent une double liaison avantageusement -conjuguée avec au moins un des fonctions formant extrémité du dit groupe.

**48.** Utilisation selon les revendications 27 à 47, **caractérisée par le fait que** ledit agent d'émulsification comporte deux ou plusieurs composés de formule (II) dans lesquels E a la même valeur et dans laquelle formule (II) les valeurs m, n, p et/ou q sont des valeurs statistiques et sont susceptibles d'être fractionnaires.

## Claims

**1.** Composition based on isocyanate(s), which are advantageously not completely masked, **characterized in that** it comprises at least one emulsifying compound having an anionic functional grouping and a polyoxygenated chain, the number of carbon atoms of which is at most equal to 25, advantageously to 20, corresponding to the following formula (II):

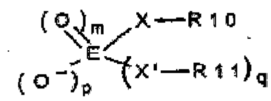

formula II

- where E is one of the atoms of columns VB (phosphorus column) and VIB (sulfur column) of a period at least equal to the third and at most equal to the fifth, or a carbon atom;
- where X represents a single bond, an oxygen, or an advantageously substituted nitrogen; which substituent is advantageously a hydrocarbon radical, preferably aryl or alkyl, or acyl; and carries the open bond for attachment of the said anionic group to the remainder of the molecule;
- where X' is chosen from a single bond or a metalloid, and in particular and advantageously a chalcogen (advantageously oxygen); or an advantageously substituted nitrogen; which substituent is advantageously a hydrocarbon radical, preferably aryl or alkyl, or acyl;
- where R10 represents a polyoxygenated chain containing at least two alkenyloxy radicals and at most eight alkenyloxy radicals, the said alkenyloxy radical being chosen from the propylenoxy radicals [$-CH_2-CH(CH_3)-O-$] and the ethylenoxy radicals [$-CH_2-CH_2-O-$], the latter radicals being advantageously at least equal in number to the number of propylenoxy radicals;
- where R11 represents a hydrogen; another polyoxygenated chain identical to or different from R10; a hydrocarbon group (advantageously having at most 5, preferably at most 3 carbon atoms), or a single bond establishing a bond with another identical or different anionic functional grouping;
- where q is chosen from the range from zero to 1;
- where p is chosen between 1 and 2 (inclusive ranges, that is to say including the limits);
- where m is chosen between zero and 2 (inclusive ranges, that is to say including the limits) and with the conditions that
- the number of carbon atoms of the said chain R10 is associated with the number of oxygen atoms and, where appropriate, with the number of nitrogen atoms by the following relationship:

$$nb_C \leq a.(nb_O + nb_N) + 4;$$

where $nb_c$ represents the number of carbon atoms of the said chain;
where $nb_N$ represents the number of nitrogen atoms of the said chain;
where $nb_o$ represents the number of oxygen atoms of the said chain;
the factor "a" being less than 3, advantageously at most equal to 2.5 and preferably to 2.3;
- and the polyoxygenated chain(s) of R10 and, where appropriate, R11 correspond(s) to the following formula (III):

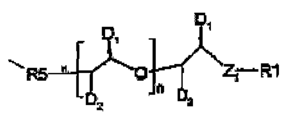

where the polyvalent radical R5 forms part of the polyoxygenated chain and establishes the bond between the chain and one, two, or three anionic functional groupings;
where n is an integer chosen between 0 and 7, advantageously between 2 and 6, preferably between 3 and 5 (inclusive ranges, that is to say including the limits);
where the values of $D_1$ and $D_2$ can be different with respect to the chain members and are chosen from methyl radicals and hydrogen radicals and cannot simultaneously be methyl; the sum of the carbon atoms of the various $D_1$ and $D_2$ being at most equal to n/2, advantageously to n/4, all the $D_1$ and $D_2$ advantageously being hydrogen;
where $Z_1$ is a divalent group chosen from oxygen atoms (forming an ether function) or nitrogen atoms (nitrogen advantageously not carrying hydrogen), divalent carbonyloxy functions [-O-CO- or -CO-O-, as in esters], amides [-N-CO- or -CO-N-], including urethane or urea, and from the divalent carbon-containing groups having at most 6 carbon atoms carrying at each end functions chosen from ether, amine, advantageously not carrying hydrogen, carbonyloxy (O-CO-) or oxycarbonyl (-CO-O-) (such as ester), amide, advantageously not carrying hydrogen, or ketone or aldehyde functions
where R1 represents the said terminal group, which is advantageously lipophilic and is chosen from hydrogen

and hydrocarbon radicals, advantageously chosen from optionally

substituted alkyl radicals, or aryl radicals, the $Z_1$-R1 moiety containing a double bond.

2. Composition according to claim 1, **characterized in that** the said compound contains at most three anionic functional groupings, advantageously at most two, and preferably one.

3. Composition according to claim 1 or 2, **characterized in that** the compound has an anionic functional grouping corresponding to the abovementioned formula (II) in which $Z_1$ is chosen from an

- oxycarbonyl
- amide
- O-CO-CH=CH-CO-O
- O-CO-$C(CH_3)$=CH-CO-O
- O-CO-C(=$CH_2$)-$CH_2$-CO-O
- -O-
- oxycarbonyloxy
- -O-$CH_2$-CH(OCO-CH=$CH_2$)-$CH_2$-O-CO- radical and R1, advantageously having at most 8 carbon atoms, is chosen from:
- optionally substituted vinyl radicals, in particular methylvinyl and phenylvinyl;
- lower alkyl radicals having at most 8 carbon atoms, in particular methyl, ethyl, propyl radicals or butyl radicals;
- vinylphenyl (-Φ-CH-$CH_2$);
- hydrogen.

4. Composition according to one of claims 1 to 3, **characterized in that** the acid associated with the anionic functional grouping advantageously has an acidity of pKa of at most equal to 5, preferably to 3.

5. Composition according to one of claims 1 to 4, **characterized in that** the compound has an anionic functional grouping corresponding to the abovementioned formula (II) in which E is phosphorus.

6. Composition according to claims 1 to 5, **characterized in that** the counter-cation of the anionic functional grouping (s) is chosen from amines, advantageously tertiary amines.

7. Composition according to claims 1 to 6, **characterized in that** it also comprises a catalyst, advantageously a latent catalyst.

8. Composition according to claims 1 to 7, **characterized in that** the weight ratio between the emulsifier and the isocyanates is at least equal to 2 % and at most equal to 20 %, and is advantageously between 4 and 10 %.

9. Composition according to claims 1 to 8, **characterized in that** it also comprises a polyol.

10. Composition according to claims 1 to 9, **characterized in that** it also comprises a polyol in dispersion or solution in the aqueous phase c).

11. Composition according to claim 10, **characterized in that** the said polyol is a nanolatex.

12. Composition according to claim 11, **characterized in that** the said polyol is a nanolatex having the following characteristics:

- $d_{50}$ of between 15 and 60 nm;
- carboxylate function of from 0.5 to 5 % by weight;
- ol function: between 1 and 3 %;
- solids content : between 25 and 40 % ;
- a $d_{80}$ of less than 1 micrometre.

13. Composition according to claims 1 to 12, **characterized in that** the said composition is an emulsion of isocyanate in water which has a $d_{50}$, preferably a $d_{80}$, of less than or equal (or at most equal) to 3, preferably to 1 μm.

**14.** Composition according to claims 1 to 13, **characterized in that** it constitutes an emulsion of the oil in water type having a water content of from 10 to 70 %.

**15.** Composition according to claims 1 to 14, **characterized in that** the content of isocyanate + emulsifier + alcohol is in the inclusive range of from 30 to 70 %.

**16.** Process for the preparation of a coating, **characterized in that** it comprises the following stage:

α) emulsification of a composition according to claims 1 to 8 by addition of the isocyanate composition a) and of the emulsifying compound b) into the aqueous phase c).

**17.** Process according to claim 16, **characterized in that** the addition is carried out under manual or mechanical stirring.

**18.** Process according to claims 16 or 17, **characterized in that** it is carried out at a temperature of at most equal to 50 °C, advantageously at ambient temperature.

**19.** Process according to claims 16 to 18, **characterized in that** the pH of the aqueous phase is adjusted to a value of at least equal to 3, advantageously a value of at least equal to 4.

**20.** Process according to claims 16 to 19, **characterized in that** the aqueous phase contains one or more alcohols, in particular at least one polyol.

**21.** Process according to claims 16 to 20, **characterized in that** the pigments are dispersed in the polyol(s) before addition of the isocyanate.

**22.** Process according to claims 16 to 21, **characterized in that** the aqueous phase contains one or more masking agents.

**23.** Process according to claims 16 to 22, **characterized in that** it also comprises the following stage:

β) application of the composition resulting from α) in the form of a layer having a thickness before drying in the inclusive range (that is to say containing the limits) of from 10 to 400 micrometres, advantageously between 50 and 200 micrometres, corresponding after drying to a thickness of between 5 and 150 micrometres, advantageously between 20 and 80 micrometres.

**24.** Process according to claims 16 to 23, **characterized in that** the layer is applied by spraying, or by means of a threaded rod applicator.

**25.** Process according to claims 16 to 24, **characterized in that** it comprises the following stage:

γ) drying at from 20 °C to 50 °C for 3 1/4 hours.

**26.** Process according to claims 16 to 25, **characterized in that** it comprises the following stage:

δ) baking at a temperature of from 80 °C to 200 °C for a period of at most 3 hours, advantageously from 1 minute to 1 hour.

**27.** Use for producing a coating with a composition based on isocyanate(s) according to one of claims 1 to 15.

**28.** Use according to claim 27, **characterized in that** the coating is a directly adhering coating.

**29.** Use according to claim 27 or 28, **characterized in that** the said emulsifying agent comprises a polyoxygenated chain, the number of carbon atoms of which is at least 4.

**30.** Use according to claim 27 to 29, **characterized in that** the said coating is a primer, base or top coating without there being a conversion layer.

**31.** Use according to claim 27 to 29, **characterized in that** the said coating is a so-called "top" coating without there

being a primer.

**32.** Use according to claim 27 to 29, **characterized in that** the said coating is a so-called base coating without there being a primer.

**33.** Use according to claim 27 to 29, **characterized in that** the said coating is a so-called base coating without there being a primer or a conversion layer.

**34.** Use according to claims 27, 28, 29, 30 or 33, **characterized in that** the said coating contains compounds which, when used by themselves, are known to ensure conversion (for example double chromate of zinc and potassium, lead chromate).

**35.** Use according to claims 27 to 34, **characterized in that** the said coating contains acicular and/or phyllitous compounds.

**36.** Use according to claims 27 to 35, **characterized in that** the said coating is produced on a substrate chosen from glasses and metals.

**37.** Use according to claims 27 to 36, **characterized in that** the said anionic functional grouping is advantageously chosen from oxygen-containing anionic functional groupings.

**38.** Use according to claims 27 to 37, **characterized in that** the number of carbon atoms of the polyoxygenated chain is such that it corresponds to the relationship:

$$nb_C \geq b(nb_O + nb_N) + 1$$

- where the factor "b" is at least equal to 1, advantageously to 1.5, preferably to 1.7.

**39.** Use according to claims 27 to 38, **characterized in that** the said polyoxygenated chain contains in total at least 3, preferably at least 4 alkenyloxy radicals (

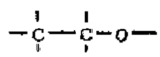

)

**40.** Use according to claims 27 to 39, **characterized in that** the alkene (oligo)oxide fragments of the said chain advantageously contain at most 7 alkenyloxy radicals (

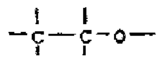

)

**41.** Use according to claims 27 to 40, **characterized in that** the said compound(s) has/have a double solubility: on the one hand in the aqueous phase and on the other hand in the isocyanate phase, the solubility in the organic phase and in the aqueous phase advantageously being at least equal to 5 % by weight.

**42.** Use according to claims 27 to 41, **characterized in that** in the formula (I) E is an atom of column VB.

**43.** Use according to claims 27 to 42, **characterized in that** in the polyoxygenated chain R10, advantageously in the said compound of the formula (II), the ratio between the number of ethylenoxy radicals and the number of alkenyloxy radicals is at least 2/3, advantageously 3/4, preferably 100 %.

**44.** Use according to claims 27 to 43, **characterized in that** the said compound(s) having an anionic functional grouping

contain(s) at least one double bond (carbon=carbon) activated:

- ■ either by a donor atom [nitrogen or oxygen, as in the case of N-vinyl or ethers or vinyl ester];
- ■ or by an electron-attracting group, in particular carbonyl, phosphonyl or nitrile group;
- ■ or by a double bond or an aryl.

**45.** Use according to claims 27 to 44, **characterized in that** the terminal group R1 is a hydrocarbon group containing at least one, advantageously two carbon atoms with the preferential condition that if the limit of the terminal group is an oxygen engaged in an ether function, the said terminal group contains at most eight carbon atoms, preferably at most six carbon atoms.

**46.** Use according to claims 27 to 45, **characterized in that** the said terminal group contains at most eight carbon atoms, preferably at most six carbon atoms.

**47.** Use according to claims 27 to 46, **characterized in that** the said divalent carbon-containing groups carry a double bond advantageously conjugated with at least one of the functions forming the extremity of the said group.

**48.** Use according to claims 27 to 47, **characterized in that** the said emulsifying agent comprises two or more compounds of the formula (II) in which E has the same value and in which formula (II) the values m, n, p and/or q are statistical values and can be fractions.

**Patentansprüche**

**1.** Zusammensetzung auf Basis von einem oder mehreren Isocyanaten, die vorteilhafterweise nicht vollständig maskiert sind, **dadurch gekennzeichnet, dass** sie mindestens eine Emulgatorverbindung mit einer anionischen funktionellen Gruppe und einer polyoxygenierten Kette mit höchstens 25 Kohlenstoffatomen, bevorzugt höchstens 20 Kohlenstoffatomen, mit der nachstehenden Formel (II) umfasst:

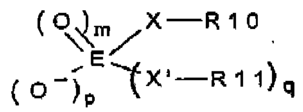

Formel II

- wobei R für eines der Atome der Gruppe VB (Phosphorgruppe) und VIB (Schwefelgruppe) aus einer Periode, die mindestens gleich der dritten und höchstens gleich der fünften Periode ist, oder ein Kohlenstoffatom steht;
- wobei X für eine Einfachbindung, Sauerstoff oder vorteilhafterweise substituierten Stickstoff steht; wobei der Substituent vorteilhafterweise ein auf Kohlenwasserstoff basierender Rest, vorzugsweise ein Aryl- oder Alkylrest oder auch ein Acylrest, ist; und die offene Bindung zur Anbindung der anionischen Gruppe an den Rest des Moleküls trägt;
- wobei X' unter einer Einfachbindung und einem Metalloid ausgewählt ist und insbesondere und vorteilhafterweise für ein Chalkogen (vorteilhafterweise Sauerstoff) oder Stickstoff, der vorteilhafterweise substituiert ist, steht; wobei der Substituent vorteilhafterweise ein auf Kohlenwasserstoff basierender Rest, vorzugsweise ein Aryl- oder Alkylrest oder auch ein Acylrest, ist;
- wobei R10 für eine polyoxygenierte Kette mit mindestens zwei Alkenyloxyeinheiten und höchstens acht Alkylenoxyeinheiten steht, wobei die Alkenyloxyeinheiten unter Propylenoxyeinheiten [$-CH_2-CH(CH_3)-O-$] und Ethylenoxyeinheiten [$-CH_2-CH_2-O-$] ausgewählt sind, wobei die Zahl dieser letzteren Einheiten vorteilhafterweise mindestens gleich der Zahl der Propylenoxyeinheiten ist;
- wobei R11 für Wasserstoff; eine weitere polyoxygenierte Kette, die mit R10 identisch oder davon verschieden ist; eine auf Kohlenwasserstoff basierende Gruppe (vorteilhafterweise mit höchstens 5 Kohlenstoffatomen und vorzugsweise höchstens 3 Kohlenstoffatomen) oder eine Einfachbindung steht, die eine Bindung mit einer weiteren, identischen oder verschiedenen anionischen funktionellen Gruppe gewährleistet;
- wobei q aus dem Bereich von null bis 1 ausgewählt ist;
- wobei p zwischen 1 und 2 (geschlossene Intervalle, d.h. einschließlich der Grenzen) ausgewählt ist;
- wobei m zwischen null und 2 (geschlossene Intervalle, d.h. einschließlich der Grenzen) ausgewählt ist;

und mit den Maßgabe, dass

- die Zahl der Kohlenstoffatome der Kette R10 mit der Zahl der Sauerstoffatome und gegebenenfalls der zahl der Stickstoffatome durch die folgende Relation verknüpft ist:

$$nb_C \leq a.(nb_O+nb_N)+4;$$

wobei $nb_c$ für die Zahl der Kohlenstoffatome der Kette steht;
wobei $nb_N$ für die Zahl der Stickstoffatome der Kette steht;
wobei $nb_o$ für die Zahl der Sauerstoffatome der Kette steht;
wobei der Faktor "a" kleiner 3, vorteilhafterweise höchstens gleich 2,5 und vorzugsweise höchstens gleich 2,3 ist; und die polyoxygenierte Kette bzw, die polyoxygenierten Ketten von R10 und gegebenenfalls R11 der folgenden Formel (III) entspricht bzw, entsprechen:

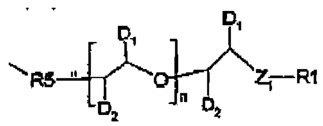

wobei der mehrwertige Rest R5 Teil der polyoxygenierten Kette ist und die Bindung zwischen der Kette und einer, zwei oder drei anionischen funktionellen Gruppen gewährleistet;
wobei n für eine ganze Zahl zwischen 0 und 7, vorteilhafterweise zwischen 2 und 6, vorzugsweise zwischen 3 und 5, steht (geschlossene Intervalle, d.h, einschließlich der Grenzen);
wobei die Werte von $D_1$ und $D_2$ je nach den Kettengliedern verschieden sein können und unter Methylgruppen und Wasserstoffatomen ausgewählt sind und nicht gleichzeitig für Methyl stehen können; wobei die Summe der Kohlenstoffatome der verschiedenen Gruppen
$D_1$ und $D_2$ höchstens gleich n/2, vorteil- hafterweise höchstens gleich n/4, ist, wobei alle Gruppen $D_1$ und D1 vorteilhafterweise für Wasserstoff stehen;
wobei $Z_1$ für eine zweiwertige Gruppe steht, die unter Sauerstoffatomen (unter Bildung einer Etherfunktion) oder Stickstoffatomen (wobei der Stickstoff vorzugsweise keinen Wasserstoff trägt), zweiwertigen Carbonyloxyfunktionen [-O-CO- oder -CO-O- wie in Estern] und Amidfunktionen [-N-CO- oder -CO-N-] einschließlich Urethan- oder Harnstofffunktionen und zweiwertigen auf Kohlenstoff basierenden Gruppen mit höchstens 6 Kohlenstoffatomen ausgewählt ist, die an jedem Ende unter Etherfunktionen, Aminfunktionen, die vorteilhafterweise keinen Wasserstoff tragen, Carbonyloxyfunktionen (O-CO-), Oxycarbonylfunktionen (-CO-O-) (wie Ester), Amidfunktionen, die vorteilhafterweise keinen Wasserstoff tragen, oder Keton- oder Aldehydfunktionen ausgewählte Funktionen tragen;
wobei $R_1$ für die vorteilhafterweise lipophile Endgruppe steht und unter Wasserstoff und auf Kohlenwasserstoff basierenden Resten und vorteilhafterweise unter gegebenenfalls substituierten Alkylresten oder Arylresten ausgewählt ist;

wobei der Teil Z1-R1 eine Doppelbindung umfasst.

2. Zusammensetzung nach Anspruch 1, **dadurch gekennzeichnet, dass** die Verbindung höchstens drei anionische funktionelle Gruppen, vorteilhafterweise höchstens zwei anionische funktionelle Gruppen und vorzugsweise eine anionische funktionelle Gruppe umfasst.

3. Zusammensetzung nach Anspruch 1 oder 2, **dadurch gekennzeichnet, dass** die Verbindung mit einer anionischen funktionellen Gruppe der obigen Formel (II) entspricht, worin $Z_1$ unter

- Oxycarbonyl
- Amid
- O-CO-CH=CH-CO-O
- O-CO-C $(CH_3)$ =CH-CO-O
- O-CO-C(=$CH_2$)-$CH_2$-CO-O
- -O-
- Oxycarbonyloxy
- -O-$CH_2$-CH(OCO-CH=$CH_2$)-$CH_2$-O-CO- ausgewählt ist und R1, das vorzugsweise höchstens 8 Kohlenstoffatome aufweist, unter:

- gegebenenfalls substituierten Vinylgruppen, insbesondere Methylvinyl und Phenylvinyl;
- leichten Alkylgruppen mit höchstens 8 Kohlenstoffatomen, insbesondere Methyl, Ethyl, Propylgruppen oder Butylgruppen;
- Vinylphenyl ($-\Phi-CH=CH_2$);
- Wasserstoff

ausgewählt ist.

4. Zusammensetzung nach einem der Ansprüche 1 bis 3, **dadurch gekennzeichnet, dass** die mit der anionischen funktionellen Gruppe assoziierte Säure vorteilhafterweise eine Acidität mit einem pKa-Wert von höchstens 5, vorzugsweise höchstens 3, aufweist.

5. Zusammensetzung nach einem der Ansprüche 1 bis 4, **dadurch gekennzeichnet, dass** die Verbindung mit einer anionischen funktionellen Gruppe der obigen Formel (II) entspricht, worin E für Phosphor steht.

6. Zusammensetzung nach den Ansprüchen 1 bis 5, **dadurch gekennzeichnet, dass** das Gegenion der anionischen funktionellen Gruppe bzw. der anionischen funktionellen Gruppen unter Aminen, vorteilhafterweise tertiären Aminen, ausgewählt ist.

7. Zusammensetzung nach den Ansprüchen 1 bis 6, **dadurch gekennzeichnet, dass** sie außerdem einen Katalysator, vorteilhafterweise einen latenten Katalysator, umfasst.

8. Zusammensetzung nach den Ansprüchen 1 bis 7, **dadurch gekennzeichnet, dass** das Massenverhältnis zwischen dem Emulgator und den Isocyanaten mindestens gleich 2% und höchstens gleich 20% ist und vorteilhafterweise zwischen 4 und 10% liegt.

9. Zusammensetzung nach den Ansprüchen 1 bis 8, **dadurch gekennzeichnet, dass** sie außerdem ein Polyol umfasst.

10. Zusammensetzung nach den Ansprüchen 1 bis 9, **dadurch gekennzeichnet, dass** sie außerdem ein Polyol, das in der wässrigen Phase c) dispergiert oder gelöst ist, umfasst.

11. Zusammensetzung nach Anspruch 10, **dadurch gekennzeichnet, dass** es sich bei dem Polyol um einen Nanolatex handelt.

12. Zusammensetzung nach Anspruch 11, **dadurch gekennzeichnet, dass** es sich bei dem Polyol um einen Nanolatex handelt, der die folgenden Eigenschaften aufweist:

- $d_{50}$-Wert zwischen 15 und 60 nm;
- Carboxylatfunktion von 0,5 bis 5 Masse-%,
- Olfunktion: zwischen 1 und 3%;
- Feststoffgehalt: zwischen 25 und 40%;
- $d_{80}$-Wert von weniger als 1 Mikrometer.

13. Zusammensetzung nach den Ansprüchen 1 bis 12, **dadurch gekennzeichnet, dass** es sich bei der Zusammensetzung um eine Emulsion von Isocyanat in Wasser mit einem $d_{50}$-Wert, vorzugsweise einem $d_{90}$-Wert, kleiner gleich (höchstens gleich) 3 $\mu$m, vorzugsweise 1 $\mu$m, handelt.

14. Zusammensetzung nach den Ansprüchen 1 bis 13, **dadurch gekennzeichnet, dass** sie eine Emulsion vom Öl-in-Wasser-Typ mit einem Wassergehalt von 10 bis 70% darstellt.

15. Zusammensetzung nach den Ansprüchen 1 bis 14, **dadurch gekennzeichnet, dass** der Gehalt an Isocyanat + Emulgator + Alkohol im geschlossenen Intervall von 30 bis 70% liegt.

16. Verfahren zur Herstellung einer Beschichtung, **dadurch gekennzeichnet, dass** es den folgenden Schritt umfasst:

$\alpha$) Emulgieren einer Zusammensetzung nach den Ansprüchen 1 bis 8 durch Zugabe der Isocyanatzusammensetzung a) und der Emulgatorverbindung b) zu der wässrigen Phase c).

**17.** Verfahren nach Anspruch 16, **dadurch gekennzeichnet, dass** die Zugabe unter manuellem oder mechanischem Rühren erfolgt.

**18.** Verfahren nach Anspruch 16 oder 17, **dadurch gekennzeichnet, dass** es bei einer Temperatur von höchstens 50°C, vorteilhafterweise bei Umgebungstemperatur, durchgeführt wird.

**19.** Verfahren nach den Ansprüchen 16 bis 18, **dadurch gekennzeichnet, dass** man den pH-Wert der wässrigen Phase auf einen Wert von mindestens 3, vorteilhafterweise mindestens 4, einstellt.

**20.** Verfahren nach den Ansprüchen 16 bis 19, **dadurch gekennzeichnet, dass** die wässrige Phase einen oder mehrere Alkohole, insbesondere mindestens ein polyol, umfasst.

**21.** Verfahren nach den Ansprüchen 16 bis 20, **dadurch gekennzeichnet, dass** die Pigmente vor der Zugabe des Isocyanats in dem Polyol bzw. den Polyolen dispergiert werden.

**22.** Verfahren nach den Ansprüchen 16 bis 21, **dadurch gekennzeichnet, dass** die wässrige Phase ein oder mehrere Maskierungsmittel enthält.

**23.** Verfahren nach den Ansprüchen 16 bis 22, **dadurch gekennzeichnet, dass** es außerdem den folgenden Schritt umfasst:

> β) Aufbringen der Zusammensetzung aus α) in Form einer Schicht mit einer Dicke im geschlossenen Intervall (d.h. einschließlich der Grenzen) von 10 bis 400 Mikrometer, vorteilhafterweise zwischen 50 und 200 Mikrometer, vor dem Trocknen, was nach dem Trocknen einer Dicke zwischen 5 und 150 Mikrometer, vorteilhafterweise zwischen 20 und 80 Mikrometer, entspricht.

**24.** Verfahren nach den Ansprüchen 16 bis 23, **dadurch gekennzeichnet, dass** die Schicht durch Spritzen oder mit einem Spiralrakel-Auftragsgerät aufgebracht wird.

**25.** Verfahren nach den Ansprüchen 16 bis 24, **dadurch gekennzeichnet, dass** es den folgenden Schritt umfasst:

> γ) Trocknen bei 20°C bis 50°C über einen Zeitraum von 1/4 bis 3 Stunden.

**26.** Verfahren nach den Ansprüchen 16 bis 25, **dadurch gekennzeichnet, dass** es den folgenden Schritt umfasst:

> δ) Brennen bei einer Temperatur von 80°C bis 200°C über einen Zeitraum von höchstens 3 Stunden, vorteilhafterweise 1 Minute bis 1 Stunde.

**27.** Verwendung einer Zusammensetzung auf Basis von einem oder mehreren Isocyanaten nach einem der Ansprüche 1 bis 15 zur Herstellung einer Beschichtung.

**28.** Verwendung nach Anspruch 27, **dadurch gekennzeichnet, dass** es sich bei der Beschichtung um eine direkthaftende Beschichtung handelt.

**29.** Verwendung nach Anspruch 27 oder 28, **dadurch gekennzeichnet, dass** der Emulgator eine polyoxygenierte Kette mit mindestens 4 Kohlenstoffatomen umfasst.

**30.** Verwendung nach Anspruch 27 bis 29, **dadurch gekennzeichnet, dass** es sich bei der Beschichtung um eine Grundier-, Basis- oder Deckbeschichtung ohne Konversionsschicht handelt.

**31.** Verwendung nach Anspruch 27 bis 29, **dadurch gekennzeichnet, dass** es sich bei der Beschichtung um eine Deckbeschichtung ohne Primer handelt.

**32.** Verwendung nach Anspruch 27 bis 29, **dadurch gekennzeichnet, dass** es sich bei der Beschichtung um eine Basisbeschichtung ohne Primer handelt.

**33.** Verwendung nach Anspruch 27 bis 29, **dadurch gekennzeichnet, dass** es sich bei der Beschichtung um eine Basisbeschichtung ohne Primer und ohne Konversionsschicht handelt.

**34.** Verwendung nach den Ansprüchen 27, 28, 29, 30 oder 33, **dadurch gekennzeichnet, dass** die Beschichtung Verbindungen enthält, die bei alleiniger verwendung für die Gewährleistung von Konversion bekannt sind (beispielsweise Zinkkaliumchromat, Bleichromat).

**35.** Verwendung nach den Ansprüchen 27 bis 34, **dadurch gekennzeichnet, dass** die Beschichtung nadelförmige und/oder phyllitartige Verbindungen enthält.

**36.** Verwendung nach den Ansprüchen 27 bis 35, **dadurch gekennzeichnet, dass** die Beschichtung auf einem unter Gläsern und Metallen ausgewählten Substrat hergestellt wird.

**37.** Verwendung nach den Ansprüchen 27 bis 36, **dadurch gekennzeichnet, dass** die anionische funktionelle Gruppe vorteilhafterweise unter sauerstoffhaltigen anionischen funktionellen Gruppen ausgewählt ist.

**38.** Verwendung nach den Ansprüchen 27 bis 37, **dadurch gekennzeichnet, dass** die Zahl der Kohlenstoffatome der polyoxygenierten Kette so beschaffen ist, dass sie der Relation entspricht:

$$nb_C \geq b(nb_O+nb_N)+1$$

- wobei der Faktor b mindestens gleich 1, vorteilhafterweise mindestens gleich 1,5, vorzugsweise mindestens gleich 1,7, ist.

**39.** Verwendung nach den Ansprüchen 27 bis 38, **dadurch gekennzeichnet, dass** die polyoxygenierte Kette insgesamt mindestens 3 und vorzugsweise mindestens 4 Alkenyloxyeinheiten (

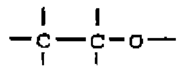

) umfasst.

**40.** Verwendung nach den Ansprüchen 27 bis 39, **dadurch gekennzeichnet, dass** die (Oligo-)Alkenoxideinheiten der Kette vorteilhafterweise höchstens 7 Alkenyloxyeinheiten (

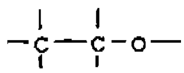

) umfassen.

**41.** Verwendung nach den Ansprüchen 27 bis 40, **dadurch gekennzeichnet, dass** die Verbindung bzw. Verbindungen Doppellöslichkeit aufweist bzw. aufweisen: einerseits in der wässrigen Phase und andererseits in der Isocyanatphase, wobei die Löslichkeit in der organischen Phase und der wässrigen Phase vorteilhafterweise mindestens gleich 5 Masse-% ist.

**42.** Verwendung nach den Ansprüchen 27 bis 41, **dadurch gekennzeichnet, dass** in der Formel (I) E für ein Atom der Gruppe VB steht.

**43.** Verwendung nach den Ansprüchen 27 bis 42, **dadurch gekennzeichnet, dass** in der polyoxygenierten Kette R10, vorteilhafterweise in der Verbindung der Formel (II), das Verhältnis zwischen der Zahl der Ethylenyloxyeinheiten und der Zahl der Alkenyloxyeinheiten mindestens 2/3, vorteilhafterweise mindestens 3/4, vorzugsweise 100%, beträgt.

**44.** Verwendung nach den Ansprüchen 27 bis 43, **dadurch gekennzeichnet, dass** die Verbindung bzw. Verbindungen mit einer anionischen funktionellen Gruppe mindestens eine Doppelbildung (Kohlenstoff=Kohlenstoff) umfasst bzw. umfassen, die aktiviert ist durch

■ ein Donoratom [Stickstoff oder Sauerstoff wie im Fall von N-Vinylverbindungen oder Vinylethern oder Vinylestern];
■ eine elektronenanziehende Gruppe, insbesondere eine Carbonyl-, Phosphon- oder Nitrilgruppe;
■ eine Doppelbindung oder eine Arylgruppe.

**45.** Verwendung nach den Ansprüchen 27 bis 44, **dadurch gekennzeichnet, dass** die Endgruppe R1 für eine auf Kohlenwasserstoff basierende Gruppe mit mindestens einem Kohlenstoffatom, vorteilhafterweise zwei Kohlenstoffatomen, steht, mit der bevorzugten Maßgabe, dass dann, wenn es sich bei der Begrenzung der Endgruppe um einen an einer Etherfunktion beteiligten Sauerstoff handelt, die Endgruppe höchstens acht Kohlenstoffatome, vorzugsweise höchstens sechs Kohlenstoffatome, umfasst.

**46.** Verwendung nach den Ansprüchen 27 bis 45, **dadurch gekennzeichnet, dass** die Endgruppe höchstens acht Kohlenstoffatome, vorzugsweise höchstens sechs Kohlenstoffatome, umfasst.

**47.** Verwendung nach den Ansprüchen 27 bis 46, **dadurch gekennzeichnet, dass** die zweiwertigen, auf Kohlenstoff basierenden Gruppen eine Doppelbindung tragen, die vorteilhafterweise mit mindestens einer der das Ende der Gruppe bildenden Funktionen konjugiert ist.

**48.** Verwendung nach den Ansprüchen 27 bis 47, dadurch gekenntzeichnet, dass der Emulgator zwei oder mehr Verbindungen der Formel (II) umfasst, worin E den gleichen Wert hat und die Werte m, n, p und/oder q statistische Werrte sind und gebrochen sein können,

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE OS3108537
- US 6528610 B
- FR 2745577
- WO 9731960 A
- WO 0174909 A
- WO 0027890 A
- EP 104974 A
- EP 38764 A
- FR 9505123
- EP 0739961 A
- WO 9907765 A
- WO 9955756 A


### Littérature non-brevet citée dans la description


- **Minou Nabavi et al.** Dynamics of spontaneous emulsification for fabrication of oil in water emulsions. *Langmuir,* 2000, vol. 16, 9703-9708
- **P. Grandou ; P. Pastour.** techniques et industries pour le fer. *PEINTURES ET VERNIS II,* 46
- **P. Pastour.** *techniques et industries,* 67-69
- **J. O. Stoffer et al.** *International Waterbome, High-Solids, and Powder Coatings Symposium,* 12 Février 1999
- **Horst Gehmecker.** Automotive Corrosion Protection Practices in Europ. Society of Automotive Engineers, Inc, 1997, 1241-1248
- **Terrie Child ; Chris Miller.** Pretractamamiento Basado en Silanos. *Pinturas y Acabados,* 18-20
- **Yu. I.** Kuznetsof. *Protection of Metals,* 2001, vol. 37 (2), 101-107
- *Bulletin de la Société Chimique de France,* Janvier 1966
- Bulletin de la Société Chimique de France. 1966